# EUROPÄISCHE PATENTSCHRIFT

(11) **EP 1 273 006 B1**
(45) Veröffentlichungstag und Bekanntmachung des Hinweises auf die Patenterteilung: **30.08.2006**
(21) Anmeldenummer: 01936132.8
(22) Anmeldetag: 23.03.2001
(51) Int. Cl.: G11B 7/24

(54) **VERWENDUNG VON LICHTABSORBIERENDEN VERBINDUNGEN IN DER INFORMATIONSSCHICHT VON OPTISCHEN DATENTRÄGERN SOWIE OPTISCHE DATENTRÄGER**
USE OF LIGHT-ABSORBING COMPOUNDS IN THE INFORMATION LAYER OF OPTICAL DATA CARRIERS, AND OPTICAL DATA CARRIERS
UTILISATION DE COMPOSES ABSORBEURS DE LUMIERE DANS LA COUCHE INFORMATIONS DE SUPPORTS DE DONNEES OPTIQUES ET SUPPORTS DE DONNEES OPTIQUES EN QUESTION

(30) Priorität: 04.04.2000 DE 10016669
(43) Veröffentlichungstag der Anmeldung: 08.01.2003
(73) Patentinhaber: Bayer Chemicals AG, 51368 Leverkusen (DE)
(72) Erfinder: BERNETH, Horst, 51373 Leverkusen (DE); BRUDER, Friedrich-Karl, 47802 Krefeld (DE); HASSENRÜCK, Karin, 40468 Düsseldorf (DE)
(86) Internationale Anmeldenummer: PCT/EP2001/003334
(87) Internationale Veröffentlichungsnummer: WO 2001/075873

(56) Entgegenhaltungen:
- US-A- 5 316 899
- PATENT ABSTRACTS OF JAPAN vol. 2000, no. 03, 30. März 2000 (2000-03-30) & JP 11 334205 A (MITSUBISHI CHEMICAL CORP), 7. Dezember 1999 (1999-12-07) & JP 11 334205 A (MITSUBISHI CHEMICAL CORP) 7. Dezember 1999 (1999-12-07)
- PATENT ABSTRACTS OF JAPAN vol. 1999, no. 13, 30. November 1999 (1999-11-30) & JP 11 221964 A (MITSUBISHI CHEMICAL CORP), 17. August 1999 (1999-08-17)

## Beschreibung

Die Erfindung betrifft die Verwendung von lichtabsorbierenden Verbindungen in der Informationsschicht von einmal beschreibbaren optischen Datenträgern, optische Datenträger sowie ein Verfahren zu ihrer Herstellung.

Die einmal beschreibbaren optischen Datenträger unter Verwendung von organischen und/oder anorganischen lichtabsorbierenden Verbindungen bzw. deren Mixhungen, eignen sich insbesondere für den Einsatz in hochdichten beschreibbaren- optischen Datenspeichern, beispielsweise mit blauen Laserdioden insbesondere GaN oder SHG Laserdioden (360 - 460 nm) sowie für den Einsatz bei DVD-R bzw. CD-R Disks, die mit roten (635 - 660 nm) bzw. infraroten (780 - 830 nm) Laserdioden arbeiten.

Die einmal beschreibbare Compact Disk (CD-R, 780 nm) erlebt in letzter Zeit ein enormes Mengenwachstum und stellt das technisch etablierte System dar.

Aktuell wird die nächste Generation optischer Datenspeicher - die DVD - in den Markt eingeführt. Durch die Verwendung kürzerwelliger Laserstrahlung (635 - 660 nm) und höherer numerischer Apertur NA kann die Speicherdichte erhöht werden. Das beschreibbare Format ist in diesem Falle die DVD-R.

Heute werden optische Datenspeicherformate, die blaue Laserdioden (Basis GaN, JP 08191171 oder Second Harmonic Generation SHG JP 09050629) (360 nm - 460 nm) mit hoher Laserleistung benutzen, entwickelt. Beschreibbare optische Datenspeicher werden daher auch in dieser Generation Verwendung finden. Die erreichbare Speicherdichte hängt von der Fokusierung des Laserspots in der Informationsebene ab. Die Spotgröße skaliert dabei mit der Laserwellenlänge λ / NA. NA ist die numerische Apertur der verwendeten Objektivlinse. Zum Erhalt einer möglichst hohen Speicherdichte ist die Verwendung einer möglichst kleinen Wellenlänge λ anzustreben. Möglich sind auf Basis von Halbleiterlaserdioden derzeit 390 nm.

In der Patentliteratur werden auf Farbstoffe basierende beschreibbare optische Datenspeicher beschrieben, die gleichermaßen für CD-R und DVD-R Systeme geeignet sind (JP-A 11 043 481 und JP-A 10 181 206). In JP-A 02 557 335, JP-A 10058 828, JP-A 06 336 086, JP-A 02 865 955, WO-A 09 917 284 und US-A 5 266 699 wird bei einer Arbeitswellenlänge von 450 nm gearbeitet.

Andere Konzepte befassen sich mit dem Einschreiben der Information mit einem kurzwelligen Laser, wobei das Auslesen der Information mit einem langwelligen Laser (JP-A 06 295 469) erfolgt. Die Korrektur der Optik auf zwei Laserwellenlängen gleichzeitig ist aber schwierig. Daher wird die Verwendung nur eines Lasers sowohl zum Einschreiben als auch zum Auslesen der Information angestrebt.

JP-A 11 110 815 beschreibt eine beschreibbare optische Disk, die mit einer Wellenlänge von 630 bis 685 nm beschrieben und mit Wellenlängen im Bereich von 630 bis 685 oder 400 bis 550 nm ausgelesen werden kann. Nachteil des Systems ist, dass das Einschreiben hochdichter Information im Bereich 400 bis 500 nm nicht möglich ist. US-A 5 871 882 beschreibt dasselbe Prinzip für die Wellenlängenbereiche 600 bis 700 nm zum Schreiben und Lesen und 400 bis 500 nm nur zum Lesen.

JP-A 07 304 257 und JP-A 11 334 207 beschreiben als Farbstoffe Porphyrin-Derivate, JP-A 11 334 206 beschreibt als Farbstoffe Di-cyano-vinyl-phenyl-Verbindungen, JP-A 11 334 205 beschreibt als Farbstoffe Pyrazol-Azo-Verbindungen, JP-A 11 334204 beschreibt als Fabrstoffe Pyridon-Azo-Verbindungen, die geeignet sind mit blauen Lasern beschreibbare optische Datenspeicher zu generieren.

Aufgabe der Erfindung ist demnach die Bereitstellung geeigneter Verbindungen, die die hohen Anforderungen (wie Lichtstabilität, günstiges Signal-Rausch-Verhältnis, schädigungsfreies Aufbringen auf das Substratmaterial, u.ä.) für die Verwendung in der Informationsschicht in einem einmal beschreibbaren optischen Datenträger insbesondere für hochdichte beschreibbare optische Datenspeicher-Formate in einem Laserwellenlängenberich von 360 bis 460 nm erfüllen.

Überraschender Weise wurde gefunden, dass spezielle lichtabsorbierende Verbindungen für den genannten Zweck gut geeignet sind.

Die Erfindung betrifft daher die Verwendung von lichtabsorbierenden Verbindungen in der Informationsschicht von einmal beschreibbaren optischen Datenträgern, wobei der UV-Absorber ein Absorptionsmaximum λₘₐₓ₁ von 345 bis 400 nm besitzt und die Wellenlänge λ_{½}, bei der die Extinktion in der langwelligen Flanke des Absorptionsmaximums der Wellenlänge λₘₐₓ₁ die Hälfte des Extinktionswertes bei λₘₐₓ₁ beträgt und die Wellenlänge λ_{1/10}, bei der die Extinktion in der langwelligen Flanke des Absorptionsmaximums der Wellenlänge λₘₐₓ₁ ein Zehntel des Extinktionswertes bei λₘₐₓ₁ beträgt, d.h. λ_{1/2} und λ_{1/10} beide gemeinsam im Wellenlängen-Bereich von 380 bis 430 nm liegen und wobei durch Spin Coating die lichtabsorbierende Verbindung selbst oder in Kombination mit anderen lichtabsorbierenden Verbindungen oder mit geeigneten Lösungsmitteln auf ein transparentes Substrat aufgebracht wird.
Die bevorzugten Wellenlängen-Bereiche und die lichtabsorbierenden Verbindungen sind dabei unter den ebenfalls erfindungsgemäßen optischen Datenträgern nachstehend genannt und gelten ebenso für die erfindungsgemäße Verwendung.

Die Absorptionsspektren werden beispielsweise in Lösung gemessen.
Die oben beschriebenen lichtabsorbierenden Verbindungen garantieren eine genügend hohe Reflektivität (> 10%) des optischen Datenträgers im unbeschriebenen Zustand sowie eine genügend hohe Absorption zur thermischen Degradation der Informationsschicht bei punktueller Beleuchtung mit fokussiertem Licht, wenn die Lichtwellenlänge im Bereich von 360 bis 460 nm liegt. Der Kontrast zwischen beschriebenen und unbeschriebenen Stellen auf dem Datenträger wird durch die Reflektivitätsänderung der Amplitude als auch der Phase des einfallenden Lichts durch die nach der thermischen Degradation veränderten optischen Eigenschaften der Informationsschicht realisiert.

Die Erfindung betrifft weiterhin einen einmal beschreibbaren optischen Datenträger, enthaltend ein transparentes Substrat, auf dessen Oberfläche mindestens eine mit Licht beschreibbare Informationsschicht, gegebenenfalls eine Reflexionsschicht und/oder gegebenenfalls eine Schutzschicht aufgebracht sind, der mit blauem Licht, vorzugsweise Laserlicht, beschrieben und gelesen werden kann, wobei die Informationsschicht eine lichtabsorbierende Verbindung und gegebenenfalls ein Bindemittel Netzmittel, Stabilisatoren, Verdünner und Sensibilatoren sowie weitere Bestandteile enthält, dadurch gekennzeichnet, dass die lichtabsorbierende Verbindung ein Absorptionsmaximum λₘₐₓ₁ von 345 bis 400 nm besitzt und die Wellenlänge λ_{1/2}, bei der die Extinktion in der langwelligen Flanke des Absorptionsmaximums der Wellenlänge λₘₐₓ₁ die Hälfte des Extinktionswerts bei λₘₐₓ₁ beträgt, und die Wellenlänge λ_{1/10}, bei der die Extinktion in der langwelligen Flanke des Absorptionsmaximums der Wellenlänge λₘₐₓ₁ ein Zehntel des Extinktionswerts bei λₘₐₓ₁ beträgt, beide gemeinsam im Bereich von 380 bis 430 nm liegen und wobei durch Spin Coating die lichtabsorbierende Verbindung selbst oder in Kombination mit anderen lichtabsorbierenden Verbindungen oder mit geeigneten Lösungsmitteln auf ein transparentes Substrat aufgebracht wird.

Alternativ kann der Aufbau des optischen Datenträgers:
- ein transparentes Substrat enthalten, auf dessen Oberfläche mindestens eine mit Licht beschreibbare Informationsschicht, gegebenenfalls eine Reflexionsschicht und gegebenenfalls eine Kleberschicht und ein weiteres vorzugsweises transparentes Substrat aufgebracht sind.
- ein transparentes Substrat enthalten, auf dessen Oberfläche gegebenfalls eine Reflexionsschicht mindestens eine mit Licht beschreibbare Informationsschicht, gegebenenfalls eine Kleberschicht und eine transparente Abdeckschicht aufgebracht sind.

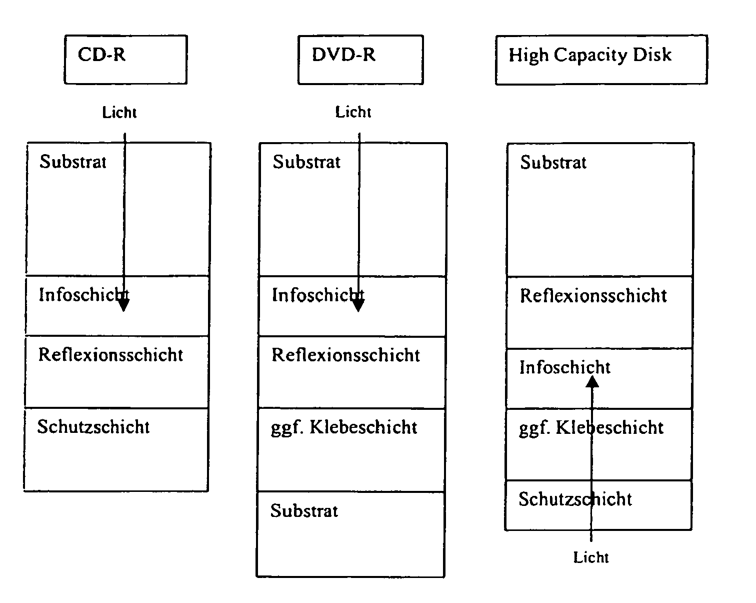

Besonders bevorzugt sind lichtabsorbierende Verbindungen mit einem Absorptionsmaximum λₘₐₓ₁ von 350 bis 380 nm und einem Bereich, in dem λ_{1/2} und λ_{1/10} liegen, von 390 bis 420 nm.

Ganz besonders bevorzugt sind Verbindungen mit einem Absorptionsmaximum λₘₐₓ₁ von 360 bis 370 nm und einem Bereich, in dem λ_{1/2} und λ_{1/10} liegen, von 400 bis 410 nm.

Gegenstand der Erfindung ist ein einmal beschreibbarer optischer Datenträger dadurch gekennzeichnet, dass die lichtabsorbierende Verbindung im Bereich größerer Wellenlängen als λₘₐₓ₁ bis zu einer Wellenlänge von 500 nm kein weiteres Absorptionsmaximum λₘₐₓ₂ aufweist.

Bevorzugt sind lichtabsorbierende Verbindungen, die im Bereich größerer Wellenlängen als λₘₐₓ₁ bis zu einer Wellenlänge von 550 nm kein weiteres Absorptionsmaximum λₘₐₓ₂ aufweisen.

Besonders bevorzugt sind lichtabsorbierende Verbindungen, die im Bereich größerer Wellenlängen als λₘₐₓ₁ bis zu einer Wellenlänge von 600 nm kein weiteres Absorptionsmaximum λₘₐₓ₂ aufweisen.

Gegenstand der Erfindung ist ein einmal beschreibbarer optischer Datenträger dadurch gekennzeichnet, dass die lichtabsorbierende Verbindung im Bereich kürzerer Wellenlängen als λₘₐₓ₁ weitere, bevorzugt starke Absorptionen und Absorptionsmaxima aufweist.

Gegenstand der Erfindung ist ein einmal beschreibbarer optischer Datenträger dadurch gekennzeichnet, dass beim Absorptionsmaximum λₘₐₓ₁ der molare Extinktionskoeffizient ε der lichtabsorbierenden Verbindung > 100001/mol cm ist.

Bevorzugt sind einmal beschreibbare optische Datenträger dadurch gekennzeichnet, dass beim Absorptionsmaximum λₘₐₓ₁ der molare Extinktionskoeffizient ε der lichtabsorbierenden Verbindung > 15000 1/mol cm ist.

Besonders bevorzugt sind einmal beschreibbare optische Datenträger dadurch gekennzeichnet, dass beim Absorptionsmaximum λₘₐₓ₁ der molare Extinktionskoeffizient ε der lichtabsorbierenden Verbindung > 20000 l/mol cm ist.

Ganz besonders bevorzugt sind einmal beschreibbare optische Datenträger dadurch gekennzeichnet, dass beim Absorptionsmaximum λₘₐₓ₁ der molare Extinktionskoeffizient ε der lichtabsorbierenden Verbindung > 25000 l/mol cm ist.

Gegenstand der Erfindung ist die Verwendung der nachfolgend aufgeführten lichtabsorbierenden Verbindungen in optischen Datenträgern.

Beispielsweise ist der erfindungsgemäße einmal beschreibbarer optischer Datenträger dadurch gekennzeichnet, dass es sich bei der lichtabsorbierenden Verbindung um eine der folgenden Verbindungen handelt: 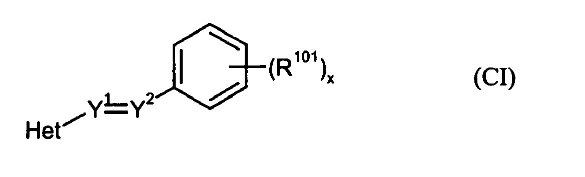 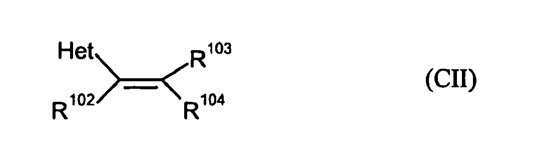 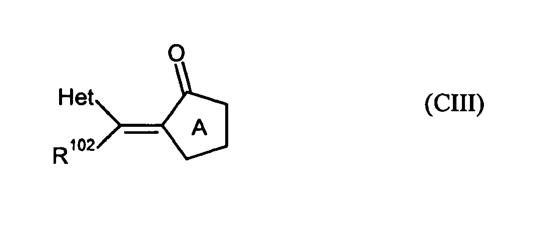 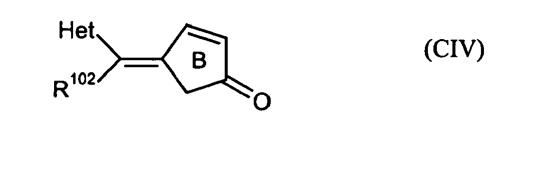 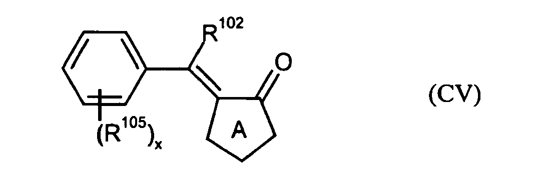 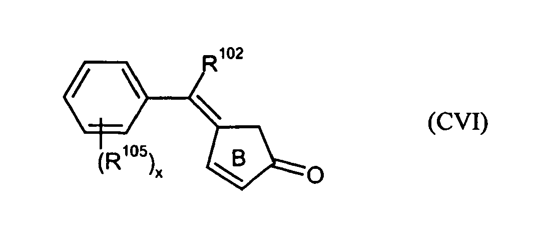 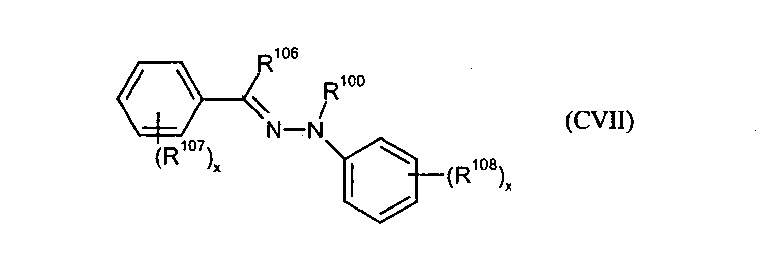 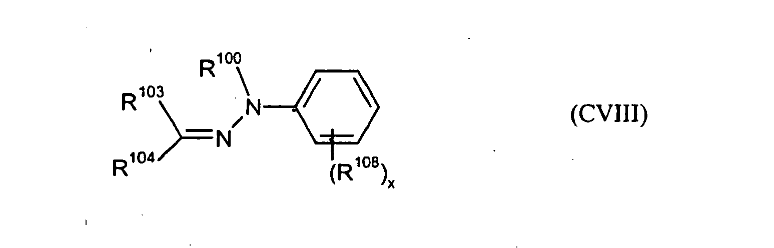 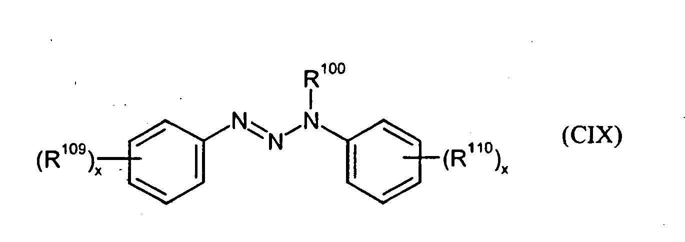 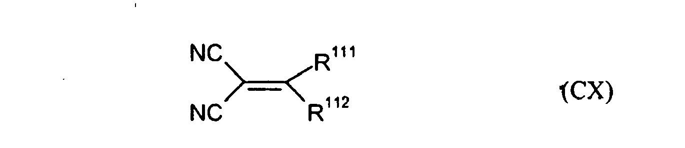 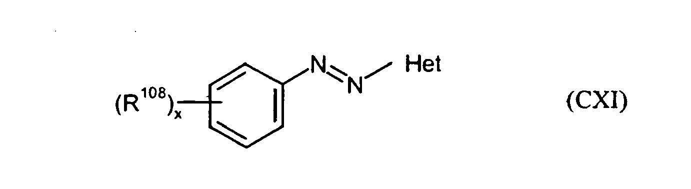 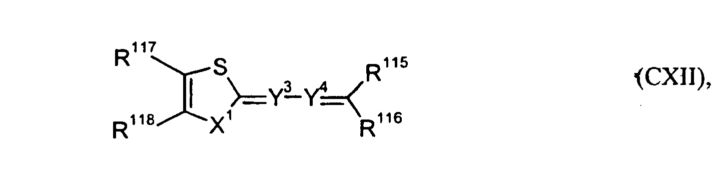 wie 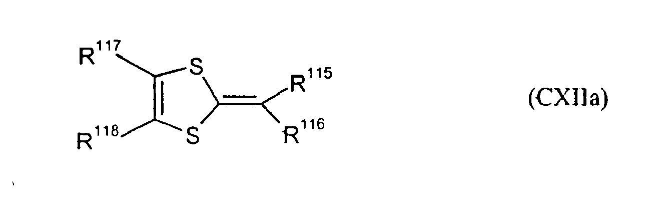 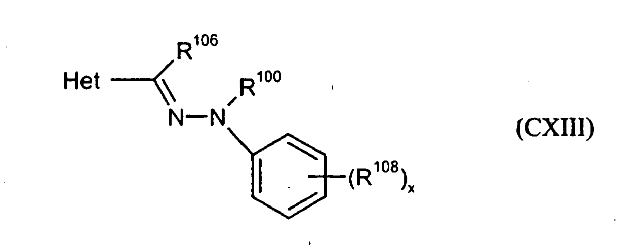 worin
- R¹⁰⁰: für Wasserstoff oder C₁- bis C₄-Alkyl steht
- x: für eine ganze Zahl von 1 bis 3 steht und wobei für x > 1 die Reste unterschiedlich sein dürfen,
- - R¹⁰¹: für Wasserstoff, Halogen, Nitro, C₁- bis C₁₆-Alkyl, C₁- bis C₁₆-Alkoxy, Cyano, Carbonsäure oder C₁- bis C₁₆-Alkoxycarbonyl steht,
- Y¹ und Y²: unabhängig voneinander für C-R¹⁰² stehen und Y¹ oder Y² zusätzlich für N stehen kann,
- R¹⁰²: für Wasserstoff, C₆- bis C₁₀-Aryl, C₁- bis C₁₆-Alkyl, Cyano, Carbonsäure, C₁- bis C₁₆-Alkoxycarbonyl , C₁- bis C₁₆-Alkanoyl steht,
- Het: für Benzthiazol-2-yl, Benzoxazol-2-yl, Benzimidazol-2-yl, Thiazol-2-yl, 1,3,4-Thiadiazol-2-yl, 2- oder 4-Pyridyl, 2- oder 4-Chinolyl oder 3,3-Dimethylindolen-2-yl, die durch Methyl, Ethyl, Methoxy, Ethoxy, Chlor, Brom, Iod, Cyano, Nitro, Methoxycarbonyl, Methylthio, Dimethylamino, Diethylamino oder Dipropylamino substituiert sein können, und die gegebenenfalls durch Alkyl oder (C₂H₄O)ₙH mit n=1-16 am Stickstoff quarterniert sein können und AlkylSO₃⁻, AlkoxySO₃⁻ oder Halogen als Gegenion besitzen oder für Furan-2- oder -3-yl, Thiophen-2- oder -3-yl, Pyrrol-2- oder -3-yl, N-Alkyl-Pyrrol-2- oder -3-yl steht, die durch Methyl, Ethyl, Methoxy, Ethoxy, Chlor, Cyano, Nitro, Methoxycarbonyl, Methylthio, Dimethylamino, Diethylamino oder Dipropylamino substituiert und/oder benzanneliert sein können,
- R¹⁰³ und R¹⁰⁴: unabhängig voneinander für Cyano, Carbonsäure, C₁- bis C₁₆-Alkoxycarbonyl, Aminocarbonyl oder C₁- bis C₁₆-Alkanoyl stehen oder R¹⁰⁴ für Wasserstoff, CH₂-COOAlkyl oder P(O)(O-C₁- bis C₁₂-Alkyl)₂ oder C₁- bis C₁₆-Alkyl steht
- A: für einen fünf- oder sechs-gliedrigen carbocyclischen oder heterocyclischen Ring steht, der benzanelliert sein kann,
- B: für einen fünf- oder sechs-gliedrigen carbocyclischen oder heterocyclischen Ring steht, der benzanelliert sein kann,
- R¹⁰⁵: für Wasserstoff, Halogen, C₁- bis C₁₆-Alkyl, C₁- bis C₁₆-Alkoxy, Cyano, Nitro, Carbonsäure oder C₁- bis C₁₆-Alkoxycarbonyl steht,
- R¹⁰⁶: für Wasserstoff, C₁- bis C₄-Alkyl, C₁- bis C₁₆-Alkoxycarbonyl oder Cyano steht,
- R¹⁰⁷: für Wasserstoff , Halogen, C₁- bis C₁₆-Alkyl, C₁- bis C₁₆-Alkoxy, Nitro, Cyano oder C₁- bis C₁₆-Alkoxycarbonyl steht,
- R¹⁰⁸: für Wasserstoff, Nitro, Cyano, Halogen, C₁- bis C₁₆-Alkyl, Carbonsäure, C₁₋bis C₁₆-Alkoxycarbonyl oder C₁- bis C₁₆-Alkoxy steht,
- R¹⁰⁹ und R¹¹⁰: unabhängig voneinander für Wasserstoff, Cyano, Nitro, Halogen, Carbonsäure, C₁- bis C₁₆-Alkoxycarbonyl oder C₁- bis C₁₆-Alkanoyl, C₁- bis C₁₆₋Alkyl oder C₁- bis C₁₆-Alkoxy stehen,
- R¹¹¹: für Cyano, CH=CH-N R¹¹³ R¹¹⁴ steht,
- X¹: für S oder N-R¹⁰⁰ steht,
- =Y³ -Y⁴=: für eine direkte Doppelbindung oder für =N-N= steht,
- R¹¹²: für Wasserstoff, Anilino, N- C₁- bis C₁₆-Alkyl-Anilino oder N=CH-N R¹¹³ R¹¹⁴ steht oder R¹¹¹ und R¹¹² für =C=C- N R¹¹³ R¹¹⁴ steht,
- R¹¹³ und R¹¹⁴: unabhängig voneinander für Wasserstoff, C₁- bis C₁₆-Alkyl steht,
- R¹¹⁵ und R¹¹⁶: unabhängig voneinander für Cyano, Carbonsäure, C₁- bis C₁₆-Alkoxycarbonyl, Aminocarbonyl, P(O)(O-C₁- bis C₁₂-Alkyl)₂ oder C₁- bis C₁₆₋Alkanoyl stehen oder R¹¹⁵ und R¹¹⁶ gemeinsam mit dem sie verbindenden C-Atom einen carbocyclischen oder heterocyclischen, gegebenenfalls benzanellierten Fünf- oder Sechsring bilden,
- R¹¹⁷ und R¹¹⁸: unabhängig voneinander für Wasserstoff, C₁- bis C₁₆-Alkyl, Cyano, SCOC₆- bis C₁₀-Aryl, Carbonsäure, C₁- bis C₁₆-Alkoxycarbonyl oder C₁- bis C₁₆-Alkanoyl oder gemeinsam für eine -CH=CH-CH=CH-Brücke stehen,
wobei die Alkyl-, Alkoxy-, Aryl- und heterocyclischen Reste gegebenenfalls weitere Reste wie Alkyl, Halogen, Nitro, Cyano, CO-NH₂, Alkoxy, Trialkylsilyl, Trialkylsiloxy oder Phenyl tragen können, die Alkyl- und Alkoxyreste geradkettig oder verzweigt sein können, die Alkylreste teil- oder perhalogeniert sein können, die Alkyl- und Alkoxyreste ethoxyliert oder propoxyliert oder silyliert sein können, benachbarte Alkyl und/oder Alkoxyreste an Aryl- oder heterocyclischen Resten gemeinsam eine drei- oder viergliedrige Brücke ausbilden können und die heterocyclischen Reste benzanneliert sein können.

Als lichtabsorbierende Verbindung kommen auch in Frage: 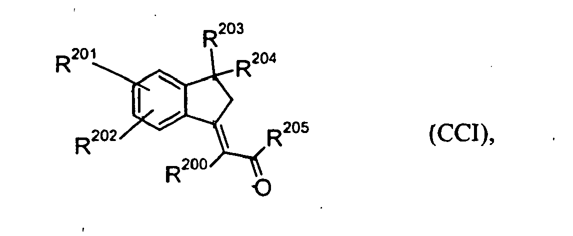 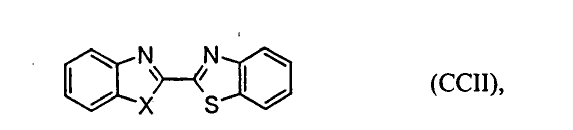 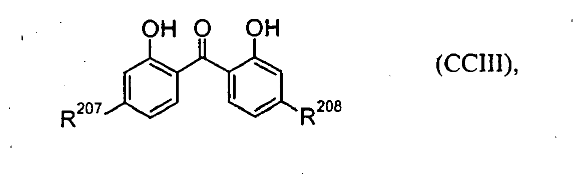 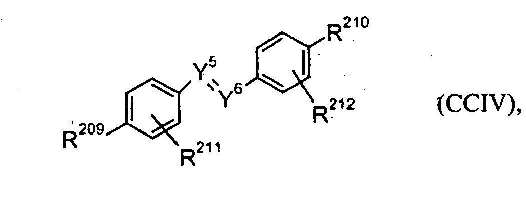 wie 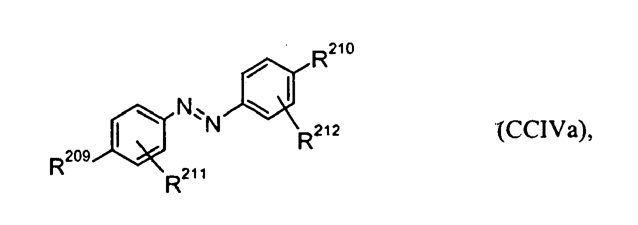 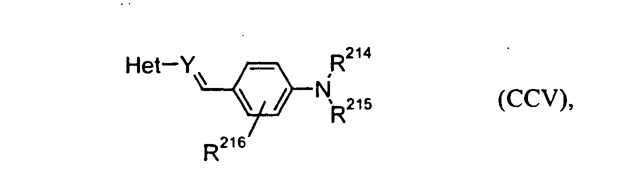 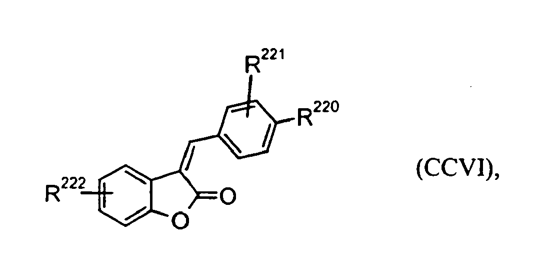 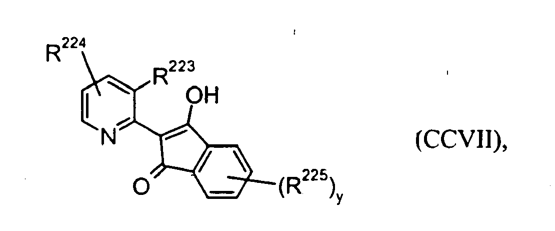 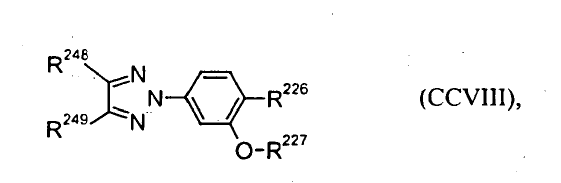 worin
- R²⁰⁰: für Cyano, C₆- bis C₁₀ Aryl oder C₁₋ bis C₁₆-Alkoxycarbonyl steht,
- R²⁰¹ und R²⁰²: unabhängig voneinander für Wasserstoff, Halogn, C₁- bis C_{16-Alkyl}, C₁- bis C₁₆-Alkoxy stehen oder
- R²⁰¹ und R²⁰²,: wenn sie in o-Stellung zueinander stehen, eine drei- oder viergliedrige Brücke, vorzugsweise wie -O-CH₂-O-, -O-CF₂-O-, -O-(CH₂)₂-O-, -O-(CH₂)₂-, ausbilden können,
- R²⁰³ und R²⁰⁴: unabhängig voneinander für Wasserstoff oder C₁- bis C₁₆-Alkyl stehen,
- R²⁰⁵: für C₁- bis C₁₆-Alkyl, C₁- bis C₁₆-Alkoxy, C₁ bis C₁₆-Mono- oder Dialkyl- amino steht, oder
- R²⁰⁵: einen bivalenten Rest wie -O(CH₂)ₙ-O-, -O(CH₂CH₂O)ₙ- oder -O(CH₂(CHCH₃)O)ₙ- bedeutet, der zwei Reste der Formel (CCI) miteinander verbindet,
- n: für eine ganze Zahl von 1 bis 16 steht, oder
- R²⁰⁰ und R²⁰⁵: gemeinsam eine drei- oder viergliedrige Brücke, vorzugsweise wie -(CO)-(CH₂)₃-, -(CO)-CH₂-C(CH₃)₂-CH₂-, -(CO)-O-C(CH₃)₂-O- oder -(CO)-o-C₆H₄-, ausbilden können,
- X: für S oder N-R²⁰⁶ steht,
- R²⁰⁶ und R²²⁷: unabhängig voneinander für C₁- bis C₁₆-Alkyl stehen,
- R²⁰⁷ und R²⁰⁸: unabhängig voneinander für Hydroxy, C₁- bis C₁₆-Alkoxy oder C₆- bis C₁₀-Aryloxy stehen,
- R²⁰⁹ und R²¹⁰: unabhängig voneinander für C₁- bis C₁₆-Alkoxy, C₁- bis C₁₆-Alkylthio, NR²¹⁷R²¹⁸, C₆- bis C₁₆-Aryloxy, Cyano, CO-OR²¹⁷, CO-NR²¹⁷R²¹⁸, NR²¹⁸⁻CO-R²¹⁹, NR²¹⁸-SO₂-R²¹⁹ stehen und
- R²⁰⁹: zusätzlich für Wasserstoff oder C₁- bis C₁₆-Alkyl steht,
- R²¹¹ und R²¹²: unabhängig voneinander für Wasserstoff, Halogen, C₁- bis C₁₆-Alkyl, C₁- bis C₁₆-Alkoxy oder NR²¹⁸-CO-R²¹⁹ stehen,
- Het: für Benzthiazol-2-yl, Benzoxazol-2-yl, Benzimidazol-2-yl, Thiazol-2-yl, 1,3,4-Thiadiazol-2-yl, 2- oder 4-Pyridyl, 2- oder 4-Chinolyl, Pyrrol-2- oder-3-yl, Thiophen-2- oder -3-yl, Furan-2- oder -3-yl, Indol-2- oder -3-yl, Benzothiophen-2-yl, Bezofuran-2-yl oder 3,3-Dimethylindolen-2-yl steht, die durch Methyl. Ethyl, Methoxy, Ethoxy, Chlor, Cyano, Nitro, Methoxycarbonyl, Methylthio, Dimethylamino, Diethylamino oder Dipropylamino substituiert sein können,
- Y, Y⁵ und Y⁶: unabhängig voneinander für N oder C-R²¹³ stehen,
- R²¹³: für Wasserstoff, C₁- bis C₄-Alkyl, Cyano, CO-R²¹⁹, CO-O-R²¹⁷ oder CO-NR²¹⁷R²¹⁸ steht,
- R²¹⁴ und R²¹⁵: unabhängig voneinander für Wasserstoff, C₁- bis C₁₆-Alkyl, CO-R²¹⁹ oder C₆- bis C₁₀-Aryl stehen oder
- NR²¹⁴R²¹⁵: für Pyrrolidino, Piperidino oder Morpholino steht,
- R²¹⁶: für Wasserstoff, Halogen, C₁- bis C₁₆-Alkyl, C₁- bis C₁₆-Alkoxy oder NH-CO-R²¹⁹ steht,
- R²¹⁷ und R²¹⁸: unabhängig voneinander für Wasserstoff, C₁- bis C₁₆-Alkyl oder C₆₋bis C₁₀-Aryl stehen,
- R²¹⁹: für C₁- bis C₁₆-Alkyl oder C₆- bis C₁₀-Aryl steht,
- R²²⁰ bis R²²²: unabhängig voneinander für Wasserstoff, C₁- bis C₁₆-Alkyl oder C₁- bis C₁₆-Alkoxy stehen, wobei
- R²²⁰ und R²²¹,: wenn sie in o-Siellung zueinander stehen, gemeinsam eine -O-CH₂₋O-, -O-CF₂-O-, -O-(CH₂)₂-O-, -O-(CH₂)₂-Brücke ausbilden können,
- R²²³: für Wasserstoff oder Hydroxy steht,
- R²²⁴: für Wasserstoff, Halogen oder C₁- bis C₁₆-Alkyl steht,
- R²²⁵: für Wasserstoff oder Halogen steht,
- y: für eine ganze Zahl von 1 bis 4 steht,
- R²²⁶: für CHO, CN, CO-C₁- bis C₈-Alkyl, CO-C₆- bis C₁₀-Aryl oder CH=C(CO-C₁- bis C₈-Alkyl)-CH₂- CO-C₁- bis C₈-Alkyl steht und
- R²⁴⁸ und R²⁴⁹: unabhängig voneinander für Wasserstoff, C₁- bis C₁₆-Alkyl oder C₆- bis C₁₀-Aryl stehen oder gemeinsam für eine -CH=CH-CH=CH- oder o-C₆H₄-CH=CH-CH=CH-Brücke stehen,
wobei die Alkyl-, Alkoxy-, Aryl- und heterocyclischen Reste gegebenenfalls weitere Reste wie Alkyl, Halogen, Nitro, Cyano, CO-NH₂, Alkoxy, Trialkylsilyl, Trialkylsiloxy oder Phenyl tragen können, die Alkyl- und Alkoxyreste geradkettig oder verzweigt sein können, die Alkylreste teil- oder perhalogeniert sein können, die Alkyl- und Alkoxyreste ethoxyliert oder propoxyliert oder silyliert sein können, benachbarte Alkyl und/oder Alkoxyreste an Aryl- oder heterocyclischen Resten gemeinsam eine drei- oder viergliedrige Brücke ausbilden können und die heterocyclischen Reste benzanneliert sein können.

Als lichtabsorbierende Verbindungen kommen auch in Frage: 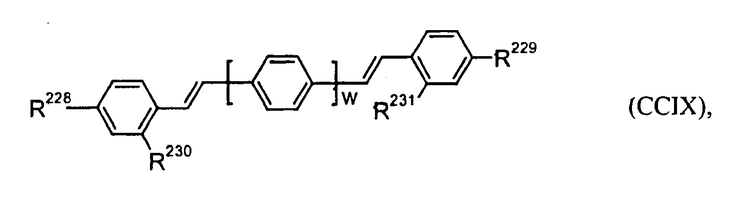 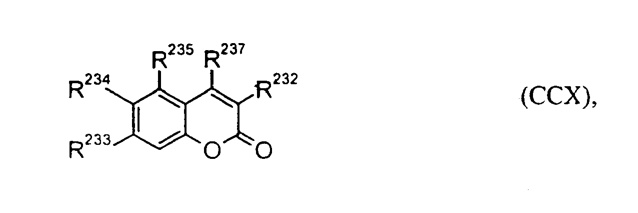 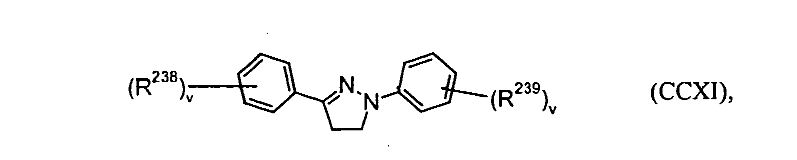 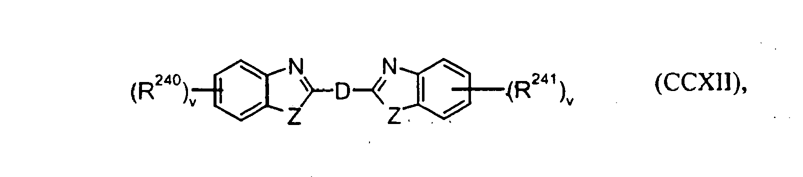 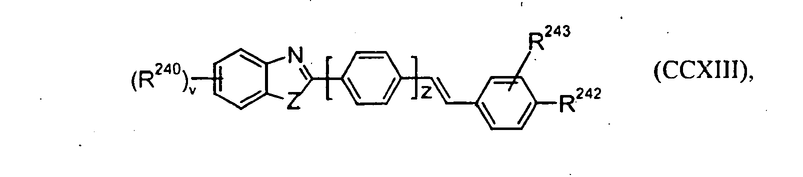 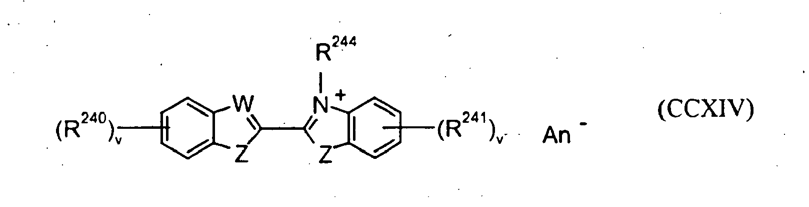 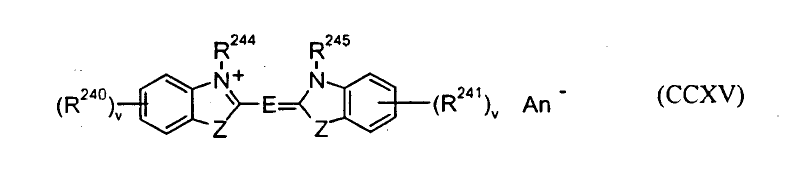 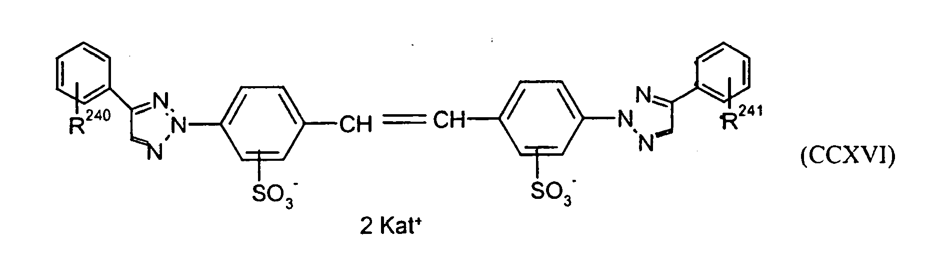 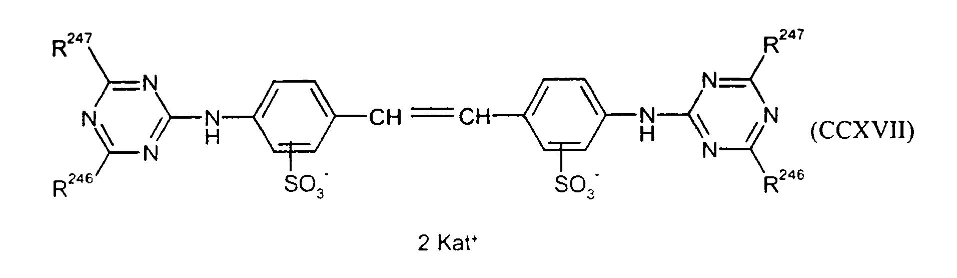 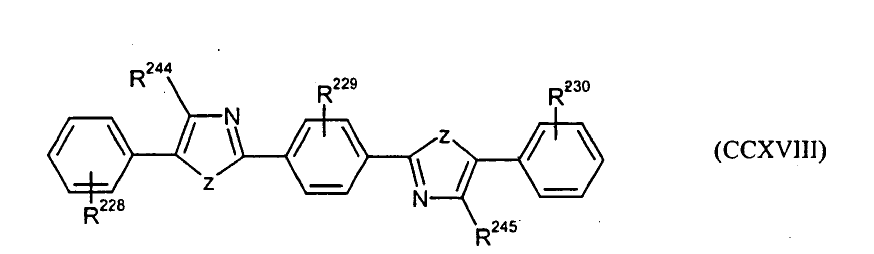 worin
- R²²⁸ bis R²³¹: unabhängig voneinander für Wasserstoff, Halogen, Cyano, C₁- bis C₁₆₋Alkyl, C₁- bis C₁₆-Alkoxy oder C₁- bis C₁₆-Alkoxycarbonyl stehen,
- w: für 1 oder 2 steht,
- R²³²: für Wasserstoff, Cyano, CO-O-C₁-bis C₄-Alkyl, C₆- bis C₁₀-Aryl, Thiophen-2-yl, Pyrid-2- oder 4-yl, Pyrazol-1-yl oder 1,2,4-Triazol- 1 - oder -4-yl steht,
- R²³³: für Wasserstoff, C₁- bis C₁₆-Alkoxy, 1,2,3-Triazol-2-yl oder Di-C₁- bis C₁₆₋alkylamino steht,
- R²³⁴ und R²³⁵: für Wasserstoff stehen oder gemeinsam für eine -CH=CH-CH=CH-Brücke stehen,
- R²³⁷: für Wasserstoff, C₁- bis C₁₆-Alkyl oder Cyano steht,
- R²³⁸ und R²³⁹: unabhängig voneinander für Wasserstoff, Halogen, CO-C₁- bis C₁₆₋Alkyl, SO₂-C₁- bis C₁₆-Alkyl oder SO₂-NH-C₁- bis C₁₆-AlkylA⁺ An⁻ stehen,
- A⁺: für N(C₁- bis C₁₆-Alkyl)₃⁺ oder Pyridinio steht,
- R²⁴⁰, R²⁴¹ und R²⁴³: unabhängig voneinander für Wasserstoff, Halogen, C₁- bis C₁₆₋Alkyl oder CO-O-C₁- bis C₁₆-Alkyl stehen und
- R²⁴⁰ und R²⁴¹: zusätzlich für -CH₂-A⁺ An⁻ stehen,
- v: für eine ganze Zahl von 1 bis 3 steht, wobei für v > 1 die Reste verschiedene Bedeutung haben dürfen,
- D: für -CH=CH-, Thiophen-2,5-diyl, Furan-2,5-diyl oder p-Phenylen steht,
- Z: für O, S oder N-R²⁴⁴ steht,
- W: für N oder CH steht,
- R²⁴²: für Wasserstoff, Cyano oder CO-O-C₁- bis C₁₆-Alkyl-steht,
- z: für 0 oder 1 steht,
- R²⁴⁴ und R²⁴⁵: unabhängig voneinander für C₁- bis C₁₆-Alkyl steht,
- An⁻: für ein Anion steht,
- Kat⁺: für Na⁺, Li⁺, NH₄⁺ oder N(C₁- bis C₁₂-Alkyl)₄⁺ steht,
- E: für CH, C-CN oder N steht,
- R²⁴⁶ und R²⁴⁷: unabhängig voneinander für C₁- bis C₁₆-Alkylamino, C₁- bis C₁₆₋Dialkylamino, Anilino, Morpholino, Piperidino oder Pyrrolidino steht,
wobei die Alkyl-, Alkoxy-, Aryl- und heterocyclischen Reste gegebenenfalls weitere Reste wie Alkyl, Halogen, Hydroxyalkyl, Nitro, Cyano, CO-NH₂, Alkoxy, Alkoxycarbonyl, Trialkylsilyl, Trialkylsiloxy oder Phenyl tragen können, die Alkyl- und Alkoxyreste geradkettig oder verzweigt sein können, die Alkylreste teil oder perhalogeniert sein können, die Alkyl- und Alkoxyreste ethoxyliert oder propoxyliert oder silyliert sein können, benachbarte Alkyl und/oder Alkoxyreste an Aryl- oder heterocyclischen Resten gemeinsam eine drei- oder viergliedrige Brücke ausbilden können und die heterocyclischen Reste benzanneliert sein können.

Als lichtabsorbierende Verbindungen kommen auch in Frage: 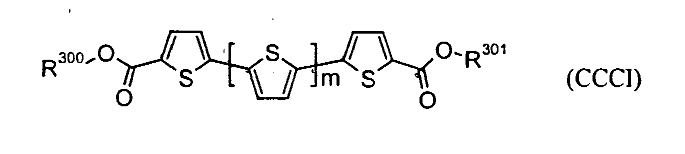 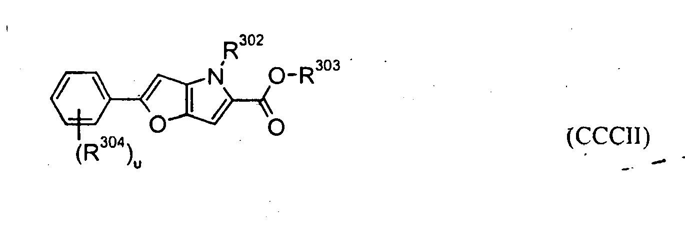 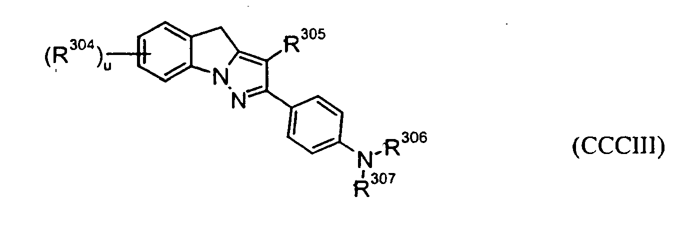 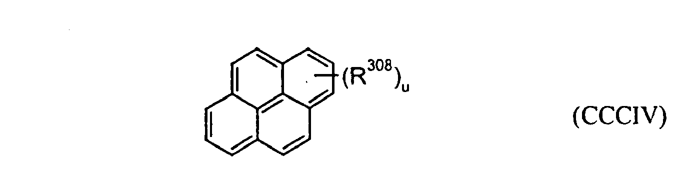 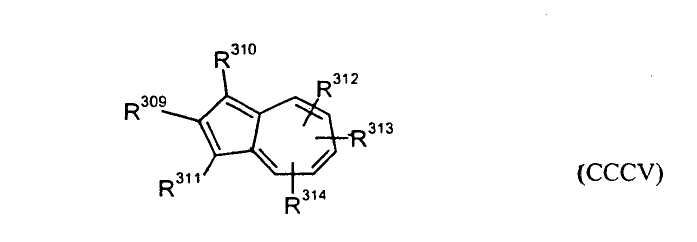 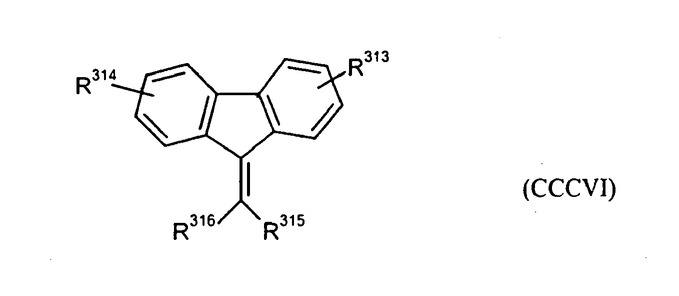 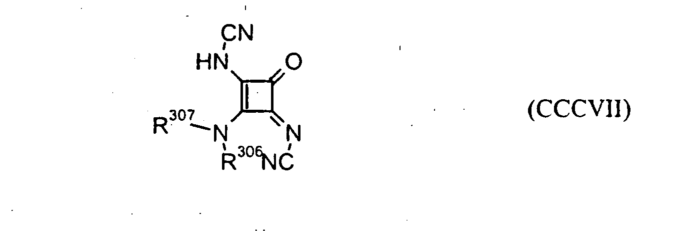 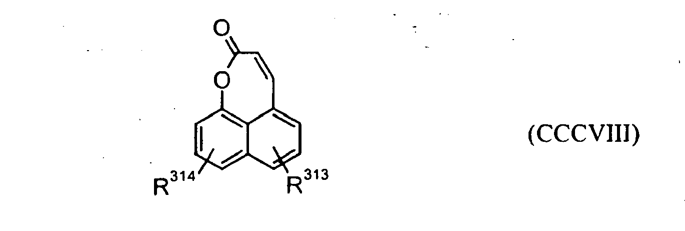 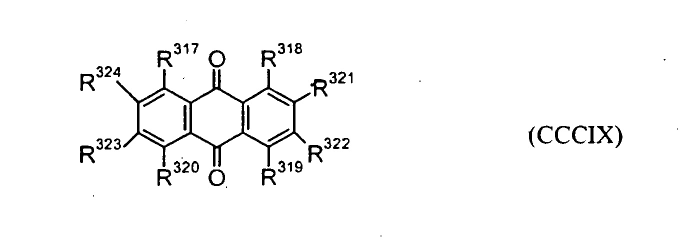 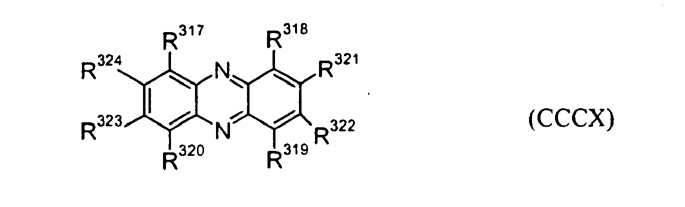 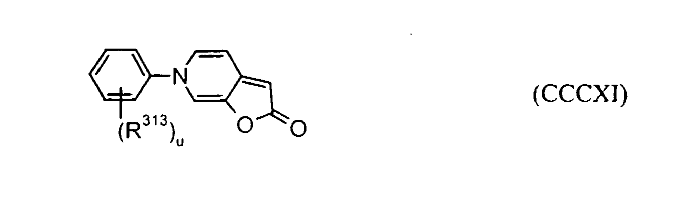 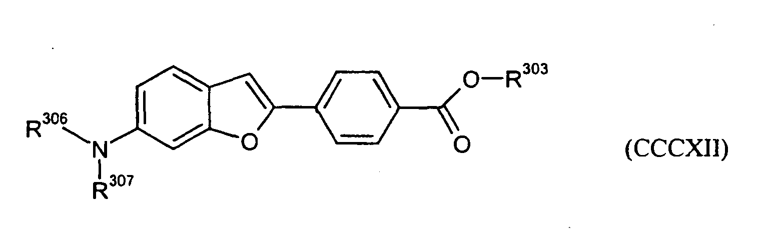 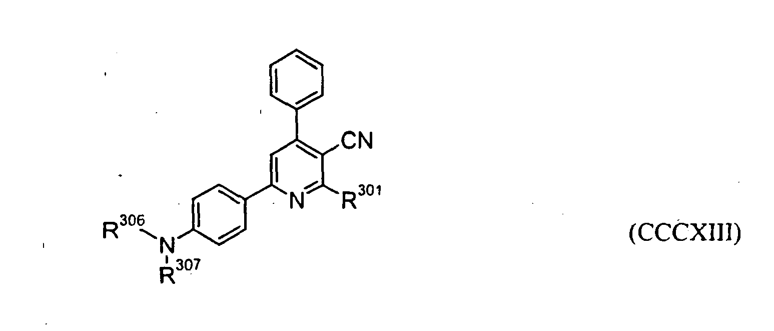 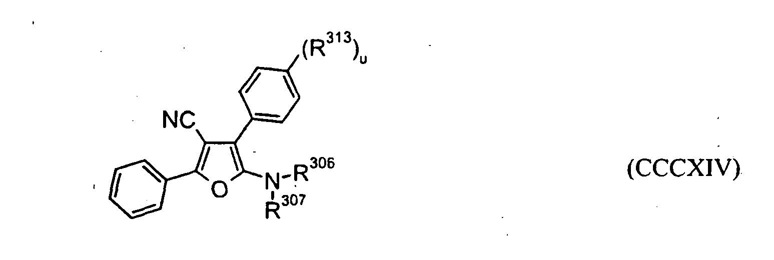 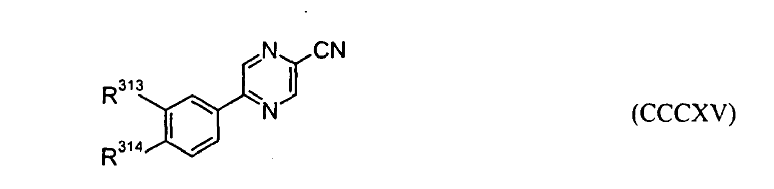 worin
- R³⁰⁰, R³⁰¹ und R³⁰³: unabhängig voneinander für Wasserstoff oder C₁- bis C₁₆-Alkyl steht,
- m: für eine ganze Zahl von 0 bis 10 steht,
- u: für eine ganze Zahl von 1 bis 3 steht, wobei für u > 1 die Reste unterschiedlich sein können,
- R³⁰²: für Wasserstoff, C₁- bis C₁₆-Alkoxycarbonyl oder C₁- bis C₁₆-Alkyl steht,
- R³⁰⁴: für Wasserstoff, Halogen, Cyano, Nitro, C₁- bis C₁₆-Alkoxy, Di-C₁-C₈₋alkylamine, C₁- bis C₁₆-Alkoxycarbonyl oder C₁- bis C₁₆-Alkyl steht,
- R³⁰⁵: für Wasserstoff, C₁- bis C₁₆-Alkoxy, C₁- bis C₁₆-Alkoxycarbonyl oder C₁- bis C₁₆-Alkyl steht,
- R³⁰⁶ und R³⁰⁷: unabhängig voneinander für Wasserstoff, C₁- bis C₁₆-Alkyl oder C₆- bis C₁₀-Aryl oder NR³⁰⁶R³⁰⁷ für Morpholino, Piperidino oder Pyrrolidino steht,
- R³⁰⁸: für C₁- bis C₁₆-Alkoxycarbonyl, Carbonsäure, C₁- bis C₁₆-Alkyl, C₁- bis C₁₆- Alkoxy, C₁- bis C₁₆-Alkylaminocarbonyl oder C₁- bis C₁₆-Dialkylaminocarbonyl steht,
- R³⁰⁹ bis R³¹⁴: unabhängig voneinander für Wasserstoff, C₆- bis C₁₀-Aryl, Carbonsäure, Cyano, C₁- bis C₁₆-Alkoxycarbonyl, C₁- bis C₁₆-Alkoxy oder C₁- bis C₁₆-Alkyl steht,
- R³¹⁵ und R³¹⁶: unabhängig voneinander für Carbonsäure, C₁- bis C₁₆-Alkoxycarbonyl, C₁- bis C₁₆-Alkoxy oder Cyano stehen oder R³¹⁵ und R³¹⁶ gemeinsam mit dem sie verbindenden C-Atom einen 5- oder 6-carbocyclischen oder heterocyclischen Ring bilden,
- R³¹⁷ bis R³²⁴: unabhängig voneinander für C₁- bis C₁₆-Alkyl, Wasserstoff, Hydroxy, Carbonsäure, C₁- bis C₁₆-Alkoxycarbonyl, C₁- bis C₁₆-Alkoxy, C₆- bis C₁₀₋Aryloxy oder Cyano steht,
wobei
die Alkyl-, Alkoxy-, Aryl- und heterocyclischen Reste gegebenenfalls weitere Reste wie Alkyl, Halogen, Hydroxyalkyl, Nitro, Cyano, CO-NH₂, Alkoxy, Alkoxycarbonyl, Trialkylsilyl, Trialkylsiloxy oder Phenyl tragen können, die Alkyl- und Alkoxyreste geradkettig oder verzweigt sein können, die Alkylreste teil- oder perhalogeniert sein können, die Alkyl- und Alkoxyreste ethoxyliert oder propoxyliert oder silyliert sein können, benachbarte Alkyl und/oder Alkoxyreste an Aryl- oder heterocyclischen Resten gemeinsam eine drei- oder viergliedrige Brücke ausbilden können und die heterocyclischen Reste benzanneliert sein können. 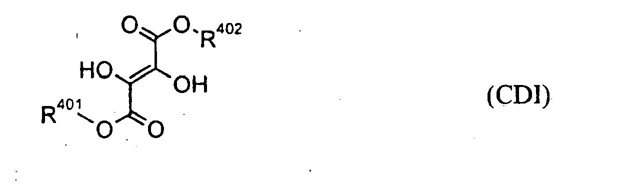 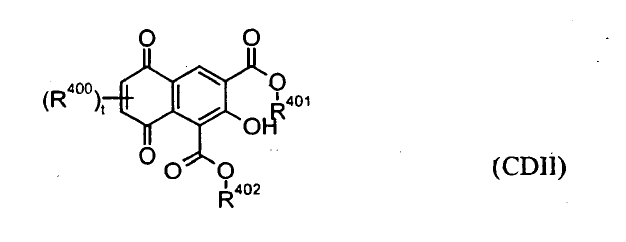 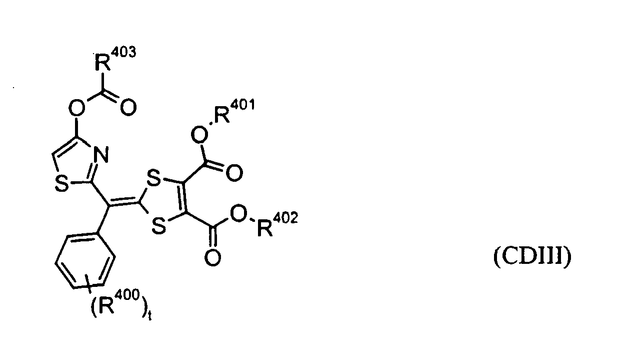 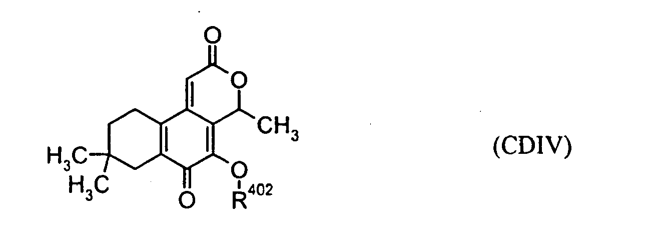 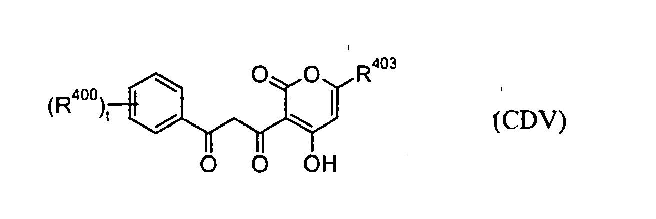 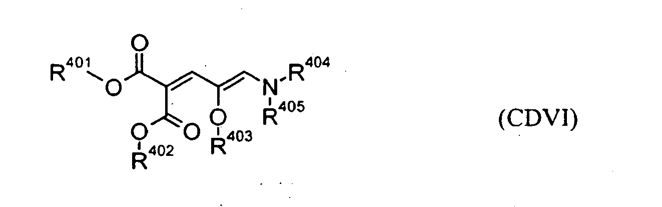 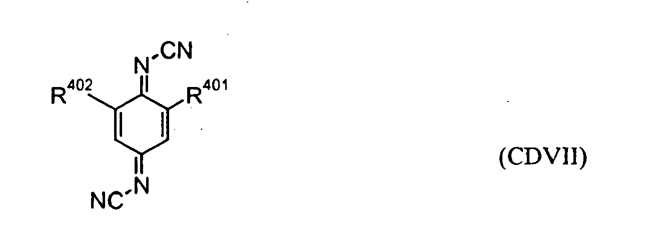 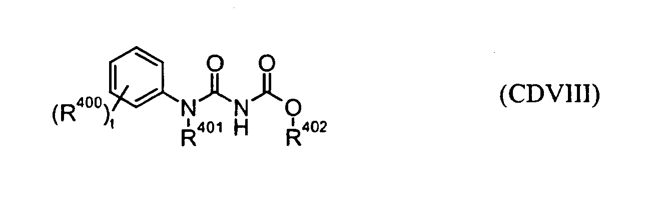 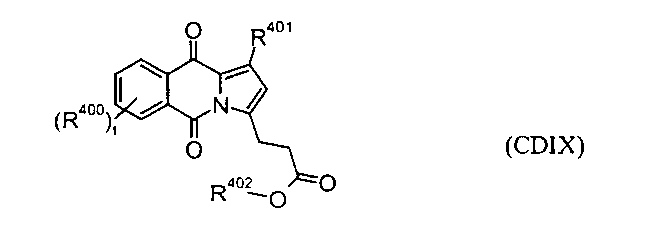 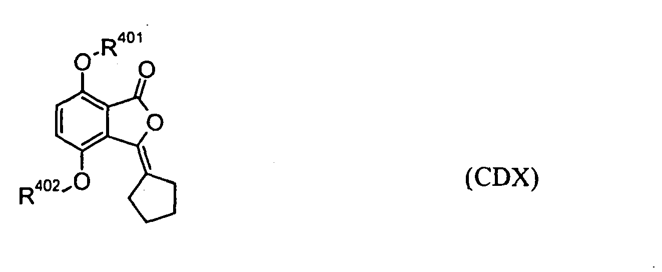 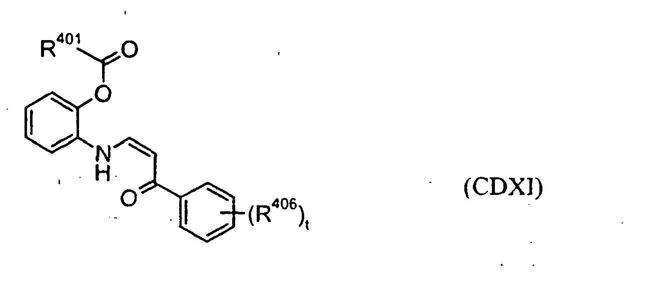 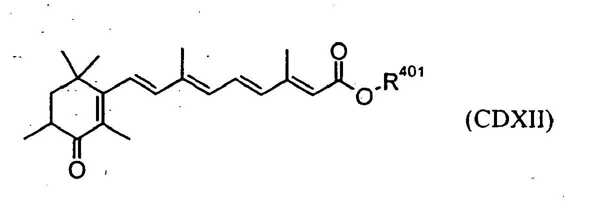 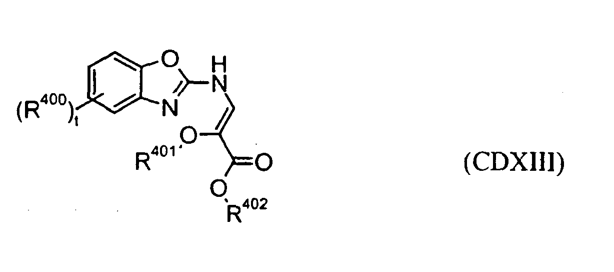 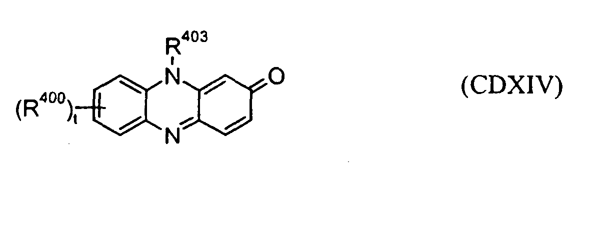 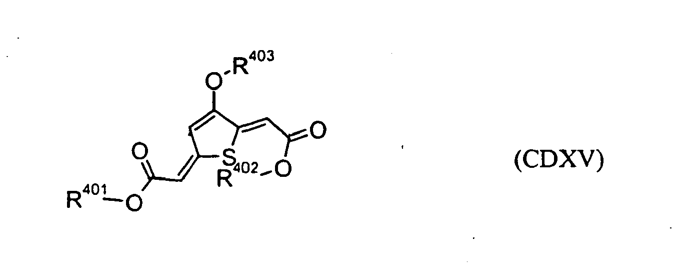 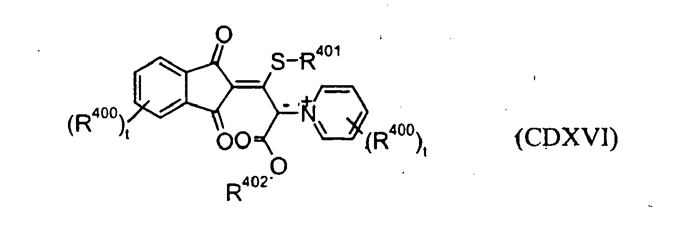 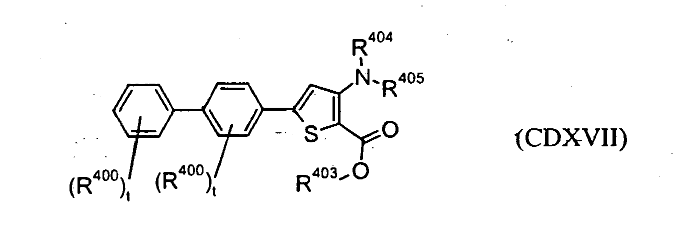 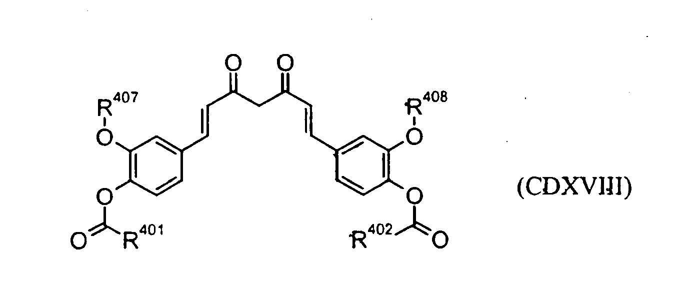 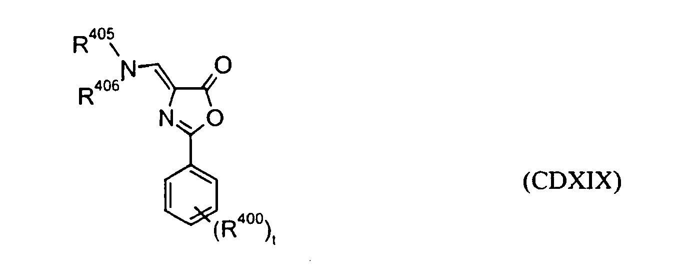 worin
- R⁴⁰⁰: für Wasserstoff, C₁- bis C₁₂-Alkyl oder C₁- bis C₁₂-Alkoxy steht,
- t: für eine ganze Zahl von 1 bis 3 steht, wobei für t > 1 die Reste verschieden sein dürfen,
- R⁴⁰¹ und R⁴⁰²: unabhängig voneinander für Wasserstoff oder C₁- bis C₁₆-Alkyl stehen,
- R⁴⁰³: für Wasserstoff, C₆- bis C₁₀-Aryl oder C₁- bis C₁₆-Alkyl steht,
- R⁴⁰⁴ und R⁴⁰⁵: unabhängig voneinander für C₁- bis C₁₆-Alkyl, C₆- bis C₁₀-Aryl oder NR⁴⁰⁴R⁴⁰⁵ für Morpholino, Piperidino oder Pyrrolidino stehen,
- R⁴⁰⁶: für Wasserstoff, Cyano, Nitro, Carbonsäure, C₁- bis C₁₆-Alkyl, C₁- bis C₁₆₋Alkoxy oder C₁-bis C₁₆-Alkoxycarbonyl steht,
- R⁴⁰⁷ und R⁴⁰⁸: unabhängig voneinander für Wasserstoff oder C₁- bis C₁₆-Alkyl steht,
wobei
die Alkyl-, Alkoxy-, Aryl- und heterocyclischen Reste gegebenenfalls weitere Reste wie Alkyl, Halogen, Hydroxyalkyl, Nitro, Cyano, CO-NH₂, Alkoxy, Alkoxycarbonyl oder Phenyl tragen können, die Alkyl- und Alkoxyreste geradkettig oder verzweigt sein können, die Alkylreste teil- oder perhalogeniert sein können, die Alkyl- und Alkoxyreste ethoxyliert oder propoxyliert oder silyliert sein können, benachbarte Alkyl und/oder Alkoxyreste an Aryl- oder heterocyclischen Resten gemeinsam eine drei- oder viergliedrige Brücke ausbilden können und die heterocyclischen Reste benzanneliert sein können.

Bevorzugt sind lichtabsorbierende Verbindungen der Formeln (CI) bis (CXIII),
worin
- R¹⁰⁰: für Wasserstoff, Methyl, Ethyl oder Propyl steht
- x: für eine ganze Zahl von 1 bis 2 steht und wobei für x > 1 die Reste unterschiedlich sein dürfen,
- R¹⁰¹: für Wasserstoff, Chlor, Brom, Methyl, Ethyl, Propyl, Butyl, Pentyl, Hexyl, Octyl, Decyl, Hydroxyethyl, Methoxyethyl, Ethoxypropyl, Nitro, Methoxy, Ethoxy, Propoxy, Butoxy, Pentoxy, Hexoxy, Octoxy, Decoxy, Methoxyethoxy, Phenoxy, Cyano, Carbonsäure, Methoxycarbonyl, Ethoxycarbonyl, Propoxycarbonyl, Butoxycarbonyl, Pentoxycarbonyl, Hexoxycarbonyl, Octoxycarbonyl oder Decoxycarbonyl steht,
- Y¹: für N oder C-R¹⁰² steht,
- Y²: für C-R¹⁰² steht,
- R¹⁰²: für Wasserstoff, Phenyl, Tolyl, Methoxyphenyl, Chlorphenyl, Methyl, Ethyl, Propyl, Butyl, Benzyl, Phenylpropyl, Cyano, Carbonsäure, Methoxycarbonyl, Ethoxycarbonyl, Propoxycarbonyl, Butoxycarbonyl, Formyl, Acetyl, Propanoyl oder Butanoyl steht,
- Het: für Benzthiazol-2-yl, Benzoxazol-2-yl, Benzimidazol-2-yl, Thiazol-2-yl, 1,3,4-Thiadiazol-2-yl, 2- oder 4-Pyridyl, 2- oder 4-Chinolyl oder 3,3-Dimethylindolen-2-yl, und die gegebenenfalls durch Alkyl oder (C₂H₄O)ₙH mit n=1-16 am Stickstoff quarterniert sein können und AlkylSO₃⁻, AlkoxySO₃⁻ oder Halogen- als Gegenion besitzen oder für Furan-2-yl, Thiophen-2-yl, Pyrrol-2-yl, N-Mehyl- oder N-Ethyl-pyrrol-2-yl, Benzofuran-2-yl, Benzothiophen-2-yl, Indol-2- oder -3-yl oder N-Methyl- oder N-Ethyl-indol-2- oder -3-yl steht,
- R¹⁰³ nd R¹⁰⁴: u unabhängig voneinander für Cyano, Carbonsäure, Methoxycarbonyl, Ethoxycarbonyl, Propoxycarbonyl, Butoxycarbonyl, Pentoxycarbonyl, Hexoxycarbonyl, Octoxycarbonyl oder Decoxycarbonyl, Aminocarbonyl, Formyl, Acetyl, Propionyl, Butanoyl, Pentanoyl, Hexanoyl, Octanoyl, Decanoyl, Benzoyl oder Phenylacetyl stehen oder R¹⁰⁴ für Wasserstoff, CH₂₋COOMethyl, CH₂-COOEthyl, CH₂-COOPropyl, CH₂-COOButyl, P(O)(O-Methyl)₂, P(O)(O-Ethyl)₂, P(O)(O-Propyl)₂ , P(O)(O-Butyl)₂, Methyl, Ethyl, Propyl, Butyl, Pentyl, Hexyl, Octyl, Decyl, Hydroxyethyl, Methoxyethyl, Ethoxypropyl, -CH₂CH₂O-(CO)-CH=CH₂, Benzyl oder Phenylpropyl, steht
- A: für (2-Methyl-4H-oxazol-5-on)-4-yliden, (2-Styryl-4H-oxazol-5-on)-4-yliden, (2-Phenyl-4N-oxazol-5-on)-4-yliden, (2,2-Dimethyl-1,3dioxan-4,6-dion)-5-yliden, 5,5-Dimethylcyclohexan-1,3-dion-2-yliden, 5-Phenylcyclohexan-1,3-dion-2-yliden, Indan-1,3-dion-2-yliden, Pyrrolidino-2,3-dion-4-yliden oder Furan-4-dimethylethyliden-2,5-dion-3-yliden steht,
- B: für N-Methyl-pyrrolin-2-on-3-yliden, Pyrrolin-2-on-3-yliden, N-Methyl-benzpyrrolin-2-on-3-yliden, N-Methyl-3,4-dimethyl-pyrrolin-2-on-3-yliden, N-Phenyl-pyrrolin-2-on-3-yliden, (5H)-Furanon-2-yliden, 4-Methyl-(5H)-furanon-2-yliden, (5H)-Benzfuranon-2-yliden, 3H-Methyl-pyran-2,6-dion-4-yliden, 3H-Pyran-2,6-dion-3-yliden oder 3H-Benzpyran-2,6-dion-3-yliden steht,
- R¹⁰⁵: für Wasserstoff, Chlor, Brom, Methyl, Ethyl, Propyl, Butyl, Pentyl, Hexyl, Octyl, Decyl, Hydroxyethyl, Methoxyethyl, Ethoxypropyl, Methoxy, Ethoxy, Propoxy, Butoxy, Pentoxy, Hexoxy, Octoxy, Decoxy, Methoxyethoxy, Phenoxy, Cyano, Nitro, Carbonsäure, Methoxycarbonyl, Ethoxycarbonyl, Propoxycarbonyl, Butoxycarbonyl, Pentoxycarbonyl, Hexoxycarbonyl, Octoxycarbonyl oder Decoxycarbonyl steht,
- R¹⁰⁶: für Wasserstoff, Methyl, Ethyl, Propyl, Butyl, Methoxycarbonyl, Ethoxycarbonyl, Propoxycarbonyl, Butoxycarbonyl, Pentoxycarbonyl, Hexoxycarbonyl, Octoxycarbonyl, Decoxycarbonyl oder Cyano steht,
- R¹⁰⁷: für Wasserstoff , Chlor, Fluor, Brom, Methyl, Ethyl, Propyl, Butyl, Pentyl, Hexyl, Octyl, Decyl, Hydroxyethyl, Methoxyethyl, Ethoxypropyl, Methoxy, Ethoxy, Propoxy, Butoxy, Pentoxy, Hexoxy, Octoxy, Decoxy, Methoxyethoxy, Phenoxy, Nitro, Cyano, Methoxycarbonyl, Ethoxycarbonyl, Propoxycarbonyl, Butoxycarbonyl, Pentoxycarbonyl, Hexoxycarbonyl, Octoxycarbonyl oder Decoxycarbonyl steht,
- R¹⁰⁸: für Wasserstoff , Chlor, Fluor, Brom, Methyl, Ethyl, Propyl, Butyl, Pentyl, Hexyl, Octyl, Decyl, Hydroxyethyl, Methoxyethyl, Ethoxypropyl, Methoxy, Ethoxy, Propoxy, Butoxy, Pentoxy, Hexoxy, Octoxy, Decoxy, Methoxyethoxy, Phenoxy, Nitro, Cyano, Methoxycarbonyl, Ethoxycarbonyl, Propoxycarbonyl, Butoxycarbonyl, Pentoxycarbonyl, Hexoxycarbonyl, Octoxycarbonyl oder Decoxycarbonyl steht,
- R¹⁰⁹ und R¹¹⁰: unabhängig voneinander für Wasserstoff, Chlor, Fluor, Brom, Methyl, Ethyl, Propyl, Butyl, Pentyl, Hexyl, Octyl, Decyl, Hydroxyethyl, Methoxyethyl, Ethoxypropyl, Formyl, Acetyl, Propionyl, Butanoyl, Pentanoyl, Hexanoyl, Octanoyl, Decanoyl, Benzoyl, Phenylacetyl, Methoxy, Ethoxy, Propoxy, Butoxy, Pentoxy, Hexoxy, Octoxy, Decoxy, Methoxyethoxy, Phenoxy, Nitro, Cyano, Methyl, Ethyl, Propyl, Butyl, Pentyl, Hexyl, Octyl, Decyl steht,
- R¹¹¹: für Cyano, CH=CH-N R¹¹³ R¹¹⁴ steht,
- R¹¹²: für Wasserstoff, Anilino, N-Methylanilino, N-Ethylanilino, N-Propylanilino, N-Butylanilino, N-Pentylanilino, N-Hexylanilino, N-Octylanilino, N-Decylanilino, N-Hydroxyethylanilino, wobei der Anilino-Rest durch 1 bis 3 Reste der Gruppe Methyl, Ethyl, Propyl, Butyl, Chlor, Fluor, Methoxy, Ethoxy, Propoxy, Butoxy, Nitro, Cyano, Methoxycarbonyl, Ethoxycarbonyl, Propoxycarbonyl, Butoxycarbonyl oder Phenyl substituiert sein kann, oder für N=CH-N R¹¹³ R¹¹⁴ steht oder R¹¹¹ und R¹¹² gemeinsam mit dem sie verbindenden C-Atom für =C=C- N R¹¹³ R¹¹⁴ steht,
- R¹¹³ und R¹¹⁴: unabhängig voneinander für Wasserstoff, Methyl, Ethyl, Propyl, Butyl, Pentyl, Hexyl, Octyl oder Decyl steht,
- X¹: für S steht,
- = Y³-Y⁴=: für eine direkte Doppelbindung steht,
- R¹¹⁵ und R¹¹⁶: unabhängig voneinander für Cyano, Carbonsäure, Methoxycarbonyl, Ethoxycarbonyl, Propoxycarbonyl, Butoxycarbonyl, Pentoxycarbonyl, Hexoxycarbonyl, Octoxycarbonyl, Decoxycarbonyl, Aminocarbonyl, P(O)(O-Methyl)₂ , P(D)(O-Ethyl)₂, P(O)(O-Propyl)₂ , P(O)(O-Butyl)₂, P(O)(O-Pentyl)₂, Formyl, Acetyl, Propionyl, Butanoyl, Pentanoyl, Hexanoyl, Octanoyl, Decanoyl, Benzoyl, Phenylacetyl, , stehen oder R¹¹⁵ und R¹¹⁶ gemeinsam mit dem sie verbindenden C-Atom für (2-Methyl-4H-oxazol-5-on)-4-yliden, (2-Styryl-4H-oxazol-5-on)-4-yliden, (2-Phenyl-4H-oxazol-5-on)-4-yliden, (2,2-Dimethyl-1,3-dioxan-4,6-dion)-5-yliden, Pyrrolidino-2,3-dion-4-yliden, Furan-4-dimethylethyliden-2,5-dion-3-yliden, N-Methyl-pyrrolin-2-on-3-yliden, Pyrrolin-2-on-3-yliden, N-Methyl-benzpyrrolin-2-on-3-yliden, N-Methyl-3,4-dimethyl-pyrrolin-2-on-3-yliden, N-Phenyl-pyrrolin-2-on-3-yliden, (5H)-Furanon-2-yliden, 4-Methyl-(5H)-furanon-2-yliden, (5H)-Benzfuranon-2-yliden, 3H-4-Methyl-pyran-2,6-dion-3-yliden, 3H-Pyran-2,6-dion-3-yliden, 5,5-Dimethylcyclohexan-1,3-dion-2-yliden, 5-Phenylcyclohexan-1,3-dion-2-yliden, Indan-1,3-dion-2-yliden, oder 3H-Benzpyran-2,6-dion-3-yliden stehen,
- R¹¹⁷ und R¹¹⁸: unabhängig voneinander für Wasserstoff, Methyl, Ethyl, Propyl, Butyl, Pentyl, Hexyl, Octyl, Decyl, Hydroxyethyl, Methoxyethyl, Ethoxypropyl, Benzyl, Phenylpropyl, Cyano, SCOPhenyl, SCOTolyl, SCOMethoxyphenyl, SCOChlorphenyl, Carbonsäure, Formyl, Acetyl, Propionyl, Butanoyl, Pentanoyl, Hexanoyl, Octanoyl, Decanoyl, Benzoyl, Phenylacetyl, Methoxycarbonyl, Ethoxycarbonyl, Propoxycarbonyl, Butoxycarbonyl, Pentoxycarbonyl, Hexoxycarbonyl, Octoxycarbonyl oder Decoxycarbonyl steht,
wobei die Alkyl- und Alkoxyreste geradkettig oder verzweigt sein können, z.B. n-Butyl, 2-Butyl, tert.-Butyl und teil- oder perfluoriert sein können.

Besonders bevorzugt sind lichtabsorbierende Verbindungen der Formeln (Cl) bis (CXIII),
worin
- R¹⁰⁰: für Wasserstoff, Methyl, Ethyl oder Propyl steht
- x: für eine ganze Zahl von 1 bis 2 steht und wobei für x > 1 die Reste unterschiedlich sein dürfen,
- R¹⁰¹: für Wasserstoff, Brom, Methyl, Ethyl, Propyl, Butyl, Pentyl, Hexyl, Octyl, Decyl, Methoxyethyl, Ethoxypropyl, Nitro, Methoxy, Ethoxy, Propoxy, Butoxy, Pentoxy, Hexoxy, Octoxy, Decoxy, Methoxyethoxy, Cyano, Methoxycarbonyl, Ethoxycarbonyl, Propoxycarbonyl, Butoxycarbonyl, Pentoxycarbonyl, Hexoxycarbonyl, Octoxycarbonyl oder Decoxycarbonyl steht,
- Y¹ und Y²: unabhängig voneinander für C-R¹⁰² stehen,
- R¹⁰²: für Wasserstoff, Phenyl, Methyl, Ethyl, Cyano, Methoxycarbonyl, Ethoxycarbonyl, Propoxycarbonykl, steht,
- Het: für Benzthiazol-2-yl, Benzoxazol-2-yl, Benzimidazol-2-yl, Thiazol-2-yl, 1,3,4-Thiadiazol-2-yl, 2- oder 4-Pyridyl, 2- oder 4-Chinolyl, 3,3-Dimethylindolen-2-yl, Furan-2-yl, Thiophen-2-yl, Pyrrol-2-yl, N-Alkyl-Pyrrol-2-yl steht,
- R¹⁰³ und R¹⁰⁴: unabhängig voneinander für Cyano, Methoxycarbonyl, Ethoxycarbonyl, Propoxycarbonyl, Butoxycarbonyl, Pentoxycarbonyl, Hexoxycarbonyl, Octoxycarbonyl oder Decoxycarbonyl, Formyl, Acetyl, Propionyl, Butanoyl, Pentanoyl, Hexanoyl, Octanoyl, Decanoyl, stehen oder R¹⁰⁴ für CH₂-COOMethyl, CH₂-COOEthyl, CH₂-COOPropyl, CH₂-COOButyl, P(O)(O-Methyl)₂, P(O)(O-Ethyl)₂, P(O)(O-Propyl)₂, P(O)(O-Butyl)₂,Wasserstoff steht
- A: für (2-Methyl-4H-oxazol-5-on)-4-yliden, (2-Phenyl-4H-oxazol-5-on)-4-yliden, (2,2-Dimethyl-1,3-dioxan-4,6-dion)-5-yliden, 5,5-Dimethylcyclohexan-1,3-dion-2-yliden, 5-Phenylcyclohexan-1,3-dion-2-yliden, Indan-1,3-dion-2-yliden oder Pyrrolidino-2,3-dion-4-yliden steht,
- B: für N-Methyl-pyrrolin-2-on-3-yliden, N-Methyl-benzpyrrolin-2-on-3-yliden, N-Methyl-3,4-dimethyl-pyrrolin-2-on-3-yliden, N-Phenyl-pyrrolin-2-on-3-yliden, (5H)-Furanon-2-yliden, 4-Methyl-(5H)-furanon-2-yliden, (5H)-Benzfuranon-2-yliden, 3H-4-Methyl-pyran-2,6-dion-3-yliden, 3H-Pyran-2,6-dion-3-yliden oder 3H-Benzpyran-2,6-dion-3-yliden steht,
- R¹⁰⁵: für Wasserstoff, Brom, Methyl, Ethyl, Propyl, Butyl, Pentyl, Hexyl, Octyl, Decyl, Methoxy, Ethoxy, Propoxy, Butoxy, Pentoxy, Hexoxy, Octoxy, Decoxy, Methoxyethoxy, Cyano, Nitro, Methoxycarbonyl, Ethoxycarbonyl, Propoxycarbonyl, Butoxycarbonyl, Pentoxycarbonyl, Hexoxycarbonyl, Octoxycarbonyl oder Decoxycarbonyl steht,
- R¹⁰⁶: für Wasserstoff, Methyl, Ethyl, Propyl oder Butyl steht,
- R¹⁰⁷: für Wasserstoff, Chlor, Brom, Methyl, Ethyl, Propyl, Butyl, Methoxy, Ethoxy, Propoxy, Butoxy, Methoxyethoxy, Nitro, Cyano Methoxycarbonyl, Ethoxycarbonyl, Propoxycarbonyl oder Butoxycarbonyl steht,
- R¹⁰⁸: für Wasserstoff, Chlor, Brom, Methyl, Ethyl, Propyl, Butyl, Pentyl, Hexyl, Octyl, Decyl, Methoxy, Ethoxy, Propoxy, Butoxy, Pentoxy, Hexoxy, Octoxy, Decoxy, Methoxyethoxy, Nitro, Cyano Methoxycarbonyl, Ethoxycarbonyl, Propoxycarbonyl, Butoxycarbonyl, Pentoxycarbonyl, Hexoxycarbonyl, Octoxycarbonyl oder Decoxycarbonyl steht,
- R¹⁰⁹: Wasserstoff, Chlor, Brom, Methyl, Ethyl, Propyl, Butyl, Acetyl, Propionyl, Methoxy, Ethoxy, Propoxy, Butoxy, Methoxyethoxy, Nitro, Cyano, steht,
- R¹¹⁰: für Wasserstoff, Chlor, Brom, Methyl, Ethyl, Propyl, Butyl, Pentyl, Hexyl, Octyl, Decyl, Acetyl, Propionyl, Methoxy, Ethoxy, Propoxy, Butoxy, Pentoxy, Hexoxy, Octoxy, Decoxy, Methoxyethoxy, Nitro, Cyano steht,
- R¹¹¹: für Cyano steht,
- R¹¹²: für Anilino, N-Methylanilino, N-Ethylanilino, N-Propylanilino, N-Butylanilino, N-Pentylanilino, N-Hexylanilino, N-Octylanilino, N-Decylanilino, N-Hydroxyethylanilino steht, wobei der Anilino-Rest durch Methyl, Methoxy, Ethoxy, Chlor, Nitro, Cyano oder Methoxycarbonyl substituiert sein kann,
- X¹: für S steht,
- =Y³-Y⁴=: für eine direkte Doppelbindung steht,
- R¹¹⁵ nd R¹¹⁶: u unabhängig voneinander für Cyano, Methyl, Ethyl, Propyl, Butyl, P(O)(O-Methyl)₂, P(O)(O-Ethyl)₂, P(O)(O-Propyl)₂, P(O)(O-Butyl)₂, P(O)(O-Pentyl)₂, Acetyl, Propionyl, Butanoyl stehen oder R¹¹⁵ und R¹¹⁶ gemeinsam mit dem sie verbindenden C-Atom für (2-Methyl-4H-oxazol-5-on)-4-yliden, (2-Phenyl-4H-oxazol-5-on)-4-yliden, (2,2-Dimethyl-1,3-dioxan-4,6-dion)-5-yliden, Pyrrolidino-2,3-dion-4-yliden, N-Methyl-pyrrolin-2-on-3-yliden, Pyrrolin-2-on-3-yliden, N-Methyl-benzpyrrolin-2-on-3-yliden, N-Methyl-3,4-dimethyl-pyrrolin-2-on-3-yliden, N-Phenyl-pyrrolin-2-on-3-yliden, (5H)-Furanon-2-yliden, 4-Methyl-(5H)-furanon-2-yliden, (5H)-Benzfuranon-2-yliden, 3H-4-Methyl-pyran-2,6-dion-3-yliden, 3H-Pyran-2,6-dion-3-yliden, 5,5-Dimethylcyclohexan-1,3-dion-2-yliden, 5-Phenylcyclohexan-1,3-dion-2-yliden, Indan-1,3-dion-2-yliden oder 3H-Benzpyran-2,6-dion-3-yliden stehen,
- R¹¹⁷ und R¹¹⁸: unabhängig voneinander für Wasserstoff, Methyl, Ethyl, Propyl, Butyl, Pentyl, Hexyl, Octyl, Decyl, Methoxyethyl, Ethoxypropyl, Cyano, SCOPhenyl, SCOTolyl, SCOMethoxyphenyl, SCOChlorphenyl, Methoxycarbonyl, Ethoxycarbonyl, Propoxycarbonyl oder Butoxycarbonyl steht,

Ganz besonders bevorzugt sind lichtabsorbierende Verbindungen der Formeln (CI), (CII), (CIII), (CIV), (CVIII), (CXI), (CXII) und (CXIII).

Bevorzugt sind ebenfalls lichtabsorbierende Verbingungen der Formeln (CCI) bis (CCVIII),
worin
- R²⁰⁰: für Cyano, Phenyl, Tolyl, Methoxyphenyl, Chlorphenyl, Methoxycarbonyl, Ethoxycarbonyl, Propoxycarbonyl oder Butoxycarbonyl steht,
- R²⁰¹ und R²⁰²: unabhängig voneinander für Wasserstoff, Chlor, Brom, Methyl, Ethyl, Methoxy, Ethoxy, Propoxy oder Butoxy stehen, oder
- R²⁰¹ und R²⁰²,: wenn sie in o-Stellung zueinander stehen, eine -O-CH₂-O- oder -O-CF₂-O-Brücke bilden,
- R²⁰³ und R²⁰⁴: unabhängig voneinander für Wasserstoff, Methyl oder Ethyl stehen,
- R²⁰⁵: für Methyl, Ethyl, Propyl, Butyl, Pentyl, Hexyl, Octyl, Decyl, Hydroxyethyl, Methoxyethyl, Ethoxypropyl, Benzyl, Phenylpropyl, Methoxy, Ethoxy, Propoxy, Butoxy, Pentoxy, Hexoxy oder Benzyloxy steht,
- X: für S oder N-R²⁰⁶ steht,
- R²⁰⁶ und R²²⁷: unabhängig voneinander für Methyl, Ethyl, Propyl, Butyl, Pentyl, Hexyl,-Heptyl oder Octyl steht,
- R²⁰⁷ und R²⁰⁸: unabhängig voneinander für Hydroxy, Methoxy, Ethoxy, Propoxy, Butoxy, Benzyloxy oder Phenoxy stehen,
- R²⁰⁹ und R²¹⁰: unabhängig voneinander für Methoxy, Ethoxy, Propoxy, Butoxy, Hexoxy, Methoxyethoxy, Methylthio, Ethylthio, Amino, NR²¹⁷R²¹⁸, Phenoxy, Cyano, CO-OR²¹⁷, CO-NR²¹⁷R²¹⁸ NR²¹⁸-CO-R²¹⁹, NR²¹⁸-SO₂-R²¹⁹ stehen und
- R²⁰⁹: zusätzlich für Wasserstoff, Methyl, Hydroxyethoxy, -OCH₂CH₂-O-(CO)-CH=CH₂, -O-(CH₂)₄-O-(CO)-C(CH₃)=CH₂, -NH-(CO)-C₆H₄-O-CN₂CH₂-O-(CO)-CH=CH₂ steht,
- R²¹¹ und R²¹²: unabhängig voneinander für Wasserstoff, Chlor, Methyl, Ethyl, Methoxy oder Ethoxy stehen,
- Het: für Benzthiazol-2-yl, Benzoxazol-2-yl oder 2- oder 4-Pyridyl steht,
- Y: für C-R²¹³ steht,
- Y⁵ und Y⁶: für N stehen,
- R²¹³: für Wasserstoff, Cyano, CO-R²¹⁹, CO-O-R²¹⁷, oder CO-NR²¹⁷R²¹⁸ steht,
- R²¹⁴ und R²¹⁵: unabhängig voneinander für Methyl, Ethyl, Propyl, Butyl, Hexyl, Methoxyethyl, Hydroxyethyl, Cyanethyl, Benzyl, Phenethyl, Phenylpropyl, Phenyl, Tolyl, Methoxyphenyl, Chlorphenyl oder CO-R²¹⁹ stehen,
- NR²¹⁴R²¹⁵: für Pyrrolidino, Piperidino oder Morpholino steht,
- R²¹⁶: für Wasserstoff, Chlor, Brom, Methyl, Ethyl, Methoxy, Ethoxy oder NH-CO-R²¹⁹ steht,
- R²¹⁷ und R²¹⁸: unabhängig voneinander für Methyl, Ethyl, Propyl, Butyl, Hexyl, Benzyl, Phenethyl, Phenylpropyl, Phenyl, Tolyl, Methoxyphenyl oder Chlorphenyl stehen und
- R²¹⁸: zusätzlich für Wasserstoff steht,
- R²¹⁹: für Methyl, Ethyl, Propyl, Butyl oder Phenyl steht,
- R²²⁰ nd R²²¹: u unabhängig voneinander für Wasserstoff, Methyl, Ethyl, Propyl, Butyl, Methoxy, Ethoxy, Propoxy oder Butoxy steht,
- R²²² nd R²²⁴: u für Wasserstoff stehen,
- R²²³: für Wasserstoff oder Hydroxy steht,
- R²²⁵: für Wasserstoff, Chlor oder Brom steht,
- y: für 4 steht und
- R²²⁶: für CHO oder CN steht,
- R²²⁷: für Butyl, Pentyl, Hexyl, Heptyl oder Octyl steht,
- R²⁴⁸: für Methyl, Ethyl, Propyl oder Butyl steht,
- R²⁴⁹: für Methyl, Ethyl, Propyl, Butyl oder Phenyl steht oder
- R²⁴⁸ und R²⁴⁹: gemeinsam für eine o-C₆H₄-CH=CH-CH=CH-Brücke stehen,
wobei die Alkyl- und Alkoxyreste geradkettig oder verzweigt sein können, z.B. n-Butyl, 2-Butyl, tert.-Butyl und teil- oder perfluoriert sein können.

Besonders bevorzugt sind ebenfalls lichtabsorbierende Verbindungen der Formeln (CCI) bis (CCVIII),
worin
- R²⁰⁰: für Cyano steht,
- R²⁰¹ und R²⁰²: für Methoxy stehen,
- R²⁰³ und R²⁰⁴: für Methyl stehen,
- R²⁰⁵: für Propyl, Butyl, Pentyl, Propoxy, Butoxy oder Pentoxy steht,
- X: für N-(2-Ethyl-1-hexyl) steht,
- R²⁰⁷ und R²⁰⁸: für Hydroxy stehen,
- R²⁰⁹ und R²¹⁰: gleich sind und für Methoxy, Ethoxy, Amino, NH-Methyl, NH-Ethyl, Dimethylamino, Diethylamino, Cyano, CO-O-Methyl, CO-O-n-Butyl, CO-NH-n-Butyl, CO-NH-Phenyl, NH-CO-n-Butyl, NH-CO-tert.-Butyl oder NH-CO-Phenyl stehen,
- R²¹¹ und R²¹²: unabhängig voneinander für Wasserstoff oder Methyl stehen,
- Het: für Benzthiazol-2-yl oder 4-Pyridyl steht,
- Y: für C-R²¹³ steht,
- Y⁵ und Y⁶: für N stehen,
- R²¹³: für Wasserstoff, Cyano, CO-NH₂, Acetyl oder CO-O-Methyl steht,
- R²¹⁴ und R²¹⁵: unabhängig voneinander für Methyl, Ethyl, Butyl, Cyanethyl, Benzyl, Phenyl oder Acetyl stehen,
- R²¹⁶: für Wasserstoff, Methyl oder Methoxy steht,
- R²²⁰ und R²¹¹: unabhängig voneinander für Wasserstoff, Methyl, Ethyl, Propyl oder Butyl, stehen,
- R²²² und R²²⁴: für Wasserstoff stehen,
- R²²³: für Wasserstoff steht,
- R²²⁵: für Wasserstoff steht,
- y: für 4 steht,
- R²²⁶: für CHO steht,
- R²⁴⁸: für Methyl steht,
- R²⁴⁹: für Ethyl oder Phenyl steht oder
- R²⁴⁸ und R²⁴⁹: gemeinsam für eine o-C₆H₄-CH=CH-CH=CH-Brücke stehen.

Ebenfalls ganz besonders bevorzugt sind lichtabsorbierende Verbindungen der Formeln (CCI), (CCV), (CCVI) und (CCVIII).

Ebenfalls bevorzugt sind lichtabsorbierende Verbindungen der Formeln (CCIX) bis (CCXVIII),
worin
- R²²⁸ bis R²³¹: unabhängig voneinander für Chlor oder Cyano stehen,
wobei zwei dieser Reste auch für Wasserstoff, Methyl, Ethyl, Propyl, Butyl, Pentyl, Hexyl, Octyl, Decyl, Hydroxyethyl, Methoxyethyl, Ethoxypropyl, Methoxy, Ethoxy, Propoxy, Butoxy, Pentoxy, Hexoxy, Octoxy, Decoxy, Methoxyethoxy, Methoxycarbonyl, Ethoxycarbonyl, Propoxycarbonyl, Butoxycarbonyl, Pentoxycarbonyl, Hexoxycarbonyl, Octoxycarbonyl oder Decoxycarbonyl stehen können,
- w: für 1 steht,
- R²³²: für Phenyl, Tolyl, Methoxyphenyl, Pyrazol-1-yl, 4-Chlor-pyrazol-2-yl oder 1,2,4-Triazol-1- oder -4-yl steht,
- R²³³: für Wasserstoff, Methoxy, Ethoxy, 4-Phenyl-5-methyl-1,2,3-triazol-2-yl, 4-Ethyl-5-methyl-1 , 2, 3-triazol-2-yl, Dimethylamino oder Diethylamino steht,
- R²³⁴ und R²³⁵: für Wasserstoff stehen oder gemeinsam für eine -CH=CH-CH=CH-Brücke stehen,
- R²³⁷ und R²⁴³: für Wasserstoff stehen,
- R²³⁸ und R²³⁹: unabhängig voneinander für Chlor, Acetyl, Propionyl, Methylsulfonyl oder SO₂-NN-(CH₂)₃-N(CH₃)₃⁺ An stehen,
- R²⁴⁰ und R²⁴¹: unabhängig voneinander für Wasserstoff, Chlor, Brom, Methyl, Ethyl, Propyl oder Butyl stehen,
- v: für für 1 oder 2 steht,
- Z: für O oder N-R²⁴⁴ steht,
- D: für -CH=CH-, 1,4-Phenylen, Thiophen-2,5-diyl oder Furan-2,5-diyl steht,
- R²⁴²: für Wasserstoff, Cyano oder CO-O-Methyl, -Ethyl, -Propyl oder -Butyl steht,
- z: für 0 oder 1 steht und
- W: für N oder CH steht,
- R²⁴⁴ und R²⁴⁵: unabhängig voneinander für Methyl, Ethyl, Propyl, Butyl, Pentyl, Hexyl, Octyl, Decyl, Hydroxyethyl, Methoxyethyl, Ethoxypropyl, Benzyl oder Phenylpropyl steht,
- An⁻: für ein Anion steht,
- Kat⁺: für Na⁺, Li⁺, NH₄⁺ oder N(Methyl, Ethyl, Propyl, Butyl, Pentyl, Hexyl, Octyl, Decyl, Hydroxyethyl, Methoxyethyl, Ethoxypropyl)₄⁺ steht,
- E: für CH oder N steht,
- R²⁴⁶ und R²⁴⁷: unabhängig voneinander für (Methyl, Ethyl, Propyl, Butyl, Pentyl, Hexyl, Octyl, Decyl, Hydroxyethyl, Methoxyethyl, Ethoxypropyl)-amino, Di(Methyl, Ethyl, Propyl, Butyl, Pentyl, Hexyl, Octyl, Decyl, Hydroxyethyl, Methoxyethyl, Ethoxypropyl)-amino, Anilino, Sulfoanilino, Morpholino, Piperidino oder Pyrrolidino steht,
wobei die Alkyl- und Alkoxyreste geradkettig oder verzweigt sein können, z. B. n-Butyl, 2-Butyl, tert.-Butyl und teil- oder perfluoriert sein können.

Ebenfalls besonders bevorzugt sind lichtabsorbierende Verbindungen der Formeln (CCIX) bis (CCXVIII),
worin
- R²²⁸ und R²²⁹: unabhängig voneinander für Wasserstoff, Methyl, Ethyl, Propyl, Butyl, Methoxy, Ethoxy, Propoxy, Butoxy, Methoxyethoxy, Phenoxy, Methoxycarbonyl, Ethoxycarbonyl oder Propoxycarbonyl stehen,
- R²³⁰ und R²³¹: für Cyano stehen,
- w: für 1 steht,
- R²³²: für Phenyl oder 4-Chlor-pyrazol-1-yl steht,
- R²³³: für Methoxy, 4-Phenyl-5-methyl-1,2,3-triazol-2-yl, 4-Ethyl-5-methyl-1,2,3-triazol-2-yl, Dimethylamino oder Diethylamino steht,
- R²³⁴ und R²³⁵: für Wasserstoff stehen,
- R²³⁷ und R²⁴³: für Wasserstoff stehen,
- R²³⁸: für SO₂-NH-(CH₂)₃-N(CH₃)₃⁺ An steht,
- R²³⁹: für Chlor oder Brom steht,
- R²⁴⁰ und R²⁴¹: gleich sind und für Wasserstoff, Methyl oder tert.-Butyl stehen,
- Z: für O steht,
- D: für -CH=CH- oder Thiophen-2,5-diyl steht,
- R²⁴²: für CO-O-Methyl, -Ethyl oder -Butyl steht und
- z: für 0 steht.
- W: für N oder CH steht,
- R²⁴⁴ und R²⁴⁵: unabhängig voneinander für Methyl, Ethyl, Propyl, Butyl, Hydroxyethyl, Methoxyethyl, Ethoxypropyl, Benzyl oder Phenylpropyl steht,
- An: für ein Anion steht,
- Kat⁺: für Na⁺, Li⁺, NH₄⁺ oder N(Methyl, Ethyl, Propyl, Butyl )₄⁺ steht,
- E: für CH oder N steht,
- R²⁴⁶ und R²⁴⁷: unabhängig voneinander für (Methyl, Ethyl, Propyl, Butyl, Hydroxyethyl, Methoxyethyl, Ethoxypropyl)-amino, Di(Methyl, Ethyl, Propyl, Butyl, Hydroxyethyl, Methoxyethyl, Ethoxypropyl)-amino; Anilino, Morpholino, Piperidino oder Pyrrolidino steht,

Ebenfalls ganz besonders bevorzugt sind, die lichtabsorbierende Verbindungen der Formeln (CCIX), (CCX), (CCXII) und (CCXVII).

Ebenfalls bevorzugt ,sind lichtabsorbierende Verbindungen der Formeln (CCCI) bis (CCCXV)
worin
- R³⁰⁰, R³⁰¹ und R³⁰³: unabhängig voneinander für Wasserstoff, Methyl, Ethyl, Propyl, Butyl, Pentyl, Hexyl, Octyl, Decyl, Hydroxyethyl, Methoxyethyl, Ethoxypropyl, Benzyl oder Phenylpropyl steht,
- m: für eine ganze Zahl von 0 bis 5 steht,
- u: für eine ganze Zahl von 1 bis 2 steht, wobei für u > 1 die Reste unterschiedlich sein können,
- R³⁰²: für Wasserstoff, Methyl, Ethyl, Propyl, Butyl, Pentyl, Hexyl, Octyl, Decyl, Hydroxyethyl, Methoxyethyl, Ethoxypropyl, Benzyl oder Phenylpropyl, Methoxycarbonyl, Ethoxycarbonyl, Propoxycarbonyl, Butoxycarbonyl, Pentoxycarbonyl, Hexoxycarbonyl, Octoxycarbonyl oder Decoxycarbonyl steht,
- R³⁰⁴: für Wasserstoff, Chlor, Cyano, Nitro, Methyl, Ethyl, Propyl, Butyl, Pentyl, Hexyl, Octyl, Decyl, Hydroxyethyl, Methoxyethyl, Ethoxypropyl, Methoxy, Ethoxy, Propoxy, Butoxy, Pentoxy, Hexoxy, Octoxy, Decoxy, Methoxyethoxy, Dimethylamino, Diethylamino, Dipropylamino, Dibutylamino, N-Methyl-N-cyanethylamino, Methoxycarbonyl, Ethoxycarbonyl, Propoxycarbonyl, Butoxycarbonyl, Pentoxycarbonyl, Hexoxycarbonyl, Octoxycarbonyl oder Decoxycarbonyl steht,
- R³⁰⁵: für Wasserstoff, Methyl, Ethyl, Propyl, Butyl, Hydroxyethyl, Methoxyethyl, Ethoxypropyl, Benzyl oder Phenylpropyl, Methoxy, Ethoxy, Propoxy, Butoxy, Methoxyethoxy, Methoxycarbonyl, Ethoxycarbonyl, Propoxycarbonyl oder Butoxycarbonyl steht,
- R³⁰⁶ und R³⁰⁷: unabhängig voneinander für Wasserstoff, Methyl, Ethyl, Propyl, Butyl, Pentyl, Hexyl, Octyl, Decyl, Hydroxyethyl, Methoxyethyl, Ethoxypropyl, Benzyl oder Phenylpropyl, Phenyl, Tolyl, Methoxyphenyl oder Chlorphenyl steht,
- R³⁰⁸: für Methyl, Ethyl, Propyl, Butyl, Pentyl, Hexyl, Octyl, Decyl, Hydroxyethyl, Methoxyethyl, Ethoxypropyl, Benzyl oder Phenylpropyl, Methoxy, Ethoxy, Propoxy, Butoxy, Pentoxy, Hexoxy, Octoxy, Decoxy, Methoxyethoxy, Methoxycarbonyl, Ethoxycarbonyl, Propoxycarbonyl, Butoxycarbonyl, Pentoxycarbonyl, Hexoxycarbonyl, Octoxycarbonyl, Decoxycarbonyl, Carbonsäure, (Methyl, Ethyl, Propyl, Butyl, Pentyl, Hexyl, Octyl, Decyl, Hydroxyethyl, Methoxyethyl, Ethoxypropyl, Benzyl oder Phenylpropyl)-aminocarbonyl oder Di-(Methyl, Ethyl, Propyl, Butyl, Pentyl, Hexyl, Octyl, Decyl, Hydroxyethyl, Methoxyethyl, Ethoxypropyl, Benzyl oder Phenylpropyl)- aminocarbonyl steht,
- R³⁰⁹ bis R³¹⁴: unabhängig voneinander für Wasserstoff, Phenyl, Tolyl, Methoxyphenyl oder Chlorphenyl, Carbonsäure, Cyano, Methyl, Ethyl, Propyl, Butyl, Pentyl, Hexyl, Octyl, Decyl, Hydroxyethyl, Methoxyethyl, Ethoxypropyl, Methoxy, Ethoxy, Propoxy, Butoxy, Pentoxy, Nexoxy, Octoxy, Decoxy, Methoxyethoxy, Methoxycarbonyl, Ethoxycarbonyl, Propoxycarbonyl, Butoxycarbonyl, Pentoxycarbonyl, Hexoxycarbonyl, Octoxycarbonyl oder Decoxycarbonyl steht,
- R³¹⁵ und R³¹⁶: unabhängig voneinander für Carbonsäure, Methoxy, Ethoxy, Propoxy, Butoxy, Pentoxy, Hexoxy, Octoxy, Decoxy, Methoxyelhoxy, Methoxycarbonyl, Ethoxycarbonyl, Propoxycarbonyl, Butoxycarbonyl, Pentoxycarbonyl, Hexoxycarbonyl, Octoxycarbonyl, Decoxycarbonyl oder Cyano stehen oder R³¹⁵ und R³¹⁶ gemeinsam mit dem sie verbindenden C-Atom 5,5-Dimethylcyclohexan-1,3-dion-2-yliden, 5-Phenylcyclohexan-1,3-dion-2-yliden oder 2,2-Dimethyl-1,3-dioxan-4,6-dion-5-yliden bedeuten,
- R³¹⁷ bis R³²⁴: unabhängig voneinander für Wasserstoff, Hydroxy, Carbonsäure, Phenoxy, Methyl, Ethyl, Propyl, Butyl, Pentyl, Hexyl, Octyl, Decyl, Hydroxyethyl, Methoxyethyl, Ethoxypropyl, Methoxy, Ethoxy, Propoxy, Butoxy, Pentoxy, Hexoxy, Octoxy, Decoxy, Methoxyethoxy, Methoxycarbonyl, Ethoxycarbonyl, Propoxycarbonyl, Butoxycarbonyl, Pentoxycarbonyl, Hexoxycarbonyl, Octoxycarbonyl, Decoxycarbonyl oder Cyano steht,
wobei die Alkyl- und Alkoxyreste geradkettig oder verzweigt sein können, z.B. n-Butyl, 2-Butyl, tert.-Butyl und teil- oder perfluoriert sein können.

Ebenfalls besonders bevorzugt sind lichtabsorbierende Verbindungen der Formeln (CCCI) bis (CCCXV),
worin
- R³⁰⁰, R³⁰¹ und R³⁰³: unabhängig voneinander für Wasserstoff, Methyl, Ethyl, Propyl, Butyl, Hydroxyethyl, Methoxyethyl, Ethoxypropyl, steht,
- m: für eine ganze Zahl von 3 bis 5 steht,
- u: für 1 steht,
- R³⁰²: für Wasserstoff, Methyl, Ethyl, Propyl, Butyl, Hydroxyethyl, Methoxyethyl, Ethoxypropyl, Methoxycarbonyl, Ethoxycarbonyl, Propoxycarbonyl oder Butoxycarbonyl steht,
- R³⁰⁴: für Wasserstoff, Cyano, Nitro, Methyl, Ethyl, Propyl, Butyl, Pentyl, Hexyl, Hydroxyethyl, Methoxyethyl, Ethoxypropyl, Methoxy, Ethoxy, Propoxy, Butoxy, Pentoxy, Hexoxy, Methoxyethoxy, Dimethylamino, Diethylamino, N-Methyl-N-cyanethylamino, Methoxycarbonyl, Ethoxycarbonyl, Propoxycarbonyl, Butoxycarbonyl, Pentoxycarbonyl oder Hexoxycarbonyl steht,
- R³⁰⁵: für Wasserstoff, Methyl, Ethyl, Propyl, Butyl, Hydroxyethyl, Methoxyethyl, Ethoxypropyl, Methoxy, Ethoxy, Propoxy, Butoxy, Methoxyethoxy, Phenoxy, Methoxycarbonyl, Ethoxycarbonyl, Propoxycarbonyl oder Butoxycarbonyl steht,
- R³⁰⁶ und R³⁰⁷: unabhängig voneinander für Wasserstoff, Methyl, Ethyl, Propyl, Butyl, Hydroxyethyl, Methoxyethyl, Ethoxypropyl, Methoxycarbonyl, Ethoxycarbonyl, Propoxycarbonyl, Butoxycarbonyl oder Phenyl steht,
- R³⁰⁸: für Methyl, Ethyl, Propyl, Butyl, Pentyl, Hexyl, Hydroxyethyl, Methoxyethyl, Ethoxypropyl, Methoxy, Ethoxy, Propoxy, Butoxy, Pentoxy, Hexoxy, Methoxyethoxy, Methoxycarbonyl, Ethoxycarbonyl, Propoxycarbonyl, Butoxycarbonyl, Pentoxycarbonyl, Hexoxycarbonyl, (Methyl, Ethyl, Propyl, Butyl, Pentyl, Hexyl, Hydroxyethyl, Methoxyethyl, Ethoxypropyl,)-aminocarbonyl oder Di-(Methyl, Ethyl, Propyl, Butyl, Pentyl, Hexyl, Hydroxyethyl, Methoxyethyl, Ethoxypropyl)- aminocarbonyl steht,
- R³⁰⁹ bis R³¹⁴: unabhängig voneinander für Wasserstoff, Phenyl, Tolyl, Methoxyphenyl, Cyano, Methyl, Ethyl, Propyl, Butyl, Pentyl, Hexyl, Hydroxyethyl, Methoxyethyl, Ethoxypropyl, Methoxy, Ethoxy, Propoxy, Butoxy, Pentoxy, Hexoxy, Methoxyethoxy, Methoxycarbonyl, Ethoxycarbonyl, Propoxycarbonyl, Butoxycarbonyl, Pentoxycarbonyl oder Hexoxycarbonyl, steht und wobei wenigsten 2 dieser Reste für Wasserstoff stehen,
- R³¹⁵ und R³¹⁶: unabhängig voneinander für Methoxycarbonyl, Ethoxycarbonyl, Propoxycarbonyl, Butoxycarbonyl oder Cyano stehen,
- R³¹⁷ bis R³²⁴: unabhängig voneinander für Wasserstoff, Hydroxy, Methyl, Ethyl, Propyl, Butyl, Pentyl, Methoxy, Ethoxy, Propoxy, Butoxy, Pentoxy, Hexoxy, Octoxy, Decoxy, Melhoxyethoxy, Phenoxy, Methoxycarbonyl, Ethoxycarbonyl, Propoxycarbonyl, Butoxycarbonyl, Pentoxycarbonyl, oder Cyano steht und wobei wenigstens 4 Reste für Wasserstoff stehen und wenigstens einer der Reste R³¹⁸ oder R³¹² für Methoxy, Ethoxy, Propoxy, Butoxy, Pentoxy, Hexoxy, Octoxy, Decoxy, Methoxyethoxy oder Phenoxy steht.

Ebenfalls ganz besonders bevorzugt sind lichtabsorbierende Verbindungen der Formeln (CCCI) bis (CCCIV), (CCCXI) und (CCCIX).

Ebenfalls bevorzugt sind lichtabsorbierende Verbindungen der Formeln (CDI) bis (CDXIX)
worin
- R⁴⁰⁰: für Wasserstoff, Methyl, Ethyl, Propyl, Butyl, Pentyl, Hexyl, Octyl, Decyl, Hydroxyethyl, Methoxyethyl, Ethoxypropyl, Benzyl, Methoxy, Ethoxy, Propoxy, Butoxy, Pentoxy, Hexoxy, Octoxy, Decoxy oder Methoxyethoxy steht,
- t: für eine ganze Zahl von 1 bis 2 steht, wobei für t > 1 die Reste verschieden sein dürfen,
- R⁴⁰¹ und R⁴⁰²: unabhängig voneinander für Wasserstoff, Methyl, Ethyl, Propyl, Butyl, Pentyl, Hexyl, Octyl, Decyl, Hydroxyethyl, Methoxyethyl, Ethoxypropyl, Benzyl oder Phenylpropyl stehen,
- R⁴⁰³: für Wasserstoff, Phenyl, Tolyl, Methoxyphenyl, Methyl, Ethyl, Propyl, Butyl, Pentyl, Hexyl, Octyl, Decyl, Hydroxyethyl, Methoxyethyl, Ethoxypropyl, Benzyl oder Phenylpropyl steht,
- R⁴⁰⁴ und R⁴⁰⁵: unabhängig voneinander für Methyl, Ethyl, Propyl, Butyl, Pentyl, Hexyl, Octyl, Decyl, Hydroxyethyl, Methoxyethyl, Ethoxypropyl, Benzyl, Phenylpropyl, Phenyl, Tolyl, Methoxyphenyl oder NR⁴⁰⁴R⁴⁰⁵ für Morpholino, Piperidino oder Pyrrolidino stehen,
- R⁴⁰⁶: für Wasserstoff, Cyano, Nitro, Carbonsäure, Methyl, Ethyl, Propyl, Butyl, Pentyl, Hexyl, Octyl, Decyl, Hydroxyethyl, Methoxyethyl, Ethoxypropyl, Benzyl oder Phenylpropyl, Methoxy, Ethoxy, Propoxy, Butoxy, Pentoxy, Hexoxy, Octoxy, Decoxy, Methoxyethoxy, Methoxycarbonyl, Ethoxycarbonyl, Propoxycarbonyl, Butoxycarbonyl, Pentoxycarbonyl, Hexoxycarbonyl, Octoxycarbonyl oder Decoxycarbonyl steht,
- R⁴⁰⁷ und R⁴⁰⁸: unabhängig voneinander für Wasserstoff Methyl, Ethyl, Propyl, Butyl, Pentyl, Hexyl, Octyl, Decyl, Hydroxyethyl, Methoxyethyl, Ethoxypropyl, Benzyl oder Phenylpropyl steht,
wobei die Alkyl- und Alkoxyreste geradkettig oder verzweigt sein können, z.B. n-Butyl, 2-Butyl, tert.-Butyl und teil- oder perfluoriert sein können.

Ebenfalls besonders bevorzugt sind lichtabsorbierende Verbindungen der Formeln (CDI) bis (CDXIX)
worin
- R⁴⁰⁰: für Wasserstoff, Methyl, Ethyl, Propyl, Butyl, Pentyl, Hexyl, Hydroxyethyl, Methoxyethyl, Ethoxypropyl, Benzyl, Methoxy, Ethoxy, Propoxy, Butoxy, Pentoxy, Hexoxy oder Methoxyethoxy steht,
- t: für 1 steht,
- R⁴⁰¹ und R⁴⁰²: unabhängig voneinander für Wasserstoff, Methyl, Ethyl, Propyl, Butyl, Hydroxyethyl, Methoxyethyl oder Ethoxypropyl stehen,
- R⁴⁰³: für Wasserstoff, Phenyl, Tolyl, Methoxyphenyl, Methyl, Ethyl, Propyl, Butyl; Hydroxyethyl, Methoxyethyl oder Ethoxypropyl steht,
- R⁴⁰⁴ und R⁴⁰⁵: unabhängig voneinander für Methyl, Ethyl, Propyl, Butyl, Hydroxyethyl, Methoxyethyl, Ethoxypropyl, Benzyl oder Phenyl stehen,
- R⁴⁰⁶: für Wasserstoff, Cyano, Nitro, Methyl, Ethyl, Propyl, Butyl, Pentyl, Hexyl, Hydroxyethyl, Methoxyethyl, Ethoxypropyl, Methoxy, Ethoxy, Propoxy, Butoxy, Pentoxy, Hexoxy, Methoxyethoxy, Methoxycarbonyl, Ethoxycarbonyl, Propoxycarbonyl, Butoxycarbonyl, Pentoxycarbonyl oder Hexoxycarbonyl steht,
- R⁴⁰⁷ und R⁴⁰⁸ u: nabhängig voneinander für Wasserstoff Methyl, Ethyl, Propyl, Butyl, Pentyl, Hexyl, Hydroxyethyl, Methoxyethyl, Ethoxypropyl, Benzyl oder Phenylpropyl steht.

Ebenfalls ganz besonders bevorzugt sind lichtabsorbierende Verbindungen der Formeln (CDI), (CDVI), (CDVII), (CDVIII), (CDXII) und (CDXVII).

Mischungen der oben genannten lichtabsorbierende Verbindungen können ebenfalls eingesetzt werden, z.B. um die spektralen Eigenschaften anzupassen und/oder insbesondere um die filmbildenden Eigenschaften zu optimieren.

Beispielsweise ergibt ergibt eine Mischung aus 75% der Verbindung der Formel 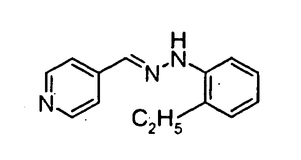 und 25 % der Verbindung der Formel 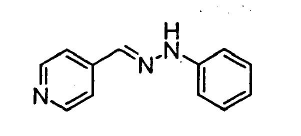 einen besser amorphen Film als jede der beiden Komponenten einzeln.

Beispielsweise ergibt eine Mischung aus 50 % der Verbindung der Formel 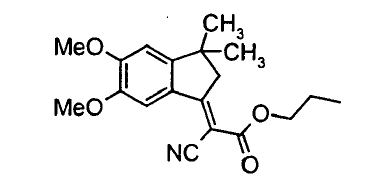 und 50 % der Verbindung der Formel 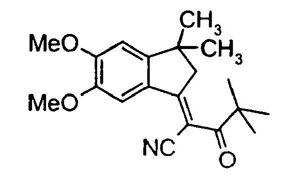 einen stabileren amorphen Film als die Einzelkomponenten.

Die Herstellung des erfindungsgemäßen einmal beschreibbaren optischen Datenträger wird durch Spin Coating der lichtabsorbierenden Verbindungen selbst oder in Kombination mit anderen lichtabsorbierenden Verbindungen oder mit geeigneten Lösungsmitteln auf ein transparentes Substrat erreicht. Das Substrat kann davor schon mit einer durch Sputtern oder Aufdampfen erzeugten Reflexionsschicht versehen worden sein. Für das Coating wird die lichtabsorbierende Verbindung vorzugsweise mit oder ohne Additive in einem geeigneten Lösungsmittel oder Lösungsmittelgemisch gelöst, so dass die lichtabsorbierende Verbindung 100 oder weniger Gewichtsanteile auf 100 Gewichtsanteile Lösungsmittel ausmacht. Anschließend kann diese primäre Lösung mit einem weitern geeigneten Lösungsmittel verdünnt werden, so dass die lichtabsorbierende Verbindung 20 oder weniger Gewichtsanteile auf 100 Gewichtsanteile Lösungsmittel ausmacht. Die beschreibbare Informationsschicht wird danach gegebenenfalls entweder bei reduziertem Druck durch Sputtern oder Aufdampfen metallisiert und anschließend mit einem Schutzlack versehen oder statt eines Schutzlackes mit einem zweiten Substrat oder gegebenenfalls mit einer Zwischenschicht und einer Abdeckschicht verklebt.

Beispielsweise wurden 3 Teile der Verbindung der Formel 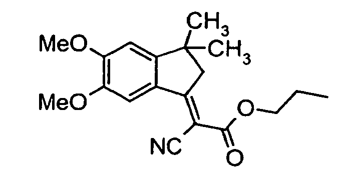 und 3 Teile der Verbindung der Formel 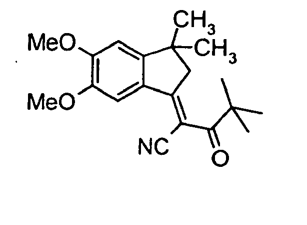 in 94 Teilen 1-Butanol bei Raumtemperatur gelöst. Die Lösung wurde auf ein Polycarbonatsubstratscheibe von 1.2 mm Dicke und 60 mm Radius durch Spin Coating aufgebracht und bildet dort einen amorphen Film. Danach wurde die Schicht durch Aufdampfen einer 50 nm dicken Schicht aus Silber metallisiert.

### Beispiele:

| | λₘₐₓ₁ | λ_{1/2} | λ_{1/10} | ε |
|---|---|---|---|---|
| 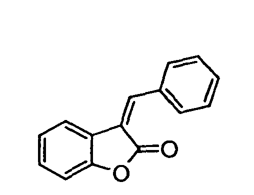 | 346 | 385 | 410 | |
| | in Methylenchlorid | | | |
| 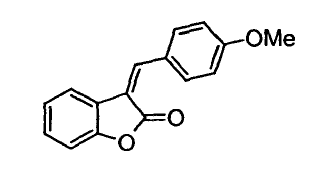 | 373 | 404 | 425 | |
| | in Methylenchlorid | | | |
| 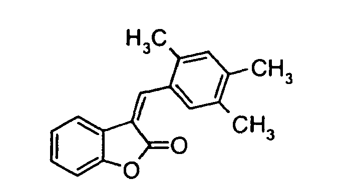 | 371 | 404 | 423 | 12830 |
| | in Dioxan | | | |
| 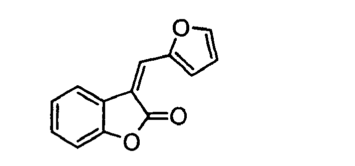 | 355 | 387 | 409 | 16700 |
| | in Dioxan | | | |
| 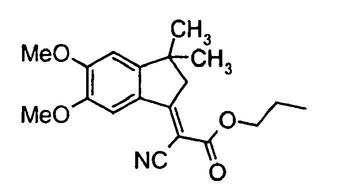 | 363/376 | 390* | 399* | 25200 |
| | in Dioxan | | | |
| * bezogen auf λₘₐₓ₁ bei 376 nm | | | | |
| 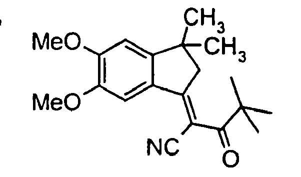 | 372 | 399 | 411 | 22330 |
| | in Dioxan | | | |
| 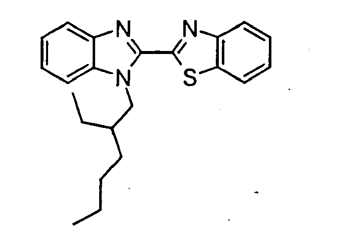 | 342/360 | 366* | 371* | 24067 |
| | in Dioxan | | | |
| * bezogen auf λₘₐₓ₁ bei 360 nm | | | | |
| 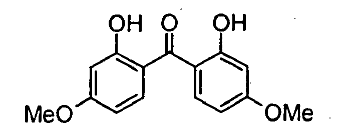 | 346 | 384 | 407 | |
| | in Methanol | | | |
| 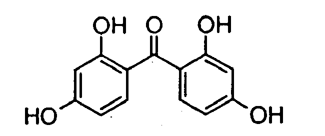 | 347 | 387 | 407 | |
| | in Methanol | | | |
| 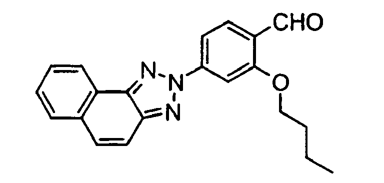 | 356/373 | 381 | 387* | 32600 |
| | in | | | |
| | Dimethylformamid | | | |
| bezogen auf λₘₐₓ₁ bei 373 nm | | | | |
| 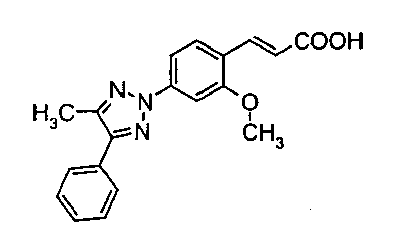 | 345 | 367 | 380 | 31300 |
| | in | | | |
| | Dimethylformamid | | | |
| 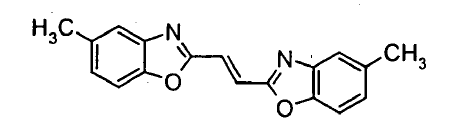 | 360 | 387 | 394 | 40160 |
| | in | | | |
| | Dimethylformamid | | | |
| 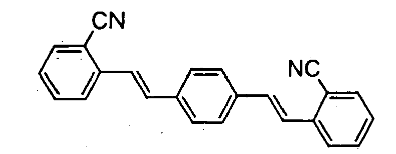 | 362 | 388 | 400 | 43560 |
| | in | | | |
| | Dimethylformamid | | | |
| 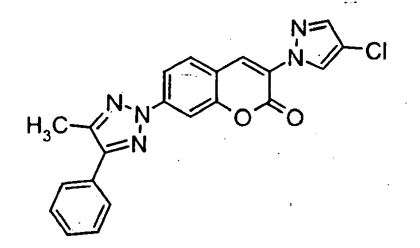 | 367 | 392 | 404 | 46806 |
| | in | | | |
| | Dimethylformamid | | | |
| 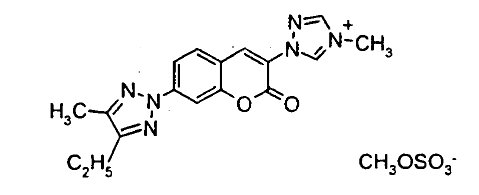 | 361 | 390 | 408 | 33504 |
| | in | | | |
| | Dimethylformamid | | | |
| 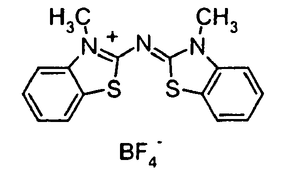 | 375 | 386 | 393 | |
| | in Methanol | | | |
| 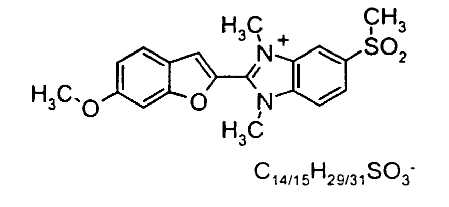 | 365 | 390 | 405 | 39340 |
| | in Methanol | | | |
| 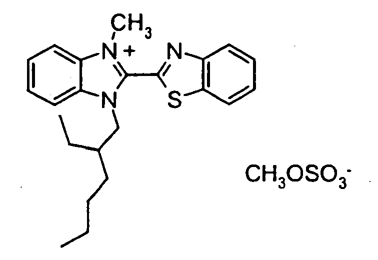 | | | | |
| 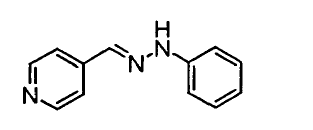 | 355 | 380 | 396 | 24880 |
| | in Dioxan | | | |
| 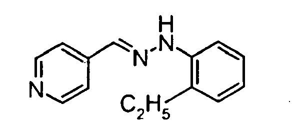 | 356 | 383 | 402 | |
| | in Dioxan | | | |
| 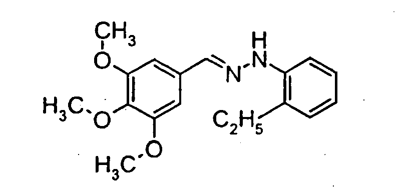 | 347 | 372 | 388 | 23360 |
| | in Dioxan | | | |
| 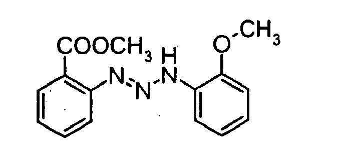 | 370 | 400 | 419 | 21720 |
| | in Dioxan | | | |
| 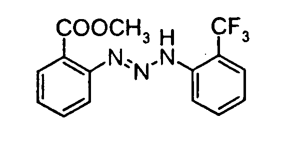 | 360 | 390 | 409 | |
| | in Dioxan | | | |
| 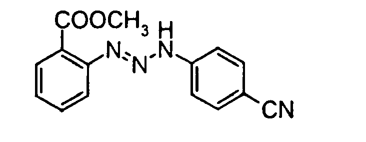 | 370 | 399 | 420 | 28200 |
| | in Dioxan | | | |
| 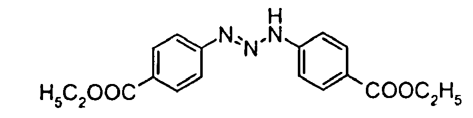 | 371 | 401 | 421 | |
| | in Dioxan | | | |
| 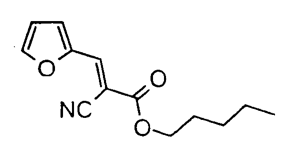 | 363 | 383 | 394 | |
| | in Dioxan | | | |
| 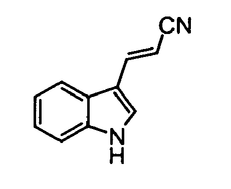 | | | | |
| 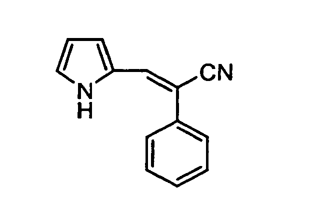 | 361 | 386 | 401 | 29680 |
| | in Dioxan | | | |
| 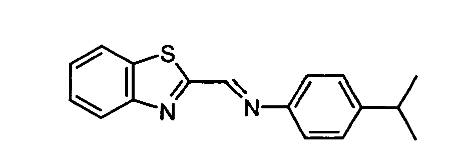 | 355 | 383 | 403 | |
| | in Dioxan | | | |
| 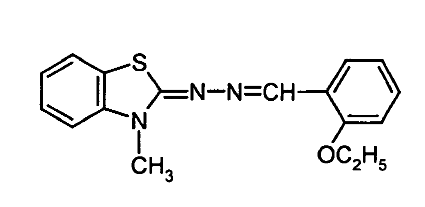 | 363 | 390 | 400 | 28256 |
| | in Dioxan | | | |
| 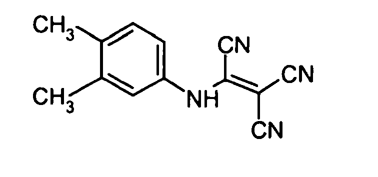 | 349 | 389 | 422 | |
| | in Dioxan | | | |
| 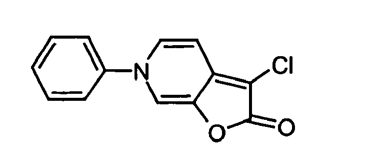 | 368 | 392 | 400 | 31770 |
| | in Dioxan | | | |
| 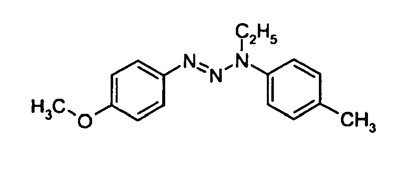 | 358 | 387 | 407 | 21710 |
| | in Dioxan | | | |
| 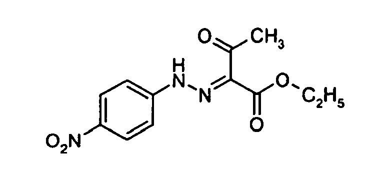 | 372 | 400 | 420 | 31440 |
| | in Dioxan | | | |

Die Informationsschicht kann neben der lichtabsorbierenden Verbindung noch Binder, Netzmittel, Stabilisatoren, Verdünner und Sensibilisatoren sowie weitere Bestandteile enthalten.

Die Substrate können aus optisch transparenten Kunststoffen hergestellt sein, die, wenn notwendig, eine Oberflächenbehandlung erfahren haben. Bevorzugte Kunststoffe sind Polycarbonate und Polyacrylate, sowie Polycycloolefine oder Polyolefine. Die lichtabsorbierende Verbindung kann in niedriger Konzentration auch zum Schutz des Polymersubstrates und dessen Lichtstabilisierung eingesetzt werden.

Die Reflektionsschicht kann aus jedem Metall bzw. Metallegierung, die üblicherweise für beschreibbare optische Datenträger benutzt werden, hergestellt sein. Geeignete Metalle bzw. Metallegierungen können aufgedampft und gesputtert werden und enthalten z.B. Gold, Silber, Kupfer, Aluminium und deren Legierungen untereinander oder mit anderen Metallen.

Der Schutzlack über der Reflektionsschicht kann aus UV-härtendene Acrylaten bestehen.

Eine Zwischenschicht, die die Reflektionsschicht vor Oxidation schützt, kann ebenfalls vorhanden sein.

Mischungen der oben genannten lichtabsorbierenden Verbindung können ebenfalls eingesetzt werden.

Die Erfindung betrifft weiterhin ein Verfahren zur Herstellung der erfindungsgemäßen optischen Datenträger, das dadurch gekennzeichnet ist, dass man ein transparentes Substrat, dass gegebenenfalls zuvor mit einer Reflektionsschicht versehen wurde mit der lichtabsorbierenden Verbindung gegebenenfalls in Kombination mit geeigneten Bindern und gegebenenfalls geeigneten Lösungsmitteln mittels Spin-Coating beschichtet und gegebenenfalls mit einer Reflexionsschicht, weiteren Zwischenschichten und gegebenenfalls einer Schutzschicht oder einem weiteren Substrat oder einer Abdeckschicht versieht.

Die Beschichtung des Substrates mit der lichtabsorbierenden Verbindung gegebenenfalls in Kombination mit Farbstoffen, Bindern und/oder Lösungsmitteln erfolgt durch Spin Coating.

Für das Coating wird der lichtabsorbierenden Verbindung vorzugsweise mit oder ohne Additive in einem geeigneten Lösungsmittel oder Lösungsmittelgemisch gelöst, so daß der UV-Absorber 100 oder weniger, beispielsweise 10 bis 2 Gewichtsanteile auf 100 Gewichtsanteile Lösungsmittel ausmacht. Die beschreibbare Informationsschicht wird danach vorzugsweise bei reduziertem Druck durch Sputtern oder Aufdampfen metallisiert (Reflexionsschicht) und eventuell anschließend mit einem Schutzlack (Schutzschicht) oder einem weiteren Substrat oder einer Abdeckschicht versehen. Mehrschichtige Anordnungen mit teiltransparenten Reflektionsschicht sind auch möglich.

Lösungsmittel bzw. Lösungsmittelgemische für das Beschichten der lichtabsorbierenden Verbindungen oder ihrer Mischungen mit Additiven und/oder Bindemitteln werden einerseits nach ihrem Lösungsvermögen für den lichtabsorbierenden Verbindung und die anderen Zusätze und andererseits nach einem minimalen Einfluss auf das Substrat ausgewählt. Geeignete Lösungsmittel, die einen geringen Einfluss auf das Substrat haben, sind beispielsweise Alkohole, Ether, Kohlenwasserstoffe, halogenierte Kohlenwasserstoffe, Cellosolve, Ketone. Beispiele solcher Lösungsmittel sind Methanol, Ethanol, Propanol, 2,2,3,3-Tetrafluorpropanol, Butanol, Diacetonalkohol, Benzylalkohol, Tetrachloroethan, Dichlormethan, Diethylether, Dipropylether, Dibutylether, Methyl-tert.-butylether, Methylcellosolve, Ethylcellosolve, 1-Methyl-2-propanol, Methylethylketon, 4-Hydroxy-4-methyl-2-Pentanon, Hexan, Cyclohexan, Ethylcyclohexan, Octan, Benzol, Toluol, Xylol. Bevorzugte Lösungsmittel sind Kohlenwasserstoffe und Alkohole, da sie den geringsten Einfluß auf das Substrat ausüben.

Geeignete Additive für die beschreibbare Informationsschicht sind Stabilisatoren, Netzmittel, Binder, Verdünner und Sensibilisatoren.

## Patentansprüche

1. Einmal beschreibbarer optischer Datenträger enthaltend ein transparentes gegebenenfalls schon mit einer Reflektionsschicht beschichtetes Substrat, auf dessen Oberfläche eine mit Licht beschreibbare Informationsschicht, gegebenenfalls eine Reflexionsschicht und gegebenenfalls eine Schutzschicht oder eine weiteres Substrat oder eine Abdeckschicht aufgebracht sind, der mit blauem Licht, vorzugsweise Laserlicht, beschrieben und gelesen werden kann, wobei die Informationsschicht eine lichtabsorbierende Verbindung und gegebenenfalls ein Bindemittel enthält, **dadurch gekennzeichnet, dass** die lichtabsorbierende Verbindung ein Absorptionsmaximum λₘₐₓ₁ von 345 bis 400 nm besitzt und die Wellenlänge λ_{1/2}, bei der die Extinktion in der langwelligen Flanke des Absorptionsmaximums der Wellenlänge λₘₐₓ₁ die Hälfte des Extinktionswerts bei λₘₐₓ₁ beträgt, und die Wellenlänge λ_{1/10}, bei der die Extinktion in der langwelligen Flanke des Absorptionsmaximums der Wellenlänge λₘₐₓ₁ ein Zehntel des Extinktionswerts bei λₘₐₓ₁ beträgt, beide gemeinsam im Bereich von 380 bis 430 nm liegen und wobei durch Spin Coating die lichtabsorbierende Verbindung selbst oder in Kombination mit anderen lichtabsorbierenden Verbindungen oder mit geeigneten Lösungsmitteln auf ein transparentes Substrat aufgebracht wird.

2. Optischer Datenträger gemäß Anspruch 1, **dadurch gekennzeichnet, dass** die lichtabsorbierende Verbindung im Bereich größerer Wellenlängen als λₘₐₓ₁ bis zu einer Wellenlänge von 500 nm kein weiteres Absorptionsmaximum λₘₐₓ₂ aufweist.

3. Optischer Datenträger gemäß einem oder beiden der Ansprüche 1 und 2, **dadurch gekennzeichnet, dass** die lichtabsorbierende Verbindung im Bereich kürzerer Wellenlängen als λₘₐₓ₁ weitere, bevorzugt starke Absorptionen und Absorptionsmaxima aufweist.

4. Optischer Datenträger gemäß einem oder mehrerem der Ansprüche 1 bis 3, **dadurch gekennzeichnet, dass** beim Absorptionsmaximum λₘₐₓ₁ der molare Extinktionskoeffizient ε der lichtabsorbierenden Verbindung > 10000 1/mol cm ist.

5. Optische Datenträger gemäß einem oder mehreren der Ansprüche 1 bis 4, **dadurch gekennzeichnet, dass** es sich bei der lichtabsorbierenden Verbindung um eines der folgenden Verbindungen handelt: 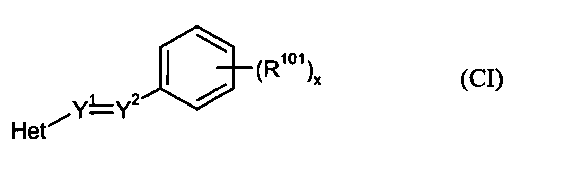 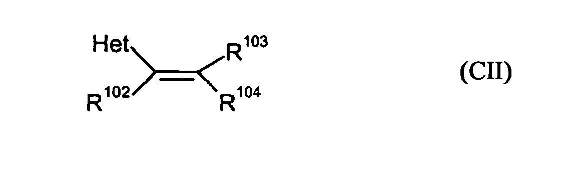 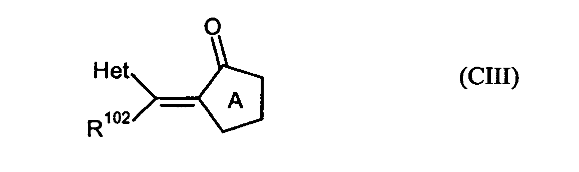 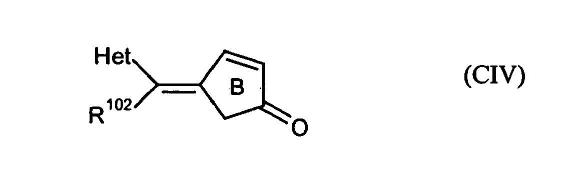 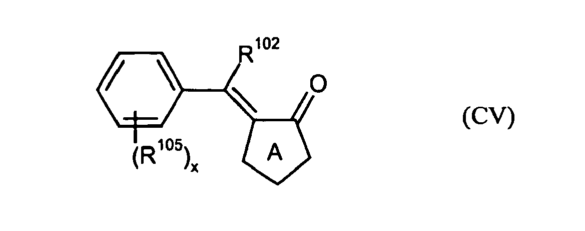 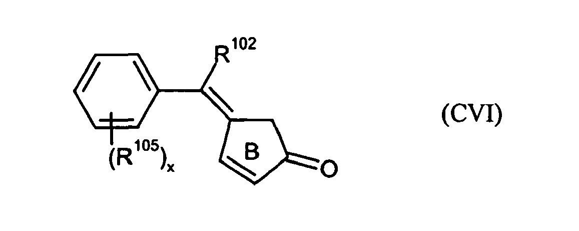 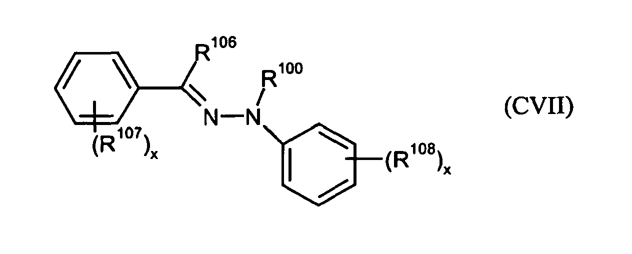 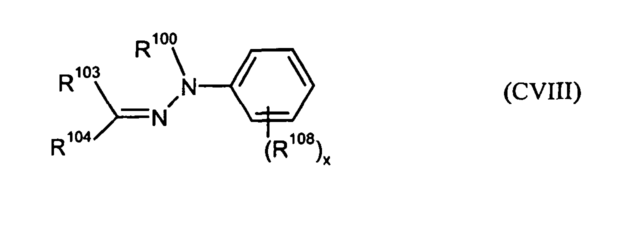 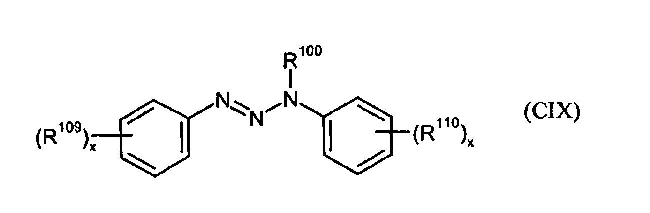 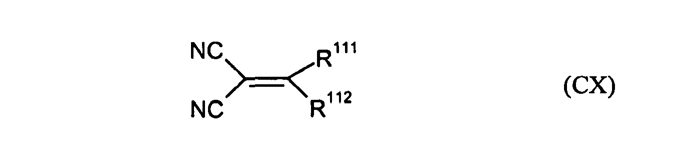 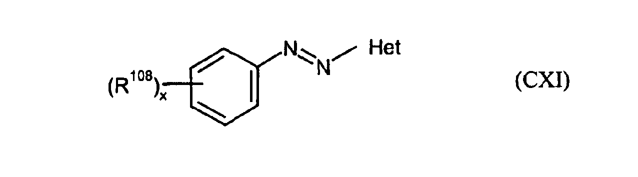 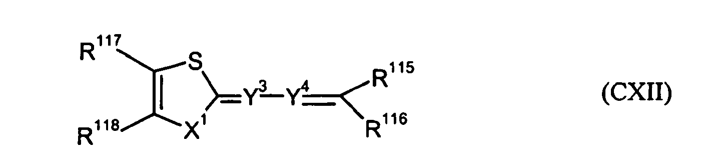 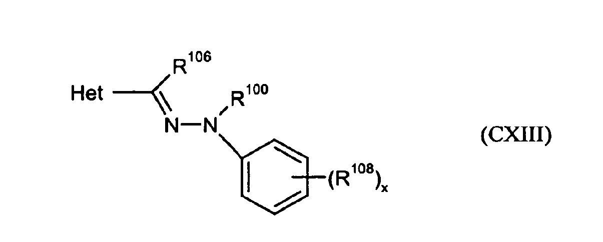 worin
R¹⁰⁰ für Wasserstoff oder C₁- bis C₄-Alkyl steht
x für eine ganze Zahl von 1 bis 3 steht und wobei für x > 1 die Reste unterschiedlich sein dürfen,
R¹⁰¹ für Wasserstoff, Halogen, Nitro, C₁- bis C₁₆-Alkyl, C₁- bis C₁₆₋Alkoxy, Cyano, Carbonsäure oder C₁- bis C₁₆-Alkoxycarbonyl steht,
Y¹ und Y² unabhängig voneinander für C-R¹⁰² stehen und
Y¹ oder Y² zusätzlich für N stehen kann,
R¹⁰² für Wasserstoff, C₆- bis C₁₀-Aryl, C₁- bis C₁₆-Alkyl, Cyano, Carbonsäure, C₁- bis C₁₆-Alkoxycarbonyl , C₁- bis C₁₆-Alkanoyl steht,
Het für Benzthiazol-2-yl, Benzoxazol-2-yl, Benzimidazol-2-yl, Thiazol-2-yl, 1,3,4-Thiadiazol-2-yl, 2- oder 4-Pyridyl, 2- oder 4-Chinolyl oder 3,3-Dimethylindolen-2-yl, die durch Methyl, Ethyl, Methoxy, Ethoxy, Chlor, Brom, Iod, Cyano, Nitro, Methoxycarbonyl, Methylthio, Dimethylamino, Diethylamino oder Dipropylamino substituiert sein können, und
die gegebenenfalls durch Alkyl oder (C₂H₄O)ₙH mit n=1-16 am Stickstoff quarterniert sein können und AlkylSO₃⁻, AlkoxySO₃⁻ oder Halogen als Gegenion besitzen oder für Furan-2- oder -3-yl, Thiophen-2- oder -3-yl, Pyrrol-2- oder -3-yl, N-Alkyl-Pyrrol-2- oder -3-yl steht, die durch Methyl, Ethyl, Methoxy, Ethoxy, Chlor, Cyano, Nitro, Methoxycarbonyl, Methylthio, Dimethylamino, Diethylamino oder Dipropylamino substituiert und/oder benzanneliert sein können,
R¹⁰³ und R¹⁰⁴ unabhängig voneinander für Cyano, Carbonsäure, C₁- bis C₁₆₋Alkoxycarbonyl, Aminocarbonyl oder C₁- bis C₁₆-Alkanoyl stehen oder R¹⁰⁴ für Wasserstoff, CH₂-COOAlkyl oder P(O)(O-C₁- bis C₁₂₋Alkyl)₂ oder C₁- bis C₁₆-Alkyl steht
A für einen fünf- oder sechs-gliedrigen carbocyclischen oder heterocyclischen Ring steht, der benzanelliert sein kann,
B für einen fünf- oder sechs-gliedrigen carbocyclischen oder heterocyclischen Ring steht, der benzanelliert sein kann,
R¹⁰⁵ für Wasserstoff, Halogen, C₁- bis C₁₆-Alkyl, C₁- bis C₁₆-Alkoxy, Cyano, Nitro, Carbonsäure oder C₁- bis C₁₆-Alkoxycarbonyl steht,
R¹⁰⁶ für Wasserstoff, C₁- bis C₄-Alkyl, C₁- bis C₁₆-Alkoxycarbonyl oder Cyano steht,
R¹⁰⁷ für Wasserstoff , Halogen, C₁- bis C₁₆-Alkyl, C₁- bis C₁₆-Alkoxy, Nitro, Cyano oder C₁- bis C₁₆-Alkoxycarbonyl steht,
R¹⁰⁸ für Wasserstoff, Nitro, Cyano, Halogen, C₁- bis C₁₆-Alkyl, Carbonsäure, C₁- bis C₁₆-Alkoxycarbonyl oder C₁- bis C₁₆-Alkoxy steht,
R¹⁰⁹ und R¹¹⁰ unabhängig voneinander für Wasserstoff, Cyano, Nitro, Halogen, Carbonsäure, C₁- bis C₁₆-Alkoxycarbonyl oder C₁- bis C₁₆-Alkanoyl, C₁- bis C₁₆-Alkyl oder C₁- bis C₁₆-Alkoxy stehen,
R¹¹¹ für Cyano, CH=CH-N R¹¹³ R¹¹⁴ steht,
R¹¹² für Wasserstoff, Anilino, N- C₁- bis C₁₆-Alkyl-Anilino oder N=CH-N R¹¹³ R¹¹⁴ steht oder R¹¹¹ und R¹¹² für =C=C- N R¹¹³ R¹¹⁴ steht,
R¹¹³ und R¹¹⁴ unabhängig voneinander für Wasserstoff, C₁- bis C₁₆-Alkyl steht,
X¹ für S oder N-R¹⁰⁰ steht,
=Y³-Y⁴= für eine direkte Doppelbindung oder für =N-N= steht,
R¹¹⁵ und R¹¹⁶ unabhängig voneinander für Cyano, Carbonsäure, C₁- bis C₁₆₋Alkoxycarbonyl, Aminocarbonyl, P(O)(O-C₁- bis C₁₂-Alkyl)₂ oder C₁- bis C₁₆-Alkanoyl stehen oder R¹¹⁵ und R¹¹⁶ gemeinsam mit dem sie verbindenden C-Atom einen carbocyclischen oder heterocyclischen, gegebenenfalls benzanellierten Fünf- oder Sechsring bilden,
R¹¹⁷ und R¹¹⁸ unabhängig voneinander für Wasserstoff, C₁- bis C₁₆-Alkyl, Cyano, SCOC₆- bis C₁₀-Aryl, Carbonsäure, C₁- bis C₁₆-Alkoxycarbonyl oder C₁- bis C₁₆-Alkanoyl oder gemeinsam für eine -CH=CH-CH=CH-Brücke stehen,
wobei die Alkyl-, Alkoxy-, Aryl- und heterocyclischen Reste gegebenenfalls weitere Reste wie Alkyl, Halogen, Nitro, Cyano, CO-NH₂, Alkoxy, Trialkylsilyl, Trialkylsiloxy oder Phenyl tragen können, die Alkyl- und Alkoxyreste geradkettig oder verzweigt sein können, die Alkylreste teil- oder perhalogeniert sein können, die Alkyl- und Alkoxyreste ethoxyliert oder propoxyliert oder silyliert sein können, benachbarte Alkyl und/oder Alkoxyreste an Aryl- oder heterocyclischen Resten gemeinsam eine drei- oder viergliedrige Brücke ausbilden können und die heterocyclischen Reste benzanneliert sein können.

6. Optische Datenträger gemäß einem oder mehrerem der Ansprüche 1 bis 4, **dadurch gekennzeichnet, dass** es sich bei der lichtabsorbierenden Verbindung um eines der folgenden Verbindungen handelt: 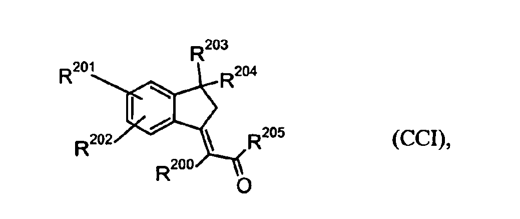 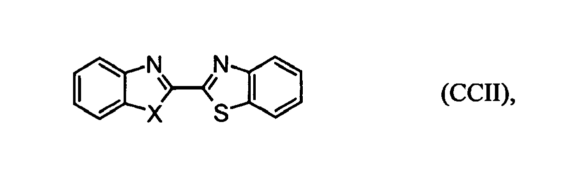 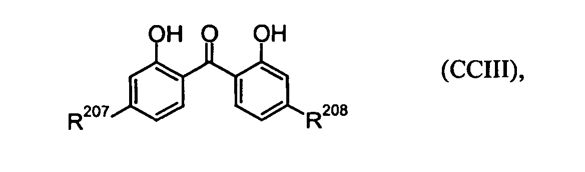 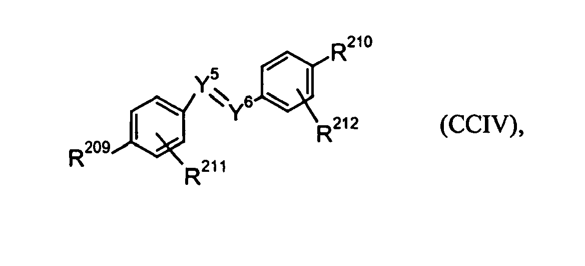 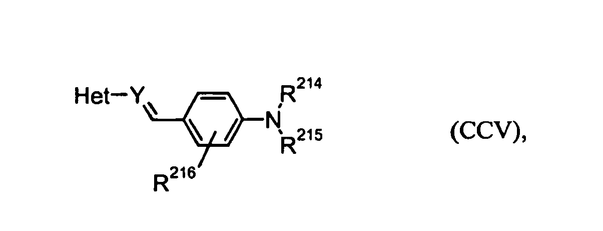 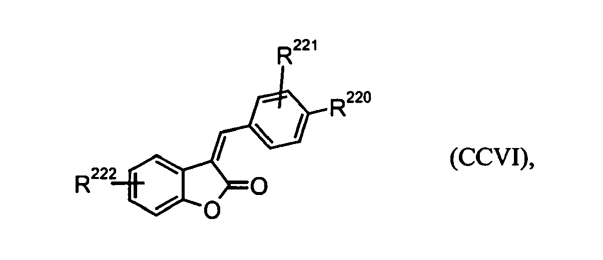 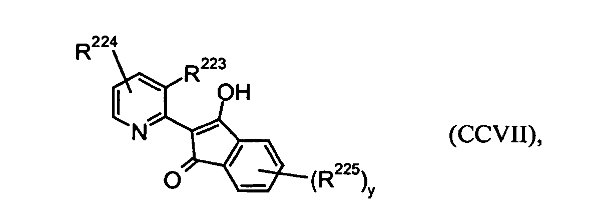 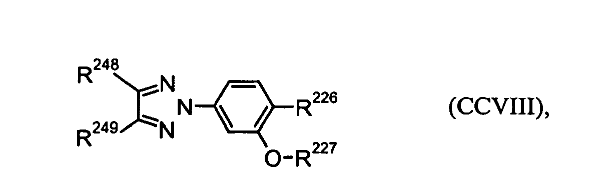 worin
R²⁰⁰ für Cyano, C₆- bis C₁₀ Aryl oder C₁- bis C₁₆-Alkoxycarbonyl steht,
R²⁰¹ und R²⁰² unabhängig voneinander für Wasserstoff, Halogen, C₁- bis C₁₆₋Alkyl, C₁- bis C₁₆-Alkoxy stehen oder
R²⁰¹ und R²⁰², wenn sie in o-Stellung zueinander stehen, eine drei- oder viergliedrige Brücke, vorzugsweise wie -O-CH₂-O-, -O-CF₂-O-, -O-(CH₂)₂-O-, -O-(CH₂)₂-, ausbilden können,
R²⁰³ und R²⁰⁴ unabhängig voneinander für Wasserstoff oder C₁- bis C₁₆₋Alkyl stehen,
R²⁰⁵ für C₁- bis C₁₆-Alkyl, C₁- bis C₁₆-Alkoxy, C₁ bis C₁₆-Mono- oder Dialkylamino steht, oder
R²⁰⁵ einen bivalenten Rest wie -O(CH₂)ₙ-O-, -O(CH₂CH₂O)ₙ- oder -O(CH₂(CHCH₃)O)ₙ- bedeutet, der zwei Reste der Formel (CCI) miteinander verbindet,
n für eine ganze Zahl von 1 bis 16 steht, oder
R²⁰⁰ und R²⁰⁵ gemeinsam eine drei- oder viergliedrige Brücke, vorzugsweise wie -(CO)-(CH₂)₃-, -(CO)-CH₂-C(CH₃)₂-CH₂-, -(CO)-O-C(CH₃)₂-O-oder -(CO)-O-C₆H₄-, ausbilden können,
X für S oder N-R²⁰⁶ steht,
R²⁰⁶ und R²²⁷ unabhängig voneinander für C₁- bis C₁₆-Alkyl stehen,
R²⁰⁷ und R²⁰⁸ unabhängig voneinander für Hydroxy, C₁- bis C₁₆-Alkoxy oder C₆- bis C₁₀-Aryloxy stehen,
R²⁰⁹ und R²¹⁰ unabhängig voneinander für C₁- bis C₁₆-Alkoxy, C₁- bis C₁₆₋Alkylthio, NR²¹⁷R²¹⁸, C₆- bis C₁₆-Aryloxy, Cyano, CO-OR²¹⁷, CO-NR²¹⁷R²¹⁸, NR²¹⁸-CO-R²¹⁹, NR²¹⁸-SO₂-R²¹⁹ stehen und
R²⁰⁹ zusätzlich für Wasserstoff oder C₁- bis C₁₆-Alkyl steht,
R²¹¹ und R²¹² unabhängig voneinander für Wasserstoff, Halogen, C₁- bis C₁₆₋Alkyl, C₁- bis C₁₆-Alkoxy oder NR²¹⁸-CO-R²¹⁹ stehen,
Het für Benzthiazol-2-yl, Benzoxazol-2-yl, Benzimidazol-2-yl, Thiazol-2-yl, 1,3,4-Thiadiazol-2-yl, 2- oder 4-Pyridyl, 2- oder 4-Chinolyl, Pyrrol-2- oder -3-yl, Thiophen-2- oder -3-yl, Furan-2- oder -3-yl, Indol-2- oder -3-yl, Benzothiophen-2-yl, Bezofuran-2-yl oder 3,3-Dimethylindolen-2-yl steht, die durch Methyl, Ethyl, Methoxy, Ethoxy, Chlor, Cyano, Nitro, Methoxycarbonyl, Methylthio, Dimethylamino, Diethylamino oder Dipropylamino substituiert sein können,
Y, Y⁵ und Y⁶ unabhängig voneinander für N oder C-R²¹³ stehen,
R²¹³ für Wasserstoff, C₁- bis C₄-Alkyl, Cyano, CO-R²¹⁹, CO-O-R²¹⁷ oder CO-NR²¹⁷R²¹⁸ steht,
R²¹⁴ und R²¹⁵ unabhängig voneinander für Wasserstoff, C₁- bis C₁₆-Alkyl, CO-R²¹⁹ oder C₆- bis C₁₀-Aryl stehen oder
NR²¹⁴R²¹⁵ für Pyrrolidino, Piperidino oder Morpholino steht,
R²¹⁶ für Wasserstoff, Halogen, C₁- bis C₁₆-Alkyl, C₁- bis C₁₆-Alkoxy oder NH-CO-R²¹⁹ steht,
R²¹⁷ und R²¹⁸ unabhängig voneinander für Wasserstoff, C₁- bis C₁₆-Alkyl oder C₆- bis C₁₀-Aryl stehen,
R²¹⁹ für C₁ - bis C₁₆-Alkyl oder C₆- bis C₁₀-Aryl steht,
R²²⁰ bis R²²² unabhängig voneinander für Wasserstoff, C₁- bis C₁₆-Alkyl oder C₁- bis C₁₆-Alkoxy stehen, wobei
R²²⁰ und R²²¹, wenn sie in o-Stellung zueinander stehen, gemeinsam eine -O-CH₂-O-, -O-CF₂-O-, -O-(CH₂)₂-O-, -O-(CH₂)₂-Brücke ausbilden können,
R²²³ für Wasserstoff oder Hydroxy steht,
R²²⁴ für Wasserstoff, Halogen oder C₁- bis C₁₆-Alkyl steht,
R²²⁵ für Wasserstoff oder Halogen steht,
y für eine ganze Zahl von 1 bis 4 steht,
R²²⁶ für CHO, CN, CO-C₁- bis C₈-Alkyl, CO-C₆- bis C₁₀-Aryl oder CH=C(CO-C₁- bis C₈-Alkyl)-CH₂- CO-C₁- bis C₈-Alkyl steht und
R²⁴⁸ und R²⁴⁹ unabhängig voneinander für Wasserstoff, C₁- bis C₁₆-Alkyl oder C₆- bis C₁₀-Aryl stehen oder gemeinsam für eine -CH=CH-CH=CH- oder o-C₆H₄-CH=CH-CH=CH-Brücke stehen,
wobei die Alkyl-, Alkoxy-, Aryl- und heterocyclischen Reste gegebenenfalls weitere Reste wie Alkyl, Halogen, Nitro, Cyano, CO-NH₂, Alkoxy, Trialkylsilyl, Trialkylsiloxy oder Phenyl tragen können, die Alkyl- und Alkoxyreste geradkettig oder verzweigt sein können, die Alkylreste teil- oder perhalogeniert sein können, die Alkyl- und Alkoxyreste ethoxyliert oder propoxyliert oder silyliert sein können, benachbarte Alkyl und/oder Alkoxyreste an Aryl- oder heterocyclischen Resten gemeinsam eine drei- oder viergliedrige Brücke ausbilden können und die heterocyclischen Reste benzanneliert sein können.

7. Optische Datenträger gemäß einem oder mehrerem der Ansprüche 1 bis 4, **dadurch gekennzeichnet, dass** es sich bei der lichtabsorbierenden Verbindung um eines der folgenden Verbindungen handelt: 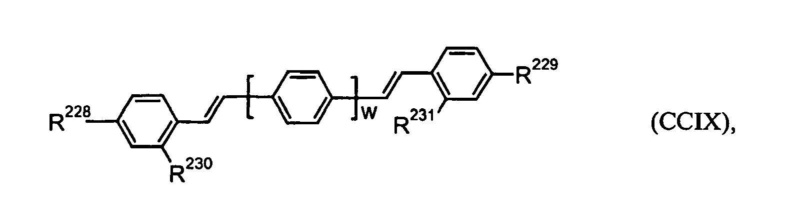 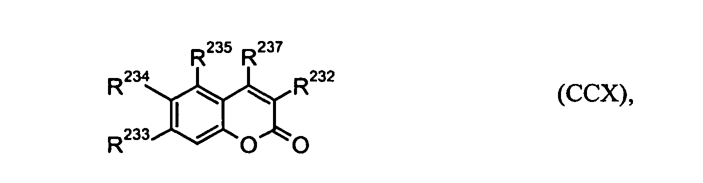 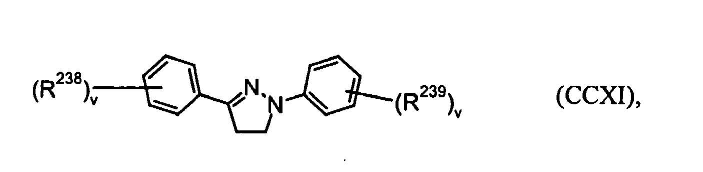 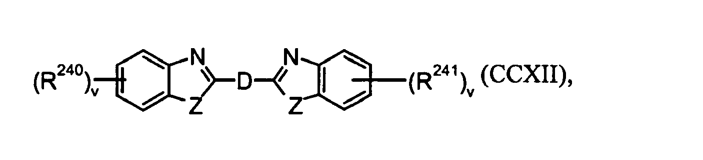 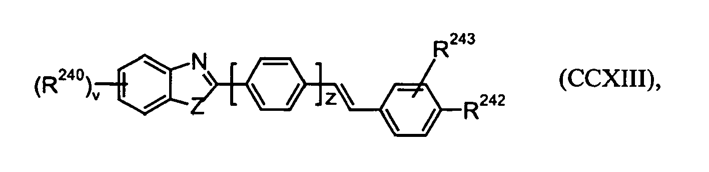 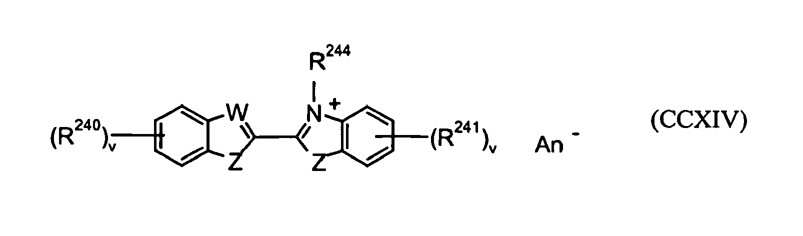 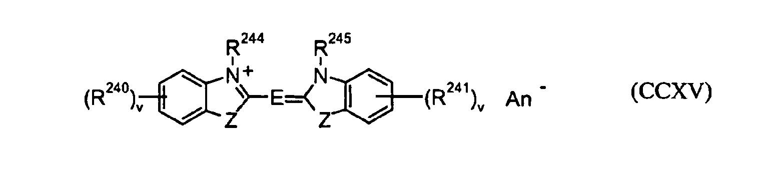 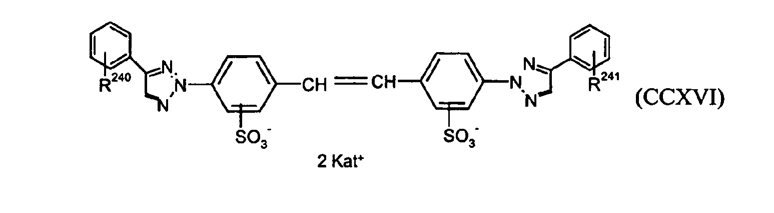 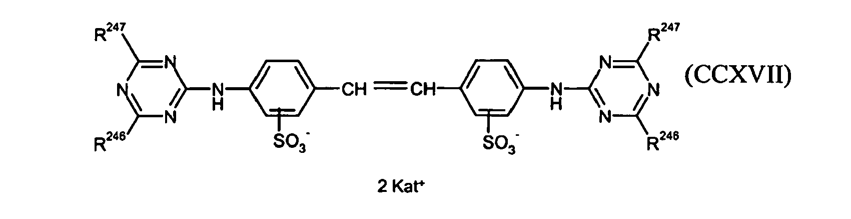 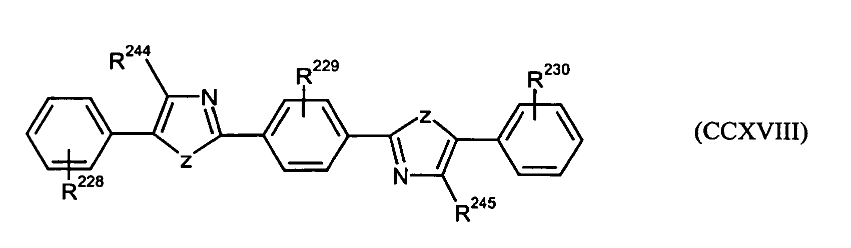 worin
R²²⁸ bis R²³¹ unabhängig voneinander für Wasserstoff, Halogen, Cyano, C₁- bis C₁₆-Alkyl, C₁- bis C₁₆-Alkoxy oder C₁- bis C₁₆-Alkoxycarbonyl stehen,
w für 1 oder 2 steht,
R²³² für Wasserstoff, Cyano, CO-O-C₁-bis C₄-Alkyl, C₆- bis C₁₀-Aryl, Thiophen-2-yl, Pyrid-2- oder 4-yl, Pyrazol-1-yl oder 1,2,4-Triazol-1-oder -4-yl steht,
R²³³ für Wasserstoff, C₁- bis C₁₆-Alkoxy, 1,2,3-Triazol-2-yl oder Di-C₁₋bis C₁₆-alkylamino steht,
R²³⁴ und R²³⁵ für Wasserstoff stehen oder gemeinsam für eine -CH=CH-CH=CH-Brücke stehen,
R²³⁷ für Wasserstoff, C₁- bis C₁₆-Alkyl oder Cyano steht,
R²³⁸ und R²³⁹ unabhängig voneinander für Wasserstoff, Halogen, CO-C₁- bis C₁₆-Alkyl, SO₂-C₁- bis C₁₆-Alkyl oder SO₂-NH-C,- bis C₁₆-AlkylA⁺ An⁻ stehen,
A⁺ für N(C₁- bis C₁₆-Alkyl)₃⁺ oder Pyridinio steht,
R²⁴⁰, R²⁴¹ und R²⁴³ unabhängig voneinander für Wasserstoff, Halogen, C₁- bis C₁₆-Alkyl oder CO-O-C₁- bis C₁₆-Alkyl stehen und
R²⁴⁰ und R²⁴¹ zusätzlich für -CH₂-A⁺ An⁻ stehen,
v für eine ganze Zahl von 1 bis 3 steht, wobei für v > 1 die Reste verschiedene Bedeutung haben dürfen,
D für -CH=CH-, Thiophen-2,5-diyl, Furan-2,5-diyl oder p-Phenylen steht,
Z für O, S oder N-R²⁴⁴ steht,
W für N oder CH steht,
R²⁴² für Wasserstoff, Cyano oder CO-O-C₁- bis C₁₆-Alkyl steht,
z für 0 oder 1 steht,
R²⁴⁴ und R²⁴⁵ unabhängig voneinander für C₁- bis C₁₆-Alkyl steht,
An⁻ für ein Anion steht,
Kat⁺ für Na⁺, Li⁺, NH₄⁺ oder N(C₁- bis C₁₂-Alkyl)₄⁺ steht,
E für CH, C-CN oder N steht,
R²⁴⁶ und R²⁴⁷ unabhängig voneinander für C₁- bis C₁₆-Alkylamino, C₁- bis C₁₆-Dialkylamino, Anilino, Morpholino, Piperidino oder Pyrrolidino steht,
wobei die Alkyl-, Alkoxy-, Aryl- und heterocyclischen Reste gegebenenfalls weitere Reste wie Alkyl, Halogen, Hydroxyalkyl, Nitro, Cyano, CO-NH₂, Alkoxy, Alkoxycarbonyl, Trialkylsilyl, Trialkylsiloxy oder Phenyl tragen können, die Alkyl- und Alkoxyreste geradkettig oder verzweigt sein können, die Alkylreste teil oder perhalogeniert sein können, die Alkyl- und Alkoxyreste ethoxyliert oder propoxyliert oder silyliert sein können, benachbarte Alkyl und/oder Alkoxyreste an Aryl- oder heterocyclischen Resten gemeinsam eine drei- oder viergliedrige Brücke ausbilden können und die heterocyclischen Reste benzanneliert sein können.

8. Optische Datenträger gemäß einem oder mehrerem der Ansprüche 1 bis 4, **dadurch gekennzeichnet, dass** es sich bei der lichtabsorbierenden Verbindung um eines der folgenden Verbindungen handelt: 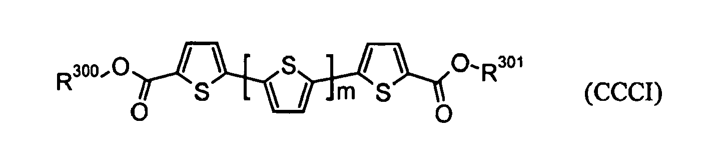 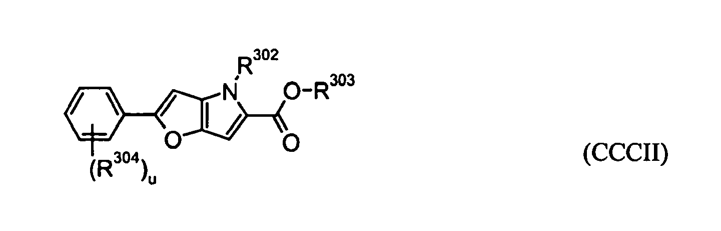 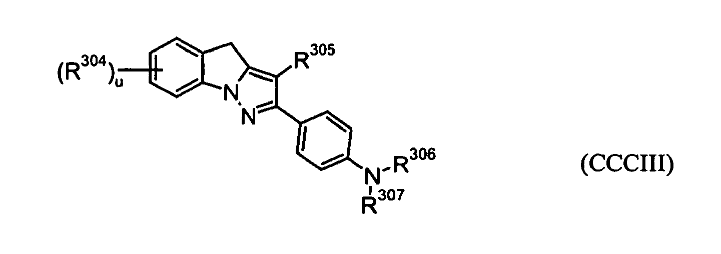 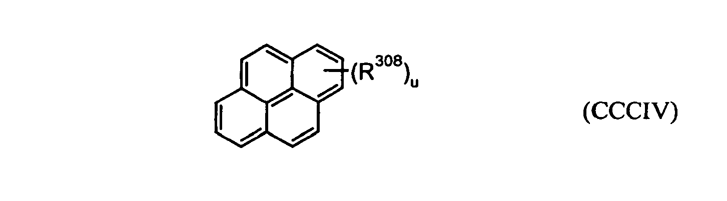 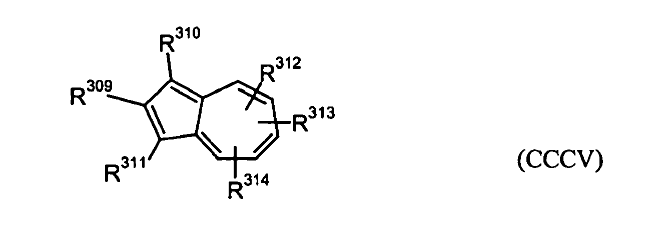 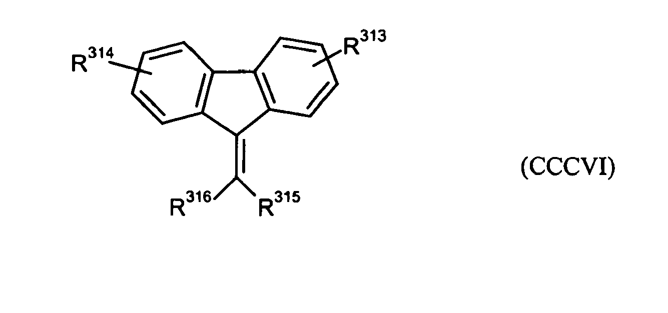 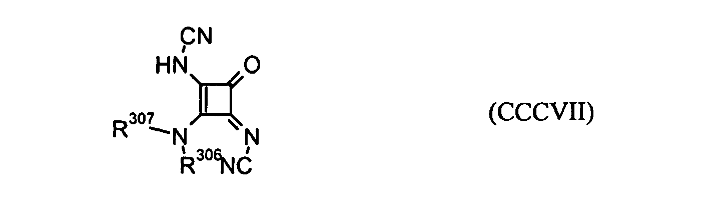 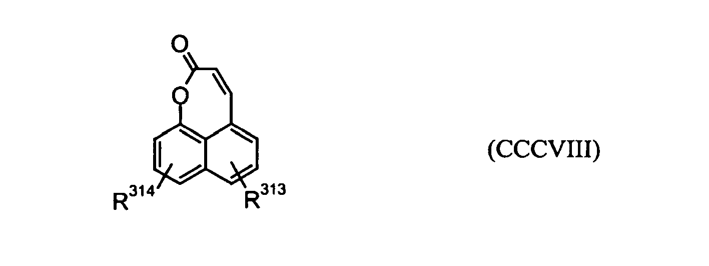 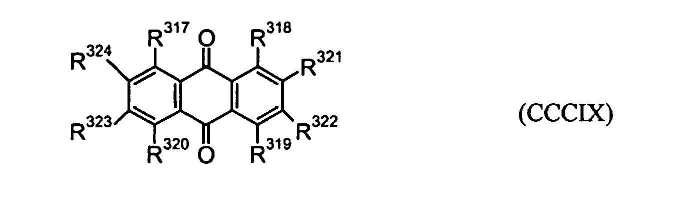 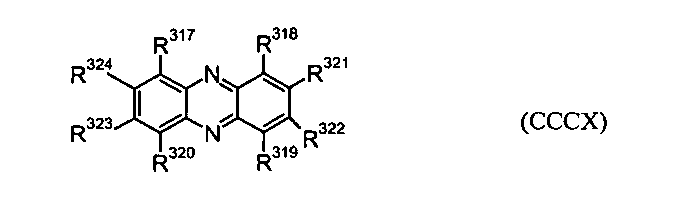 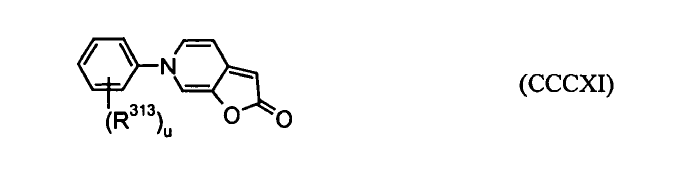 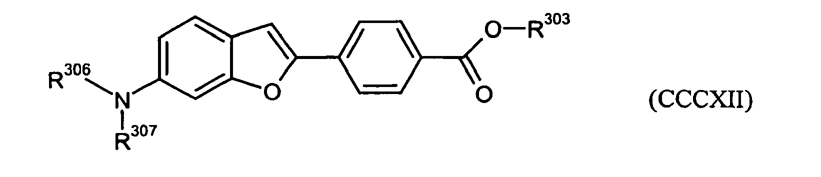 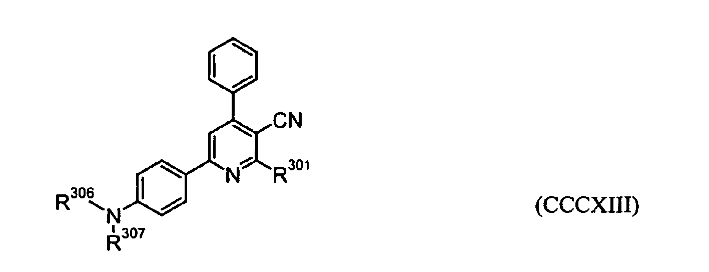 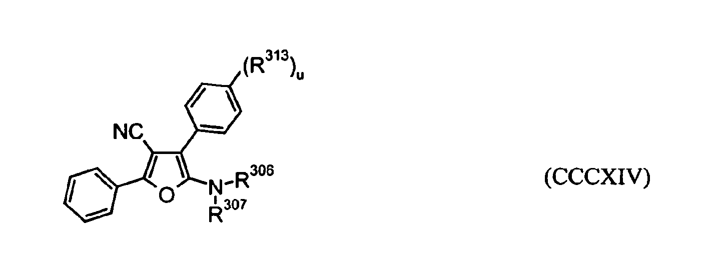 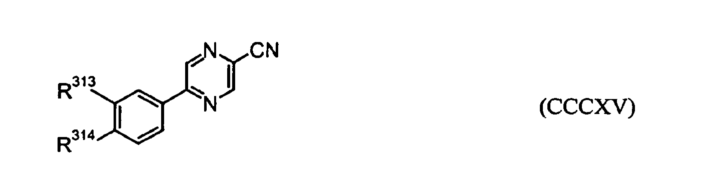 worin
R³⁰⁰, R³⁰¹ und R³⁰³ unabhängig voneinander für Wasserstoff oder C₁- bis C₁₆₋Alkyl steht,
m für eine ganze Zahl von 0 bis 10 steht,
u für eine ganze Zahl von 1 bis 3 steht, wobei für u > 1 die Reste unterschiedlich sein können,
R³⁰² für Wasserstoff, C₁- bis C₁₆-Alkoxycarbonyl oder C₁- bis C₁₆-Alkyl steht,
R³⁰⁴ für Wasserstoff, Halogen, Cyano, Nitro, C₁- bis C₁₆-Alkoxy, Di-C₁-bis C₈-alkylamino, C₁- bis C₁₆-Alkoxycarbonyl oder C₁- bis C₁₆-Alkyl steht,
R³⁰⁵ für Wasserstoff, C₁- bis C₁₆-Alkoxy, C₁- bis C₁₆-Alkoxycarbonyl oder C₁- bis C₁₆-Alkyl steht,
R³⁰⁶ und R³⁰⁷ unabhängig voneinander für Wasserstoff, C₁- bis C₁₆-Alkyl oder C₆- bis C₁₀-Aryl oder NR³⁰⁶R³⁰⁷ für Morpholino, Piperidino oder Pyrrolidino steht,
R³⁰⁸ für C₁- bis C₁₆-Alkoxycarbonyl, Carbonsäure, C₁- bis C₁₆-Alkyl, C₁₋bis C₁₆-Alkoxy, C₁- bis C₁₆-Alkylaminocarbonyl oder C₁- bis C₁₆₋Dialkylaminocarbonyl steht,
R³⁰⁹ bis R³¹⁴ unabhängig voneinander für Wasserstoff, C₆- bis C₁₀-Aryl, Carbonsäure, Cyano, C₁- bis C₁₆-Alkoxycarbonyl, C₁- bis C₁₆-Alkoxy oder C₁- bis C₁₆-Alkyl steht,
R³¹⁵ und R³¹⁶ unabhängig voneinander für Carbonsäure, C₁- bis C₁₆-Alkoxycarbonyl, C₁- bis C₁₆-Alkoxy oder Cyano stehen oder R³¹⁵ und R³¹⁶ gemeinsam mit dem sie verbindenden C-Atom einen 5- oder 6-carbocyclischen oder heterocyclischen Ring bilden,
R³¹⁷ bis R³²⁴ unabhängig voneinander für C₁- bis C₁₆-Alkyl, Wasserstoff, Hydroxy, Carbonsäure, C₁- bis C₁₆-Alkoxycarbonyl, C₁- bis C₁₆-Alkoxy, C₆- bis C₁₀-Aryloxy oder Cyano steht,
wobei
die Alkyl-, Alkoxy-, Aryl- und heterocyclischen Reste gegebenenfalls weitere Reste wie Alkyl, Halogen, Hydroxyalkyl, Nitro, Cyano, CO-NH₂, Alkoxy, Alkoxycarbonyl, Trialkylsilyl, Trialkylsiloxy oder Phenyl tragen können, die Alkyl- und Alkoxyreste geradkettig oder verzweigt sein können, die Alkylreste teil- oder perhalogeniert sein können, die Alkyl- und Alkoxyreste ethoxyliert oder propoxyliert oder silyliert sein können, benachbarte Alkyl und/oder Alkoxyreste an Aryl- oder heterocyclischen Resten gemeinsam eine drei- oder viergliedrige Brücke ausbilden können und die heterocyclischen Reste benzanneliert sein können.

9. Optische Datenträger gemäß einem oder mehrerem der Ansprüche 1 bis 4, **dadurch gekennzeichnet, dass** es sich bei der lichtabsorbierenden Verbindung um eines der folgenden Verbindungen handelt: 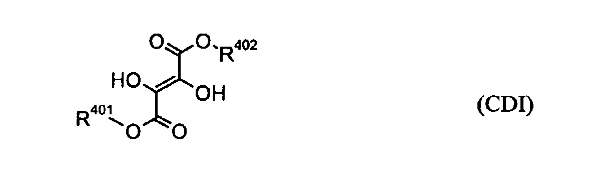 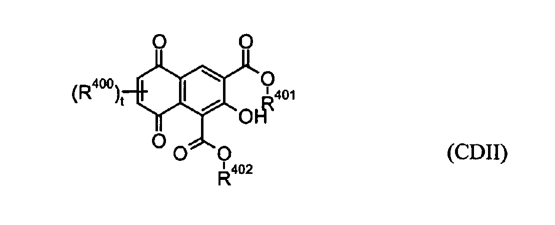 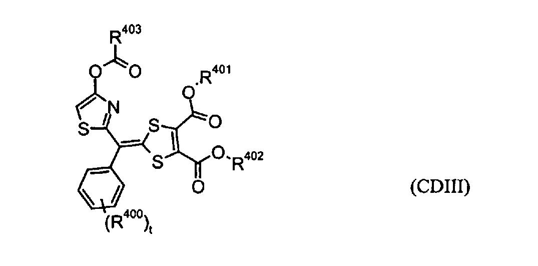 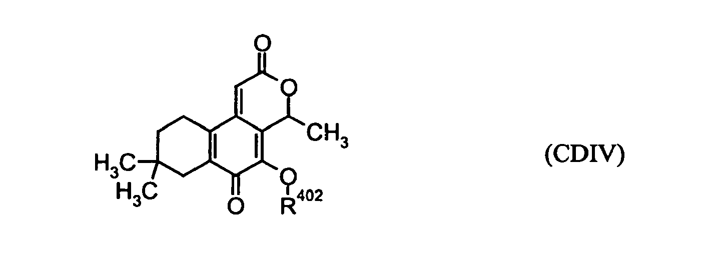 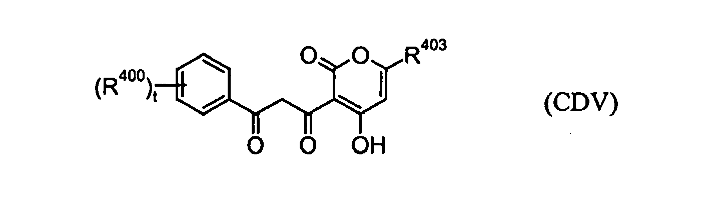 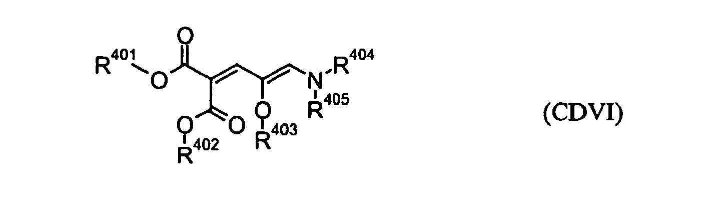 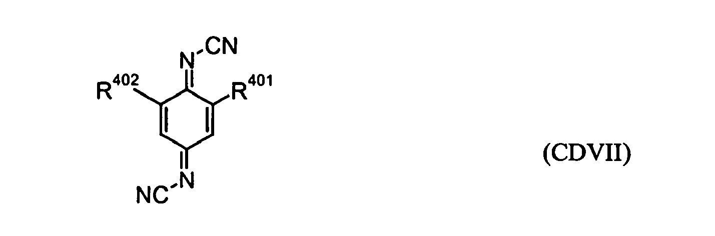 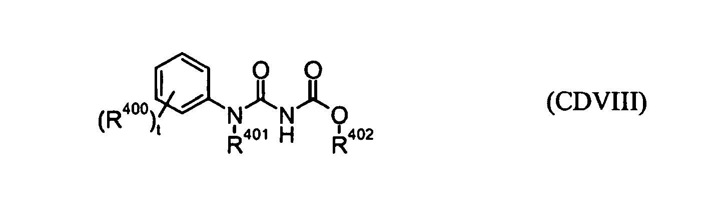 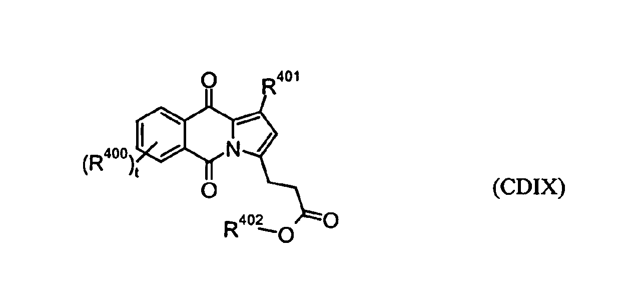 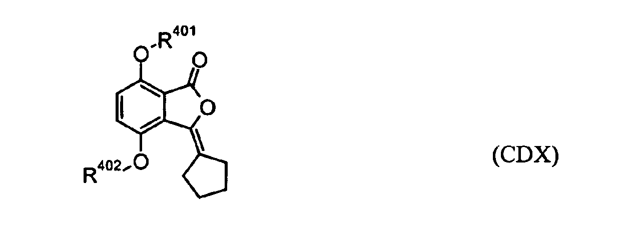 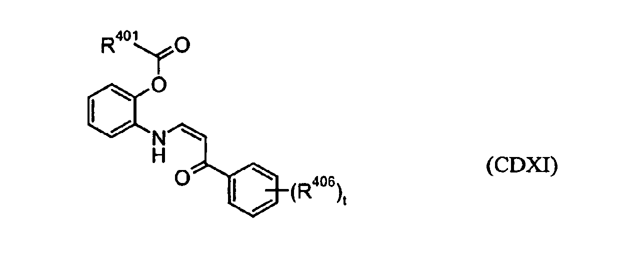 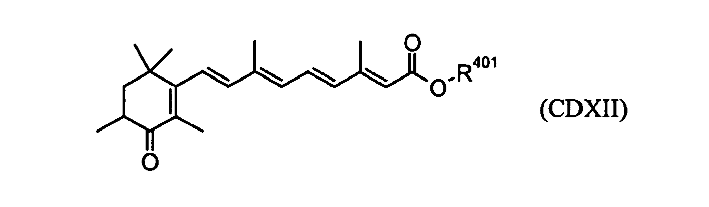 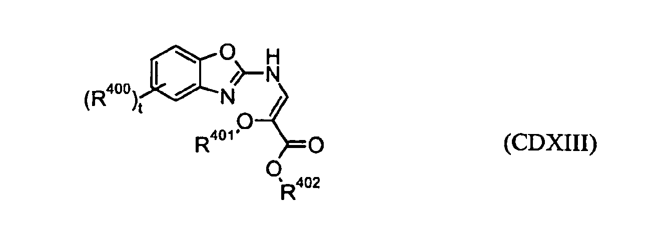 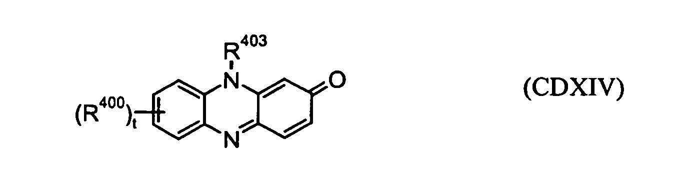 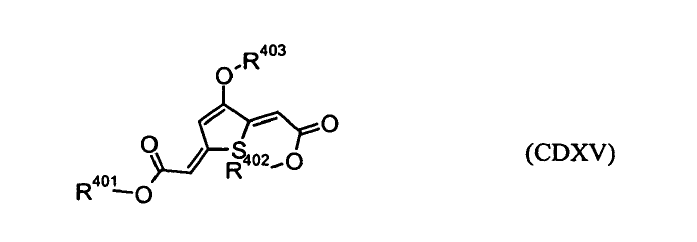 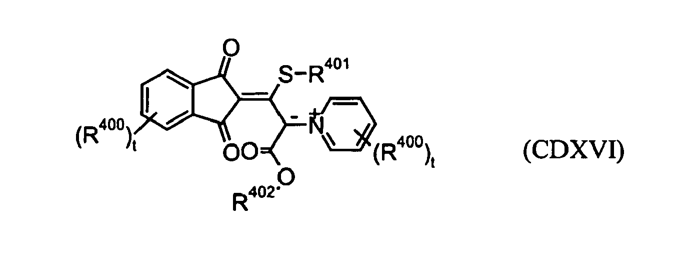 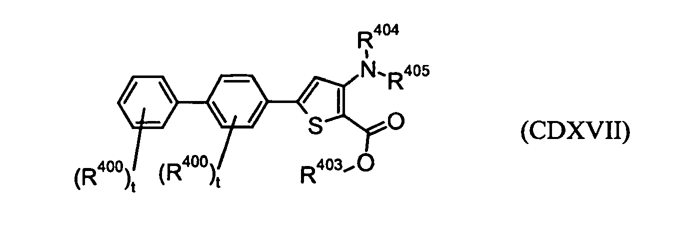 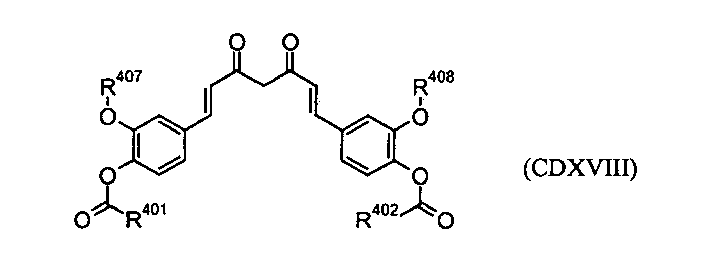 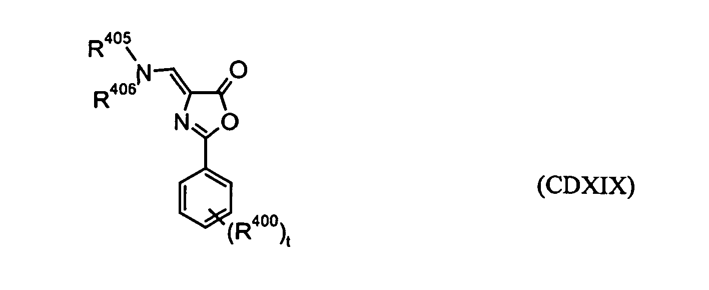 worin
R⁴⁰⁰ für Wasserstoff, C₁- bis C₁₂-Alkyl oder C₁- bis C₁₂-Alkoxy steht,
t für eine ganze Zahl von 1 bis 3 steht, wobei für t > 1 die Reste verschieden sein dürfen,
R⁴⁰¹ und R⁴⁰² unabhängig voneinander für Wasserstoff oder C₁- bis C₁₆-Alkyl stehen,
R⁴⁰³ für Wasserstoff, C₆- bis C₁₀-Aryl oder C₁- bis C₁₆-Alkyl steht,
R⁴⁰⁴ und R⁴⁰⁵ unabhängig voneinander für C₁- bis C₁₆-Alkyl, C₆- bis C₁₀-Aryl oder NR⁴⁰⁴R⁴⁰⁵ für Morpholino, Piperidino oder Pyrrolidino stehen,
R⁴⁰⁶ für Wasserstoff, Cyano, Nitro, Carbonsäure, C₁- bis C₁₆-Alkyl, C₁- bis C₁₆-Alkoxy oder C₁- bis C₁₆-Alkoxycarbonyl steht,
R⁴⁰⁷ und R⁴⁰⁸ unabhängig voneinander für Wasserstoff oder C₁- bis C₁₆-Alkyl steht,
wobei
die Alkyl-, Alkoxy-, Aryl- und heterocyclischen Reste gegebenenfalls weitere Reste wie Alkyl, Halogen, Hydroxyalkyl, Nitro, Cyano, CO-NH₂, Alkoxy, Alkoxycarbonyl oder Phenyl tragen können, die Alkyl- und Alkoxyreste geradkettig oder verzweigt sein können, die Alkylreste teil- oder perhalogeniert sein können, die Alkyl- und Alkoxyreste ethoxyliert oder propoxyliert oder silyliert sein können, benachbarte Alkyl und/oder Alkoxyreste an Aryl- oder heterocyclischen Resten gemeinsam eine drei- oder viergliedrige Brücke ausbilden können und die heterocyclischen Reste benzanneliert sein können.

10. Verwendung von lichtabsorbierbaren Verbindungen in der Informationsschicht von einmal beschreibbaren optischen Datenträgern, wobei der lichtabsorbierbaren Verbindungen ein Absorptionsmaximum λₘₐₓ₁ von 345 bis 400 nm besitzt und die Wellenlänge λ_{1/2}, bei der die Extinktion in der langwelligen Flanke des Absorptionsmaximums der Wellenlänge λₘₐₓ₁ die Hälfte des Extinktionswertes bei λₘₐₓ₁ und λ_{1/10}, bei der die Extinktion in der langwelligen Flanke des Absorptionsmaximums der Wellenlänge λₘₐₓ₁ ein Zehntel des Extinktionswertes bei λₘₐₓ₁ beträgt, d.h. λ_{1/2} und λ_{1/10} beide gemeinsam im Wellenlängenbereich von 380 bis 430 nm liegen und wobei durch Spin Coating die lichtabsorbierende Verbindung selbst oder in Kombination mit anderen lichtabsorbierenden Verbindungen oder mit geeigneten Lösungsmitteln auf ein transparentes Substrat aufgebracht wird.

11. Verfahren zur Herstellung der einmal beschreibbaren optischen Datenträger gemäß Anspruch 1, das **dadurch gekennzeichnet ist, dass** man ein transparentes, gegebenenfalls mit einer Reflektionsschicht schon beschichtetes Substrat mit dem lichtabsorbierbaren Verbindungen gegebenenfalls in Kombination mit geeigneten Bindern und Additiven und gegebenenfalls geeigneten Lösungsmitteln mittels Spin-Coating beschichtet und gegebenenfalls mit einer Reflexionsschicht, weiteren Zwischenschichten und gegebenenfalls einer Schutzschicht oder einem weiteren Substrat oder einer Abdeckschicht versieht.

## Claims

1. Write-once optical data carrier comprising a transparent substrate, which has optionally already been coated with a reflection layer and to whose surface a light-writeable information layer, if desired a reflection layer and/or if desired a protective layer or a further substrate or a cover layer have been applied and which can be written and read by means of blue light, preferably laser light, where the information layer comprises a light-absorbent compound and, if desired, a binder, **characterized in that** the light-absorbent compound has an absorption maximum λₘₐₓ₁ of from 345 to 400 nm and the wavelength λ_{1/2}, at which the absorbance on the long-wave edge of the absorption maximum of the wavelength λₘₐₓ₁ is half the absorbance value at λₘₐₓ₁, and the wavelength λ_{1/10}, at which the absorbance on the long-wave edge of the absorption maximum of the wavelength λₘₐₓ₁ is a tenth of the absorbance value at λₘₐₓ₁, are both jointly in the range from 380 to 430 nm, the light-absorbent compound itself or in combination with other light-absorbent compounds or with suitable solvents being spun coated onto a transparent substrate.

2. Optical data carrier according to Claim 1, **characterized in that** the light-absorbent compound has no further absorption maximum λₘₐₓ₂ in the region of wavelengths longer than λₘₐₓ₁ to a wavelength of 500 nm.

3. Optical data carrier according to one or both of Claims 1 and 2, **characterized in that** the light-absorbent compound has further, preferably strong absorptions and absorption maxima in the region of wavelengths shorter than λₘₐₓ₁.

4. Optical data carrier according to one or more of Claims 1 to 3, **characterized in that** the molar absorption coefficient ε of the light-absorbent claim is > 10 000 l/mol cm at the absorption maximum λₘₐₓ₁.

5. Optical data carrier according to one or more of Claims 1 to 4, **characterized in that** the light-absorbent compound is one of the following compounds: 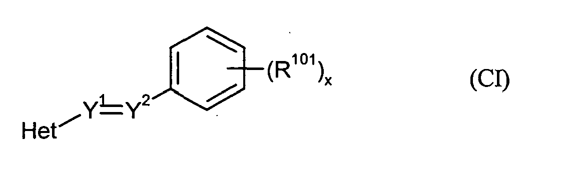 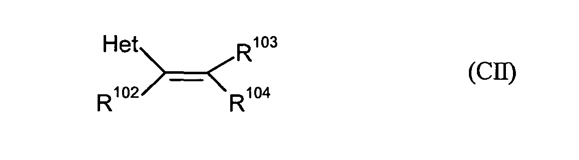 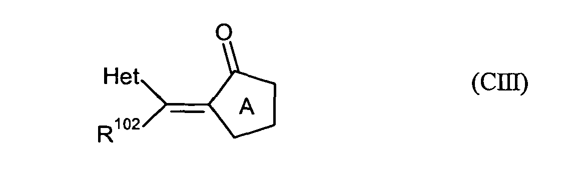 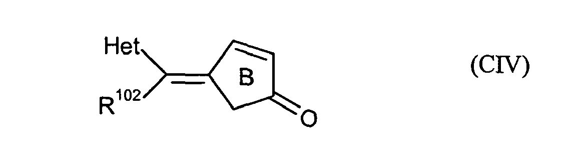 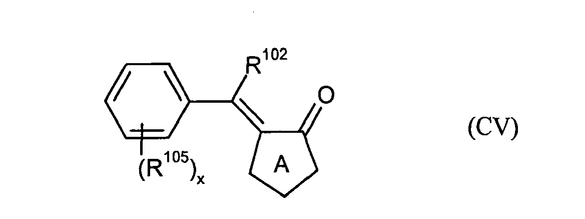 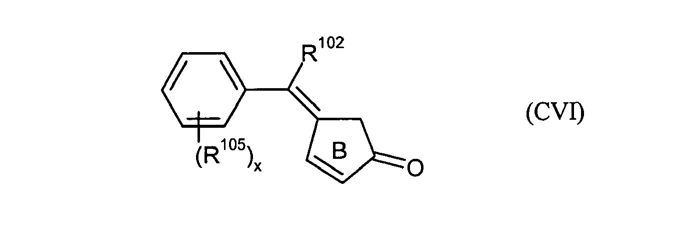 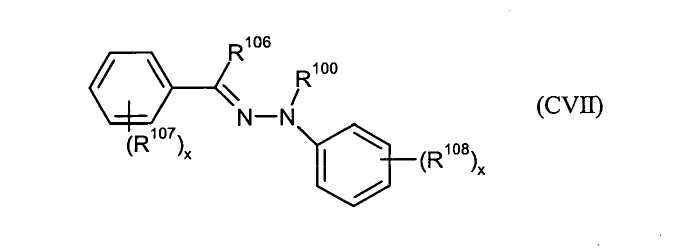 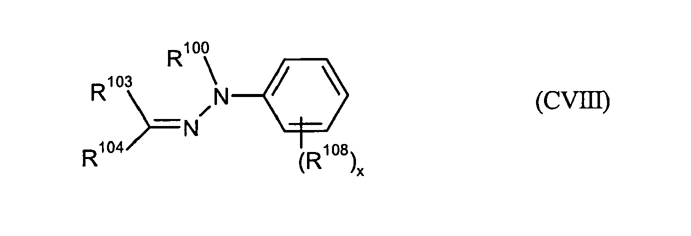 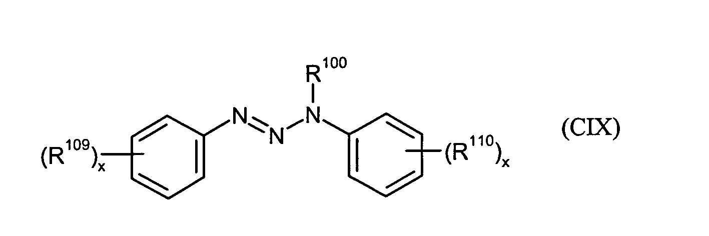 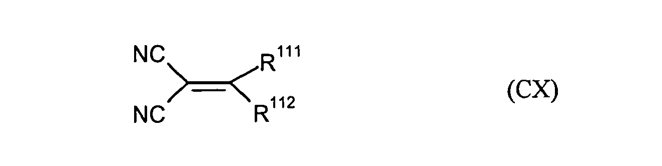 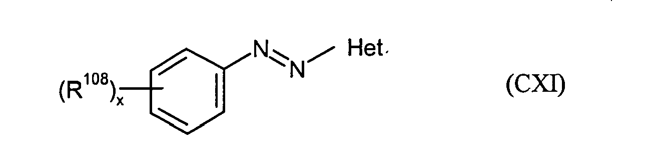 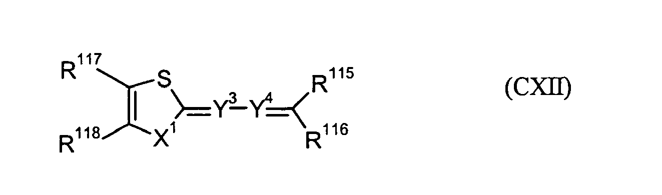 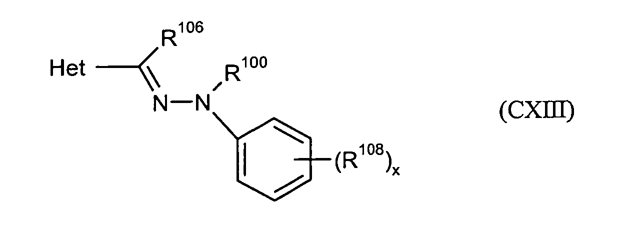 in which
R¹⁰⁰ is hydrogen or C₁ - to C₄-alkyl
x is an integer from 1 to 3 and where for x > 1, the radicals may be different,
R¹⁰¹ is hydrogen, halogen, nitro, C₁- to C₁₆-alkyl, C₁- to C₁₆-alkoxy, cyano, carboxyl or C₁- to C₁₆-alkoxycarbonyl,
Y¹ and Y², independently of one another, are C-R¹⁰² and
Y¹ or Y² may additionally be N,
R¹⁰² is hydrogen, C₆- to C₁₀-aryl, C₁- to C₁₆-alkyl, cyano, carboxyl, C₁- to C₁₆-alkoxycarbonyl, C₁- to C₁₆-alkanoyl,
Het is benzothiazol-2-yl, benzoxazol-2-yl, benzimidazol-2-yl, thiazol-2-yl, 1,3,4-thiadiazol-2-yl, 2- or 4-pyridyl, 2- or 4-quinolyl or 3,3-dimethylindolen-2-yl, each of which may be substituted by methyl, ethyl, methoxy, ethoxy, chlorine, bromine, iodine, cyano, nitro, methoxycarbonyl, methylthio, dimethylamino, diethylamino or dipropylamino, and
each of which may optionally be quaternized on the nitrogen by alkyl or (C₂H₄O)ₙH, where n = 1 - 16, and contain alkylSO₃⁻, alkoxySO₃⁻ or halogen⁻ as counterion, or is furan-2- or -3-yl, thiophen-2- or -3-yl, pyrrol-2- or -3-yl, N-alkylpyrrol-2- or -3-yl, each of which may be substituted by methyl, ethyl, methoxy, ethoxy, chlorine, cyano, nitro, methoxycarbonyl, methylthio, dimethylamino, diethylamino or dipropylamino and/or may be benzo-fused,
R¹⁰³ and R¹⁰⁴, independently of one another, are cyano, carboxyl, C₁- to C₁₆₋alkoxycarbonyl, aminocarbonyl or C₁- to C₁₆-alkanoyl, or R¹⁰⁴ is hydrogen, CH₂-COOalkyl or P(O)(O-C₁- to C₁₂-alkyl)₂ or C₁- to C₁₆₋alkyl
A is a five- or six-membered carbocyclic or heterocyclic ring, which may be benzo-fused,
B is a five- or six-membered carbocyclic or heterocyclic ring, which may be benzo-fused,
R³⁰⁵ is hydrogen, halogen, C₁- to C₁₆-alkyl, C₁- to C₁₆-alkoxy, cyano, nitro, carboxyl or C₁- to C₁₆-alkoxycarbonyl,
R³⁰⁶ is hydrogen, C₁- to C₄-alkyl, C₁- to C₁₆-alkoxycarbonyl or cyano,
R¹⁰⁷ is hydrogen, halogen, C₁- to C₁₆-alkyl, C₁- to C₁₆-alkoxy, nitro, cyano or C₁- to C₁₆-alkoxycarbonyl,
R¹⁰⁸ is hydrogen, nitro, cyano, halogen, C₁- to C₁₆-alkyl, carboxyl, C₁- to C₁₆-alkoxycarbonyl or C₁- to C₁₆-alkoxy,
R¹⁰⁹ and R¹¹⁰, independently of one another, are hydrogen, cyano, nitro, halogen, carboxyl, C₁- to C₁₆-alkoxycarbonyl or C₁- to C₁₆-alkanoyl, C₁- to C₁₆-alkyl or C₁- to C₁₆-alkoxy,
R¹¹¹ is cyano, CH=CH-NR¹¹³R¹¹⁴,
R¹¹² is hydrogen, anilino, N- C₁- to C₁₆-alkylanilino or N=CH-NR¹¹³R¹¹⁴ or R¹¹¹ and ^{R112} are =C=C-NR¹¹³R¹¹⁴,
R¹¹³ and R¹¹⁴, independently of one another, are hydrogen, C₁- to C₁₆-alkyl,
X¹ is S or N-R¹⁰⁰,
=Y³-Y⁴= is a direct double bond or is =N-N=,
R¹¹⁵ and R¹¹⁶, independently of one another, are cyano, carboxyl, C₁- to C₁₆₋alkoxycarbonyl, aminocarbonyl, P(O)(O-C₁- to C₁₂-alkyl)₂ or C₁- to C₁₆-alkanoyl, or R¹¹⁵ and R¹¹⁶, together with the carbon atom connecting them, form a carbocyclic or heterocyclic, optionally benzo-fused five- or six-membered ring,
R¹¹⁷ and R¹¹⁸, independently of one another, are hydrogen, C₁- to C₁₆-alkyl, cyano, SCOC₆- to C₁₀-aryl, carboxyl, C₁- to C₁₆-alkoxycarbonyl or C₁₋to C₁₆-alkanoyl or together are a -CH=CH-CH=CH- bridge,
where the alkyl, alkoxy, aryl and heterocyclic radicals may optionally carry further radicals, such as alkyl, halogen, nitro, cyano, CO-NH₂, alkoxy, trialkylsilyl, trialkylsiloxy or phenyl, the alkyl and alkoxy radicals may be straight-chain or branched, the alkyl radicals may be partially or perhalogenated, the alkyl and alkoxy radicals may be ethoxylated or propoxylated or silylated, adjacent alkyl and/or alkoxy radicals on aryl or heterocyclic radicals may jointly form a three- or four-membered bridge, and the heterocyclic radicals may be benzo-fused.

6. Optical data carrier according to one or more of Claims 1 to 4, **characterized in that** the light-absorbent compound is one of the following compounds: 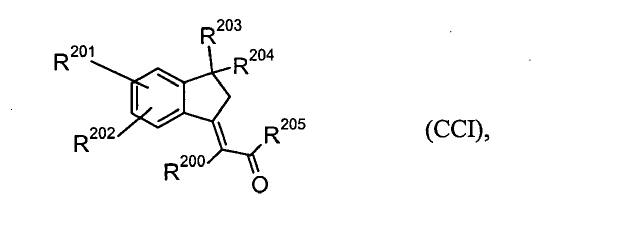 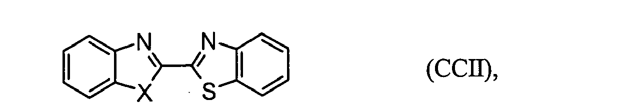 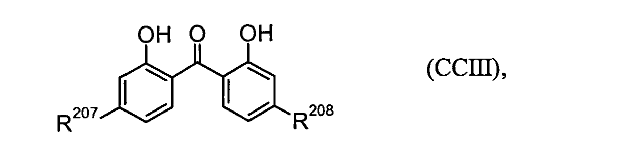 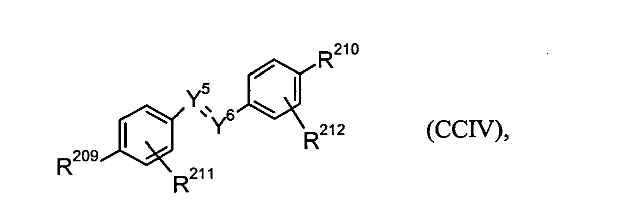 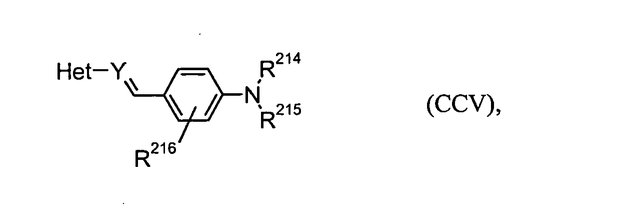 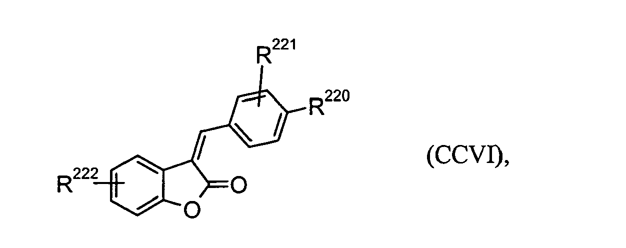 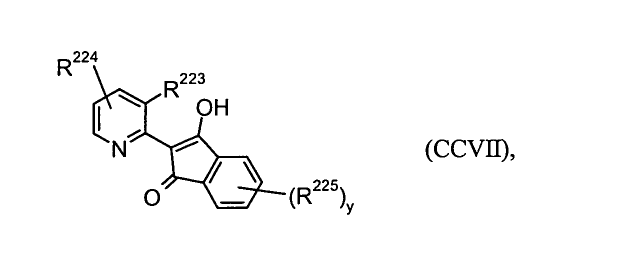 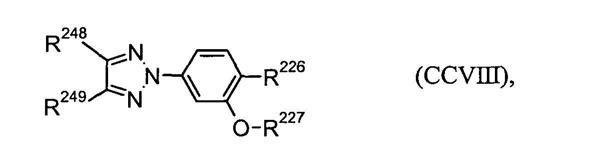 in which
R²⁰⁰ is cyano, C₆- to C₁₀ aryl or C₁- to C₁₆-alkoxycarbonyl,
R²⁰¹ and R²⁰², independently of one another, are hydrogen, halogen, C₁- to C₁₆-alkyl, C₁- to C₁₆-alkoxy, or
R²⁰¹ and R²⁰², if they are in the o-position to one another, may form a three-or four-membered bridge, preferably such as -O-CH₂-O-, -O-CF₂-O-, -O-(CH₂)₂-O-, -O-(CH₂)₂-,
R²⁰³ and R²⁰⁴, independently of one another, are hydrogen or C₁- to C₁₆-alkyl,
R²⁰⁵ is C₁- to C₁₆-alkyl, C₁- to C₁₆-alkoxy, C₁ to C₁₆-mono- or dialkylamino, or
R²⁰⁵ is a divalent radical, such as -O(CH₂)ₙ-O-, -O(CH₂CH₂O)ₙ- or -O(CH₂(CHCH₃)O)ₙ- which connects two radicals of the formula (CCI) to one another,
n is an integer from 1 to 16, or
R²⁰⁰ and R²⁰⁵ together may form a three- or four-membered bridge, preferably such as -(CO)-(CH₂)₃-, -(CO)-CH₂-C(CH₃)₂-CH₂-, -(CO)-O-C(CH₃)₂₋O- or -(CO)-o-C₆H₄-,
X is S or N-R²⁰⁶,
R²⁰⁶ and R²²⁷, independently of one another, are C₁- to C₁₆-alkyl,
R²⁰⁷ and R²⁰⁸, independently of one another, are hydroxyl, C₁- to C₁₆-alkoxy or C₆- to C₁₀-aryloxy,
R²⁰⁹ and R²¹⁰, independently of one another, are C₁- to C₁₆-alkoxy, C₁- to C₁₆₋alkylthio, NR²¹⁷ R²¹⁸, C₆- to C₁₆-aryloxy, cyano, CO-OR²¹⁷ CO-NR²¹⁷R²¹⁸, NR²¹⁸-CO-R²¹⁹, NR²¹⁸-SO₂-R²¹⁹, and
R²⁰⁹ is additionally hydrogen or C₁- to C₁₆-alkyl,
R²¹¹ and R²¹², independently of one another, are hydrogen, halogen, C₁- to C₁₆-alkyl, C₁- to C₁₆-alkoxy or NR²¹⁸-CO-R²¹⁹,
Het is benzothiazol-2-yl, benzoxazol-2-yl, benzimidazol-2-yl, thiazol-2-yl, 1,3,4-thiadiazol-2-yl, 2- or 4-pyridyl, 2- or 4-quinolyl, pyrrol-2- or -3-yl, thiophen-2- or -3-yl, furan-2- or -3-yl, indol-2- or -3-yl, benzothiophen-2-yl, benzofuran-2-yl or 3,3-dimethylindolen-2-yl, which may be substituted by methyl, ethyl, methoxy, ethoxy, chlorine, cyano, nitro, methoxycarbonyl, methylthio, dimethylamino, diethylamino or dipropylamino,
Y, Y⁵ and Y⁶, independently of one another, are N or C-R²¹³,
R²¹³ is hydrogen, C₁- to C₄-alkyl, cyano, CO-R²¹⁹, CO-O-R²¹⁷ or CO-NR²¹⁷R²¹⁸,
R²¹⁴ and R²¹⁵, independently of one another, are hydrogen, C₁- to C₁₆-alkyl, CO-R²¹⁹ or C₆- to C₁₀-aryl, or
NR²¹⁴R²¹⁵ is pyrrolidino, piperidino or morpholino,
R²¹⁶ is hydrogen, halogen, C₁- to C₁₆-alkyl, C₁- to C₁₆-alkoxy or NH-CO-R²¹⁹,
R²¹⁷ and R²¹⁸, independently of one another, are hydrogen, C₁- to C₁₆-alkyl or C₆- to C₁₀-aryl,
R²¹⁹ is C₁- to C₁₆-alkyl or C₆- to C₁₀-aryl,
R²²⁰ to R²²², independently of one another, are hydrogen, C₁- to C₁₆-alkyl or C₁- to C₁₆-alkoxy, where
R²²⁰ and R²²¹, if they are in the o-position to one another, may jointly form an -O-CH₂-O-, -O-CF₂-O-, -O-(CH₂)₂-O- or -O-(CH₂)₂- bridge,
R²²³ is hydrogen or hydroxyl,
R²²⁴ is hydrogen, halogen or C₁₋ to C₁₋₆-alkyl,
R²²⁵ is hydrogen or halogen,
y is an integer from 1 to 4,
R²²⁶ is CHO, CN, CO-C₁- to C₈-alkyl, CO-C₆- to C₁₀-aryl or CH=C(CO-C₁- to C₈-alkyl)-CH₂- CO-C₁- to C₈-alkyl, and
R²⁴⁸ and R²⁴⁹, independently of one another, are hydrogen, C₁- to C₁₆-alkyl or C₆- to C₁₀-aryl or together are a -CH=CH-CH=CH- or o-C₆H₄₋CH=CH-CH=CH- bridge,
where the alkyl, alkoxy, aryl and heterocyclic radicals may optionally carry further radicals, such as alkyl, halogen, nitro, cyano, CO-NH₂, alkoxy, trialkylsilyl, trialkylsiloxy or phenyl, the alkyl and alkoxy radicals may be straight-chain or branched, the alkyl radicals may be partially or perhalogenated, the alkyl and alkoxy radicals may be ethoxylated or propoxylated or silylated, adjacent alkyl and/or alkoxy radicals on aryl or heterocyclic radicals may jointly form a three- or four-membered bridge, and the heterocyclic radicals may be benzo-fused.

7. Optical data carrier according to one or more of Claims 1 to 4, **characterized in that** the light-absorbent compound is one of the following compounds: 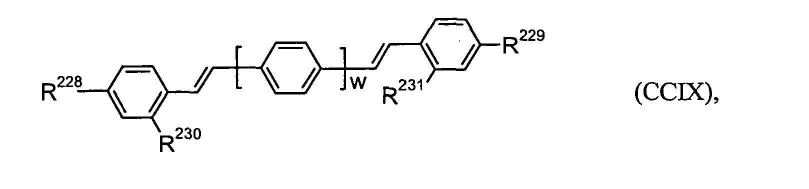 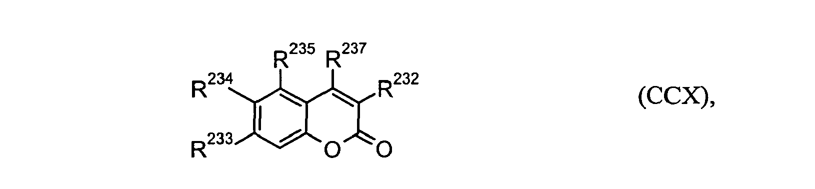 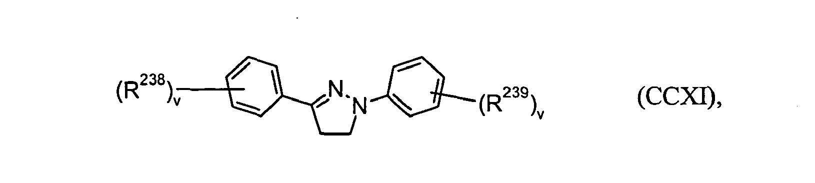 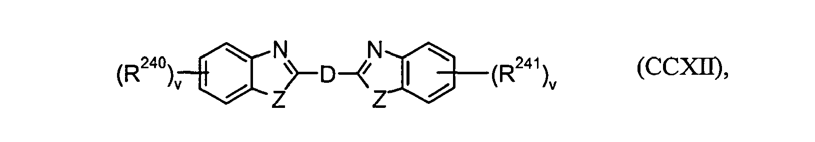 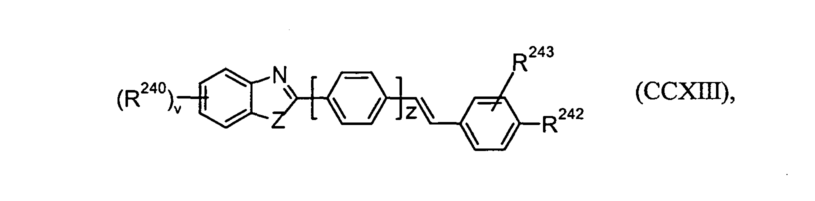 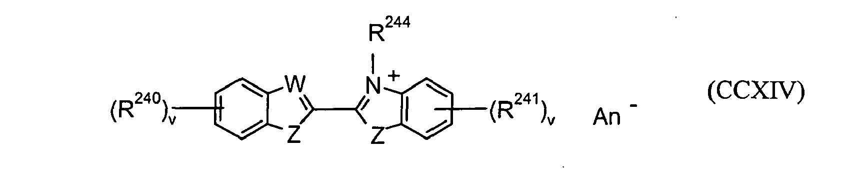 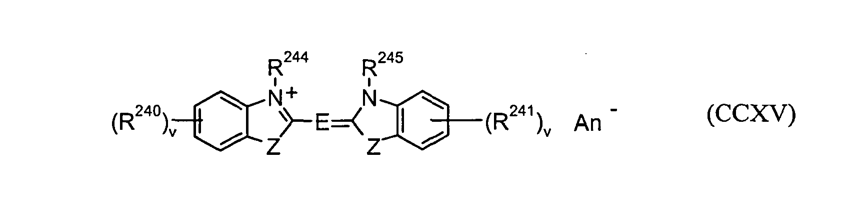 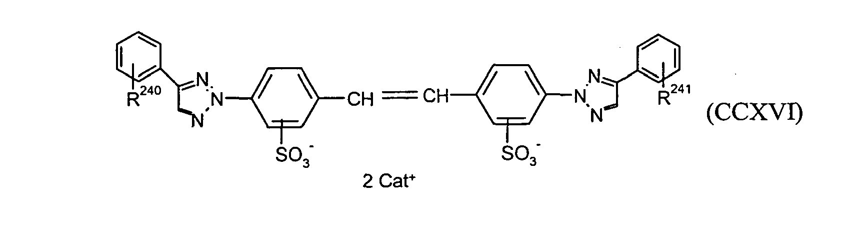 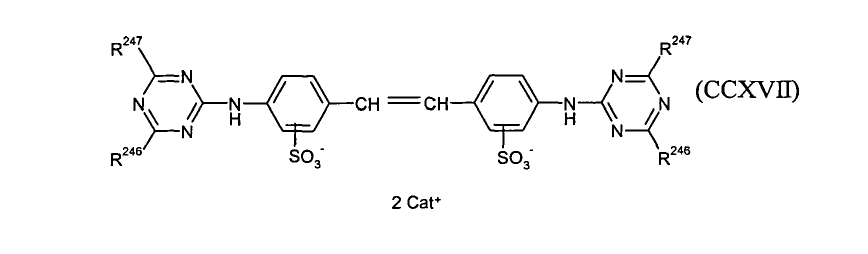 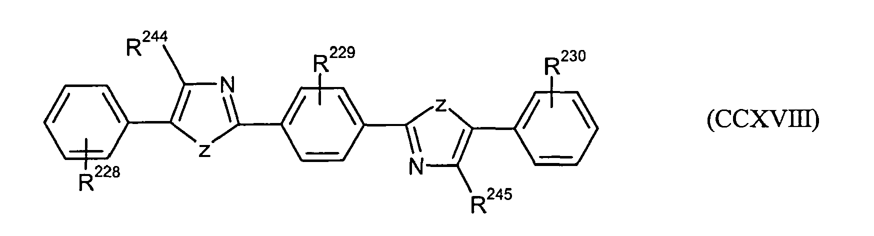 in which
R²²⁸ to R²³¹, independently of one another, are hydrogen, halogen, cyano, C₁- to C₁₆-alkyl, C₁- to C₁₆-alkoxy or C₁- to C₁₆-alkoxycarbonyl,
w is 1 or 2,
R²³² is hydrogen, cyano, CO-O-C₁-to C₄-alkyl, C₆- to C₁₀-aryl, thiophen-2-yl, pyrid-2- or 4-yl, pyrazol-1-yl or 1,2,4-triazol-1- or -4-yl,
R²³³ is hydrogen, C₁- to C₁₆-alkoxy, 1,2,3-triazol-2-yl or di-C₁- to C₁₆₋alkylamino,
R²³⁴ and R²³⁵ are hydrogen or together are a -CH=CH-CH=CH- bridge,
R²³⁷ is hydrogen, C₁- to C₁₆-alkyl or cyano,
R²³⁸ and R²³¹, independently of one another, are hydrogen, halogen, CO-C₁₋to C₁₆-alkyl, SO₂-C₁- to C₁₆-alkyl or SO₂-NH-C₁- to C₁₆-alkylA⁺ An⁻,
A⁺ is N(C₁- to C₁₆-alkyl)₃⁺ or pyridinio,
R²⁴⁰, R²⁴¹ and R²⁴³, independently of one another, are hydrogen, halogen, C₁₋to C₁₆-alkyl or CO-O-C₁- to C₁₆-alkyl, and
R²⁴⁰ and R²⁴¹ are additionally -CH₂-A⁺ An⁻,
v is an integer from 1 to 3, where for v > 1, the radicals may have different meanings,
D is -CH=CH-, thiophen-2,5-diyl, furan-2,5-diyl or p-phenylene,
Z is O, S or N-R²⁴⁴,
W is N or CH,
R²⁴² is hydrogen, cyano or CO-O-C₁- to C₁₆-alkyl,
z is 0 or 1,
R²⁴⁴ and R²⁴⁵, independently of one another, are C₁- to C₁₆-alkyl,
An⁻ is an anion,
Cat⁺ is Na⁺, Li⁺, NH₄⁺ or N(C₁- to C₁₂-alkyl)₄⁺,
E is CH, C-CN or N,
R²⁴⁶ and R²⁴⁷, independently of one another, are C₁- to C₁₆-alkylamino, C₁₋ to C₁₆-dialkylamino, anilino, morpholino, piperidino or pyrrolidino,
where the alkyl, alkoxy, aryl and heterocyclic radicals may optionally carry further radicals, such as alkyl, halogen, hydroxyalkyl, nitro, cyano, CO-NH₂, alkoxy, alkoxycarbonyl, trialkylsilyl, trialkylsiloxy or phenyl, the alkyl and alkoxy radicals may be straight-chain or branched, the alkyl radicals may be partially or perhalogenated, the alkyl and alkoxy radicals may be ethoxylated or propoxylated or silylated, adjacent alkyl and/or alkoxy radicals on aryl or heterocyclic radicals may jointly form a three- or four-membered bridge, and the heterocyclic radicals may be benzo-fused.

8. Optical data carrier according to one or more of Claims 1 to 4, **characterized in that** the light-absorbent compound is one of the following compounds: 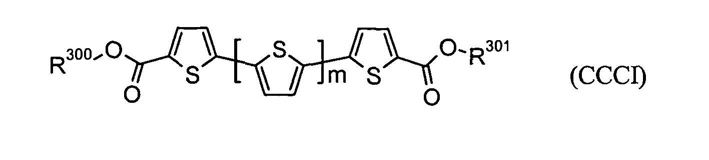 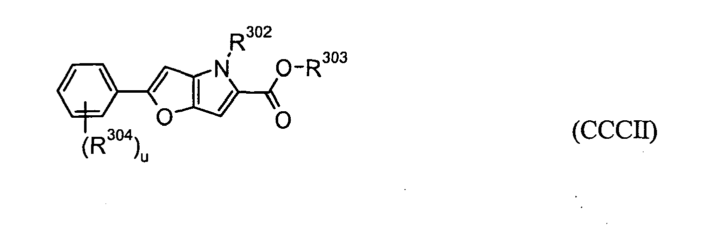 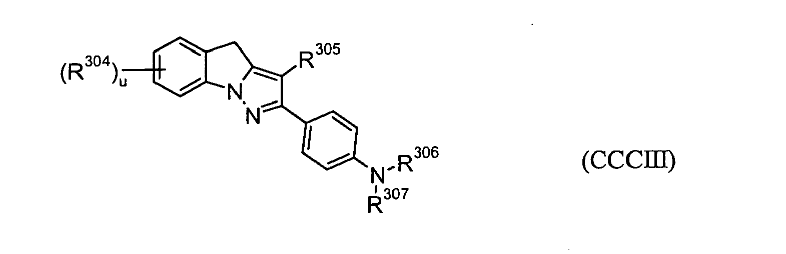 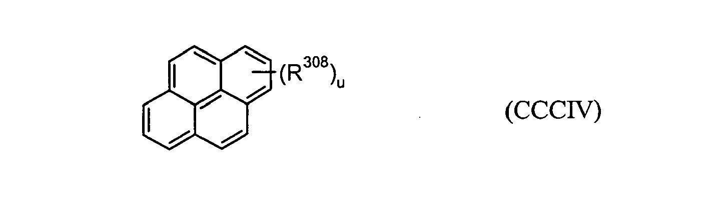 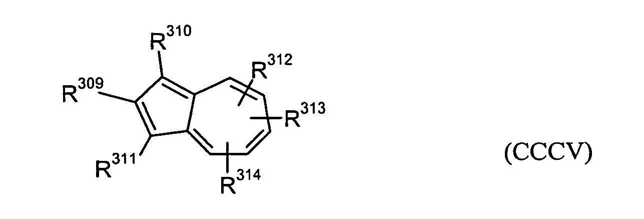 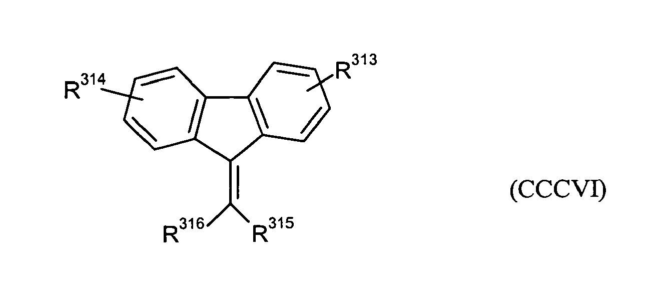 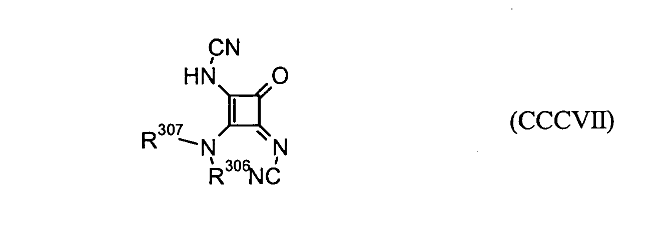 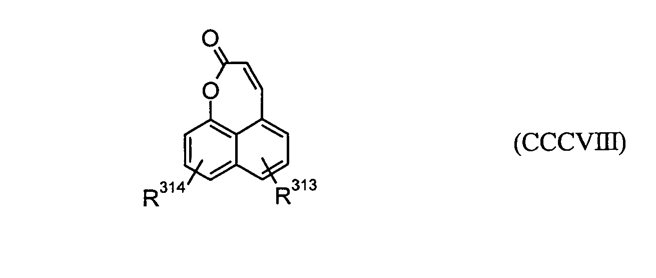 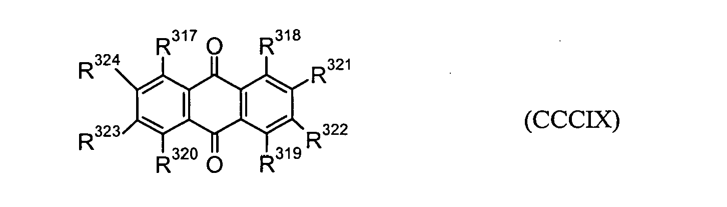 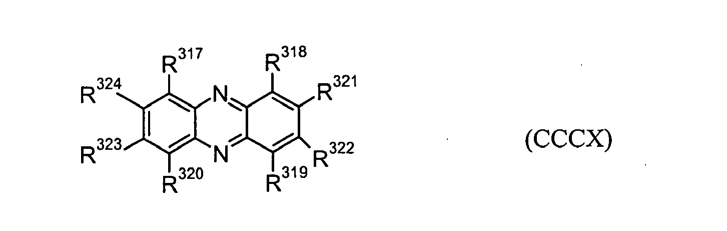 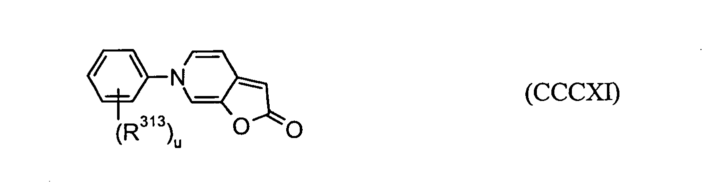 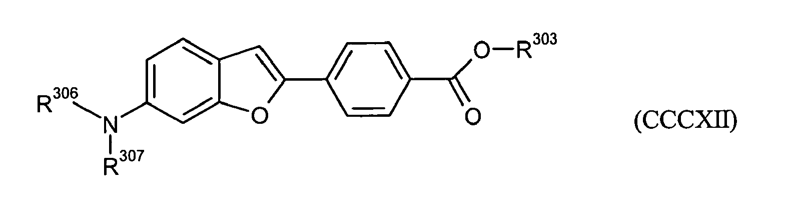 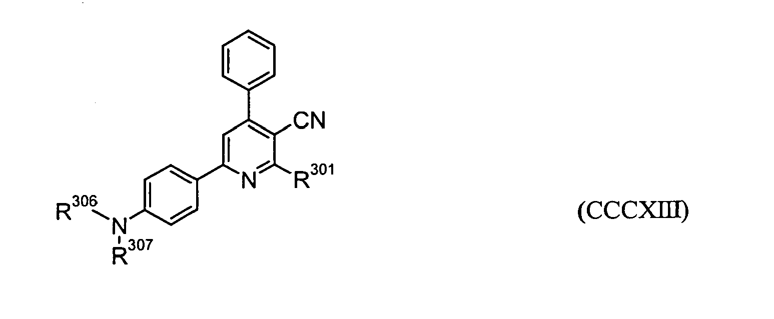 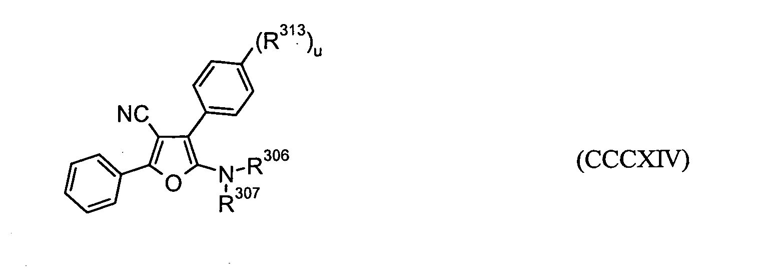 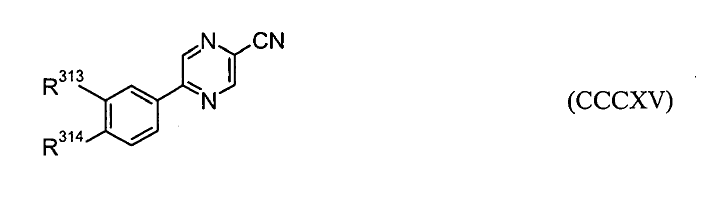 in which
R³⁰⁰, R³⁰¹ and R³⁰³, independently of one another, are hydrogen or C₁- to C₁₆₋alkyl,
m is an integer from 0 to 10,
u is an integer from 1 to 3, where for u > 1, the radicals may be different,
R³⁰² is hydrogen, C₁- to C₁₆-alkoxycarbonyl or C₁- to C₁₆-alkyl,
R³⁰⁴ is hydrogen, halogen, cyano, nitro, C₁- to C₁₆-alkoxy, di-C₁-C₈₋alkylamines, C₁- to C₁₆-alkoxycarbonyl or C₁- to C₁₆-alkyl,
R³⁰⁵ is hydrogen, C₁- to C₁₆-alkoxy, C₁- to C₁₆-alkoxycarbonyl or C₁- to C₁₆-alkyl,
R³⁰⁶ and R³⁰⁷, independently of one another, are hydrogen, C₁- to C₁₆-alkyl or C₆- to C₁₀-aryl, or NR³⁰⁶ R³⁰⁷ is morpholino, piperidino or pyrrolidino,
R³⁰⁸ is C₁- to C₁₆-alkoxycarbonyl, carboxyl, C₁- to C₁₆-alkyl, C₁- to C₁₆₋alkoxy, C₁- to C₁₆-alkylaminocarbonyl or C₁- to C₁₆-dialkylaminocarbonyl,
R³⁰⁹ to R³¹⁴, independently of one another, are hydrogen, C₆- to C₁₀-aryl, carboxyl, cyano, C₁- to C₁₆-alkoxycarbonyl, C₁- to C₁₆-alkoxy or C₁₋to C₁₆-alkyl,
R³¹⁵ and R³¹⁶, independently of one another, are carboxyl, C₁- to C₁₆₋alkoxycarbonyl, C₁- to C₁₆-alkoxy or cyano, or R³¹⁵ and R³¹⁶, together with the carbon atom connecting them, form a 5- or 6-membered carbocyclic or heterocyclic ring,
R³¹⁷ to R³²⁴, independently of one another, are C₁- to C₁₆-alkyl, hydrogen, hydroxyl, carboxyl, C₁- to C₁₆-alkoxycarbonyl, C₁- to C₁₆-alkoxy, C₆₋to C₁₀-aryloxy or cyano,
where
the alkyl, alkoxy, aryl and heterocyclic radicals may optionally carry further radicals, such as alkyl, halogen, hydroxyalkyl, nitro, cyano, CO-NH₂, alkoxy, alkoxycarbonyl, trialkylsilyl, trialkylsiloxy or phenyl, the alkyl and alkoxy radicals may be straight-chain or branched, the alkyl radicals may be partially or perhalogenated, the alkyl and alkoxy radicals may be ethoxylated or propoxylated or silylated, adjacent alkyl and/or alkoxy radicals on aryl or heterocyclic radicals may jointly form a three- or four-membered bridge, and the heterocyclic radicals may be benzo-fused.

9. Optical data carrier according to one or more of Claims 1 to 4, **characterized in that** the light-absorbent compound is one of the following compounds: 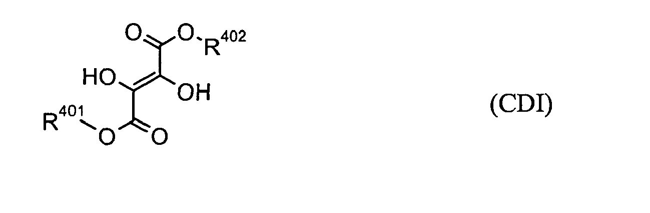 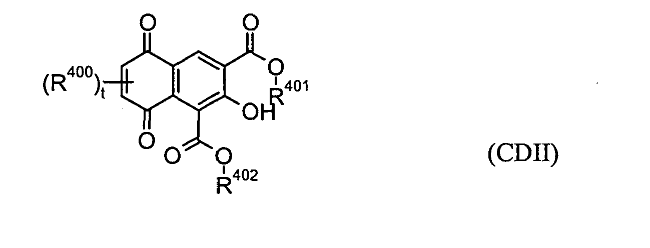 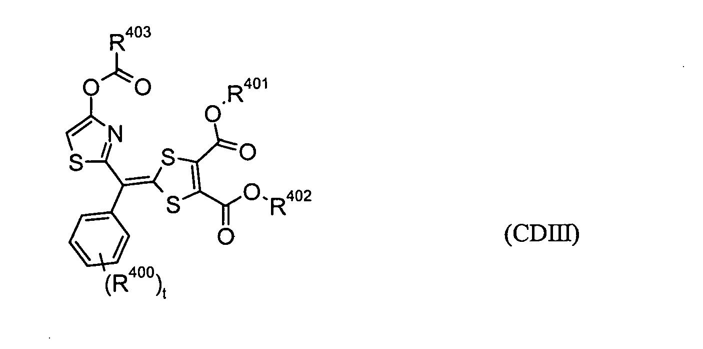 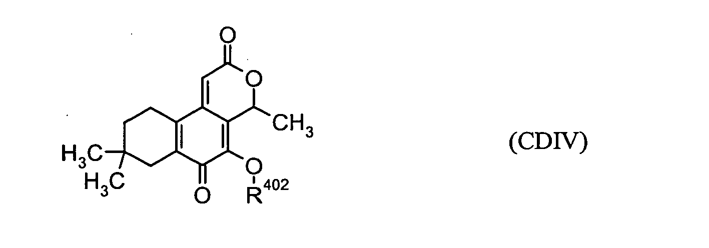 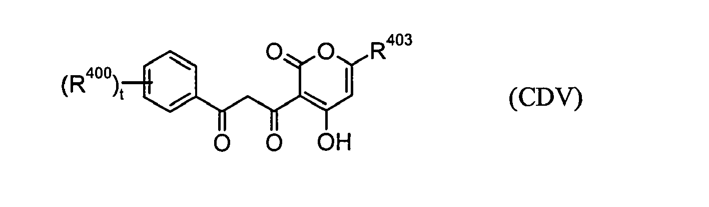 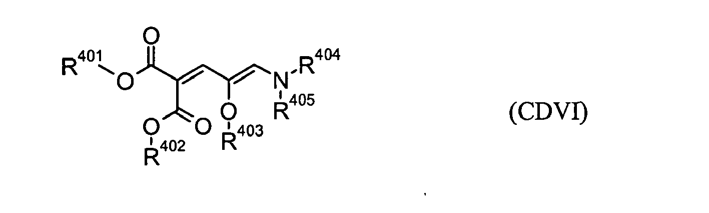 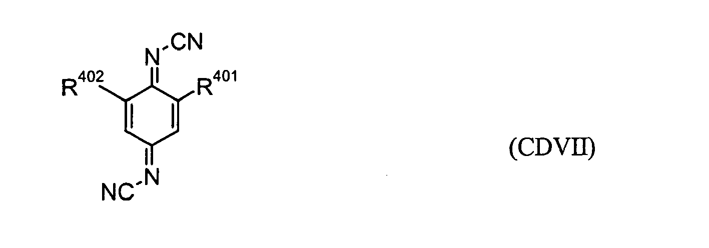 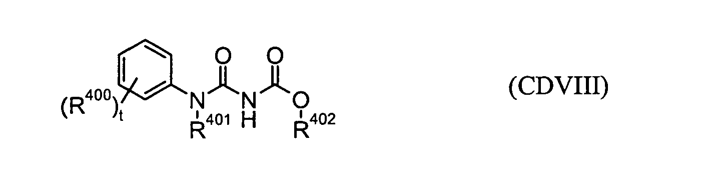 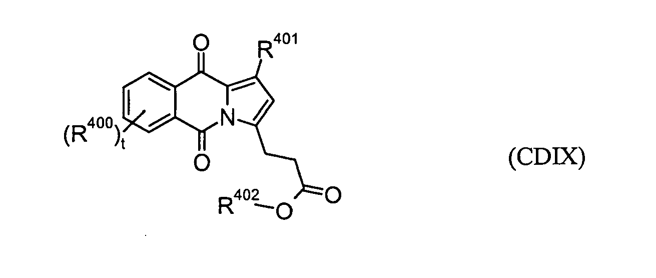 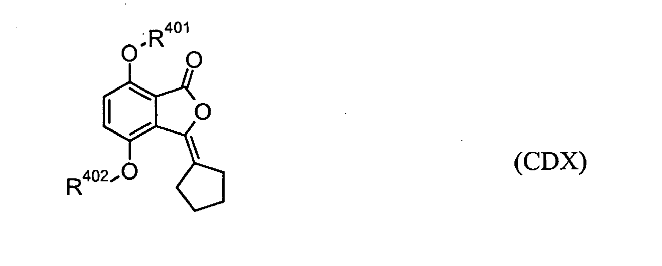 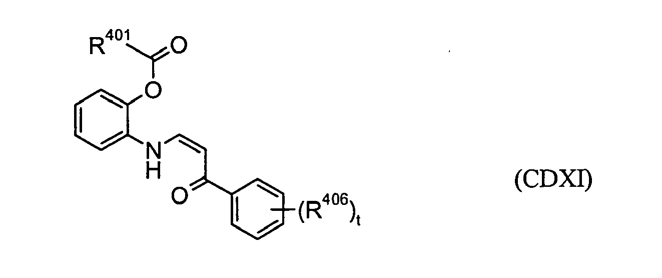 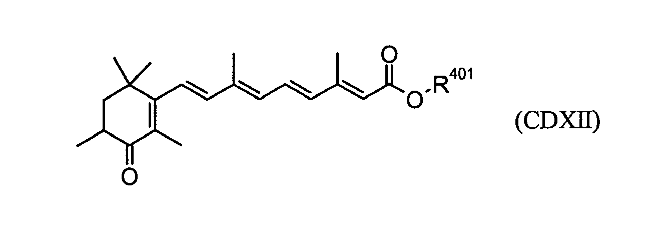 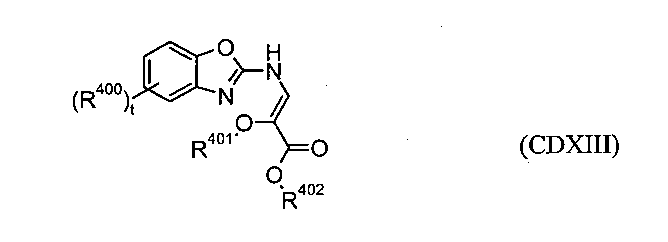 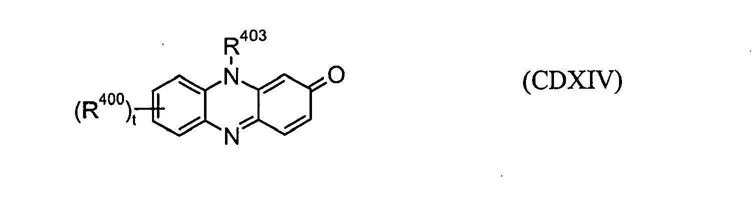 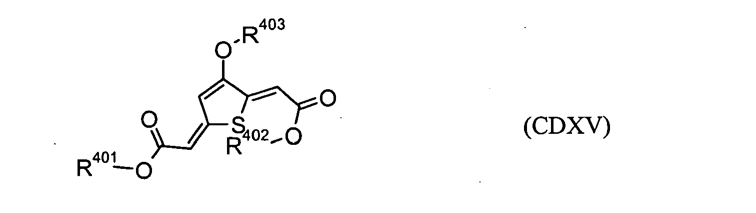 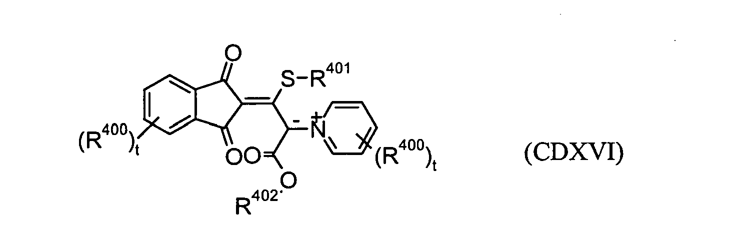 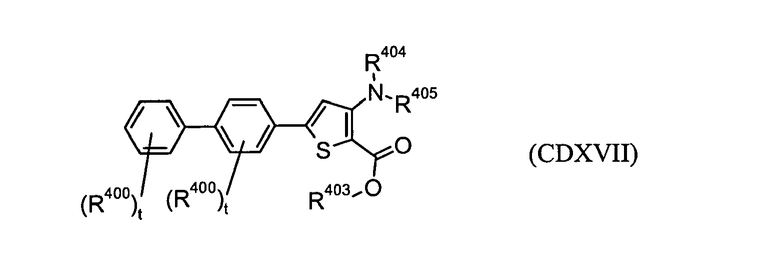 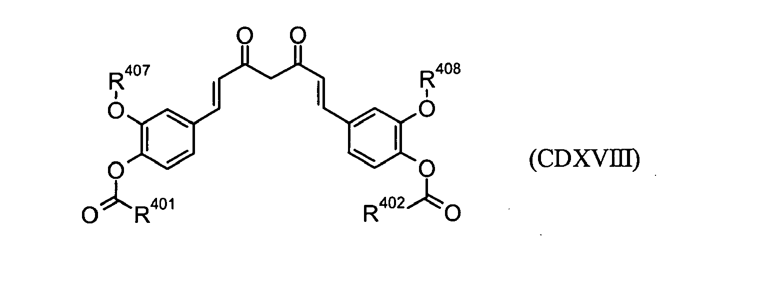 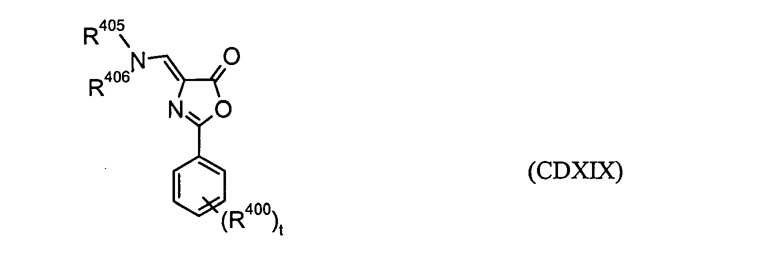 in which
R⁴⁰⁰ is hydrogen, C₁- to C₁₂-alkyl or C₁- to C₁₂-alkoxy,
t is an integer from 1 to 3, where for t > 1, the radicals may be different,
R⁴⁰¹ and R⁴⁰², independently of one another, are hydrogen or C₁- to C₁₆-alkyl,
R⁴⁰³ is hydrogen, C₆- to C₁₀-aryl or C₁- to C₁₆-alkyl,
R⁴⁰⁴ and R⁴⁰⁵, independently of one another, are C₁- to C₁₆-alkyl, C₆- to C₁₀₋aryl or NR⁴⁰⁴R⁴⁰⁵ is morpholino, piperidino or pyrrolidino,
R⁴⁰⁶ is hydrogen, cyano, nitro, carboxyl, C₁- to C₁₆-alkyl, C₁- to C₁₆-alkoxy or C₁- to C₁₆-alkoxycarbonyl,
R⁴⁰⁷ and R⁴⁰⁸, independently of one another, are hydrogen or C₁- to C₁₆-alkyl,
where
the alkyl, alkoxy, aryl and heterocyclic radicals may optionally carry further radicals, such as alkyl, halogen, hydroxyalkyl, nitro, cyano, CO-NH₂, alkoxy, alkoxycarbonyl, or phenyl, the alkyl and alkoxy radicals may be straight-chain or branched, the alkyl radicals may be partially or perhalogenated, the alkyl and alkoxy radicals may be ethoxylated or propoxylated or silylated, adjacent alkyl and/or alkoxy radicals on aryl or heterocyclic radicals may jointly form a three- or four-membered bridge, and the heterocyclic radicals may be benzo-fused.

10. Use of light-absorbent compounds in the information layer of write-once optical data carriers, where the light-absorbent compounds have an absorption maximum λₘₐₓ₁ of from 345 to 400 nm and the wavelength λ_{1/2}, at which the absorbance on the long-wave edge of the absorption maximum of the wavelength λₘₐₓ₁ is half the absorbance value at λₘₐₓ₁, and the wavelength λ_{1/10}, at which the absorbance on the long-wave edge of the absorption maximum of wavelength λₘₐₓ₁ is a tenth of the absorbance value at λₘₐₓ₁, i.e. λ_{1/2} and λ_{1/10} both jointly lie in the wavelength range from 380 to 430 nm, the light-absorbent compound itself or in combination with other light-absorbent compounds or with suitable solvents being spun coated onto a transparent substrate.

11. Process for the production of a write-once optical data carrier according to Claim 1, which is **characterized in that** a transparent substrate, which has optionally already been coated with a reflection layer, is spun coated with the light-absorbent compounds, if desired in combination with suitable binders and additives and, if desired, suitable solvents, and is, if desired, provided with a reflection layer, further interlayers and, if desired, a protective layer or a further substrate or a cover layer.

## Revendications

1. Support de données optiques inscriptible une seule fois, comprenant un substrat transparent, éventuellement déjà revêtu d'une couche réfléchissante, sur la surface duquel une couche d'informations inscriptibles à la lumière, éventuellement une couche réfléchissante et éventuellement une couche protectrice ou un substrat supplémentaire ou une couche de recouvrement ont été appliqués, et qui peut être inscrit et lu avec de la lumière bleue, de préférence de la lumière laser, où la couche d'informations comprend un composé absorbeur de lumière et éventuellement un liant, **caractérisé en ce que** le composé absorbeur de lumière présente un maximum d'absorption λₘₐₓ₁ de 345 à 400 nm et la longueur d'onde λ_{1/2}, à laquelle l'absorbance sur le flanc d'onde longue du maximum d'absorption de la longueur d'onde λₘₐₓ₁ est la moitié de la valeur d'absorbance à λₘₐₓ₁, et la longueur d'onde λ_{1/10}, à laquelle l'absorbance sur le flanc d'onde longue du maximum d'absorption de la longueur d'onde λₘₐₓ₁ est un dixième de la valeur d'absorbance à λₘₐₓ₁, sont toutes les deux conjointement dans la plage de 380 à 430 nm, et où le composé absorbeur de lumière lui-même, ou en combinaison avec d'autres composés absorbeurs de lumière ou avec des solvants appropriés, est appliqué sur un substrat transparent par revêtement par centrifugation.

2. Support de données optiques selon la revendication 1, **caractérisé en ce que** le composé absorbeur de lumière ne présente pas de maximum d'absorption supplémentaire λₘₐₓ₂ dans la plage de longueurs d'onde supérieures à λₘₐₓ₁ jusqu'à une longueur d'onde de 500 nm.

3. Support de données optiques selon l'une ou les deux des revendications 1 et 2, **caractérisé en ce que** le composé absorbeur de lumière présente des absorptions et des maximums d'absorption supplémentaires, de préférence intenses, dans la plage de longueurs d'onde plus courtes que λₘₐₓ₁.

4. Support de données optiques selon l'une ou plusieurs des revendications 1 à 3, **caractérisé en ce que** le coefficient d'absorption molaire ε du composé absorbeur de lumière est supérieur à 10 000 l/mol cm au maximum d'absorption λₘₐₓ₁.

5. Support de données optiques selon l'une ou plusieurs des revendications 1 à 4, **caractérisé en ce que** le composé absorbeur de lumière est l'un des composés suivants : 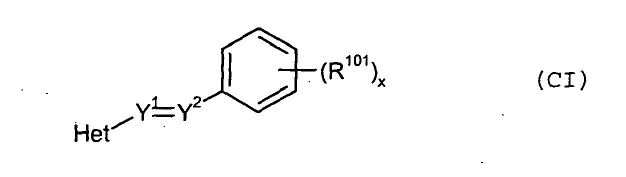 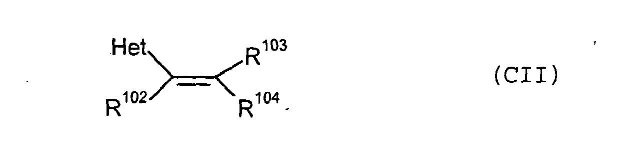 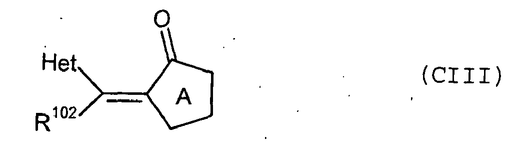 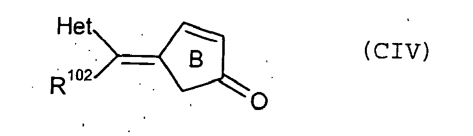 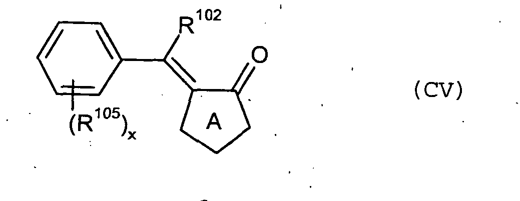 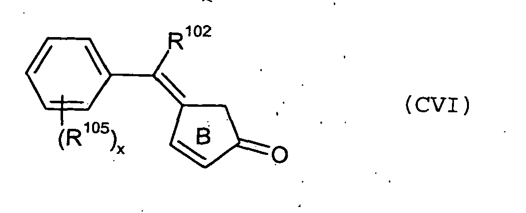 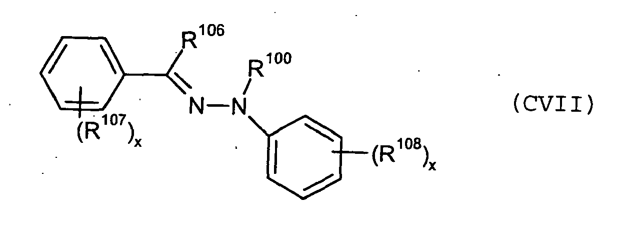 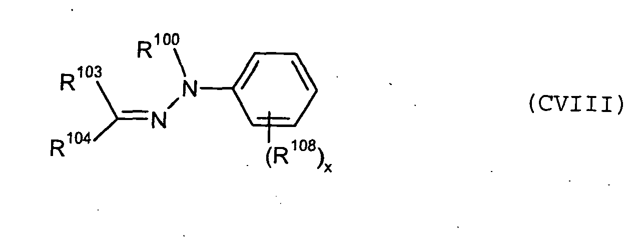 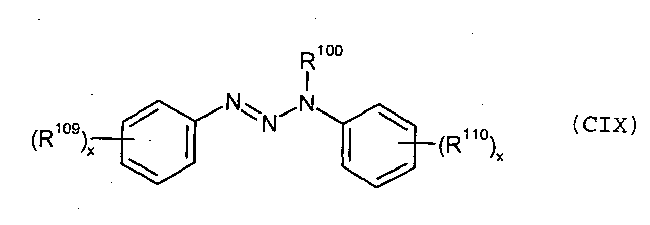 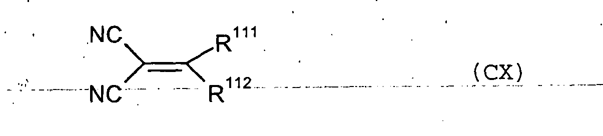 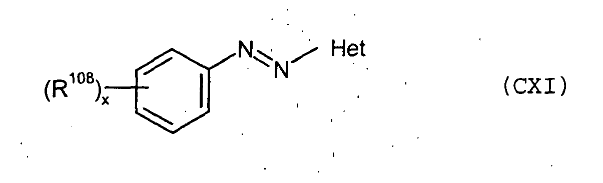 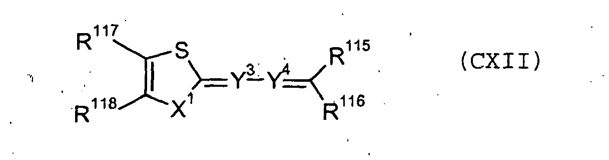 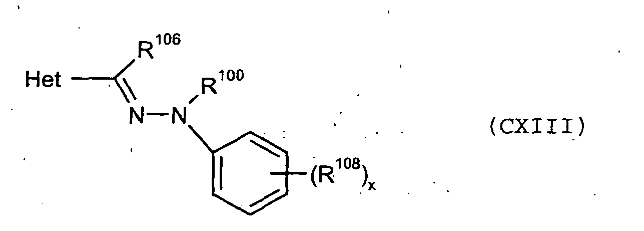 dans lesquels
R¹⁰⁰ représente un atome d'hydrogène ou un groupe alkyle en C₁ à C₄,
x représente un entier de 1 à 3 et où pour x > 1, les radicaux peuvent être différents,
R¹⁰¹ représente un atome d'hydrogène, un atome d'halogène, un groupe nitro, un groupe alkyle en C₁ à C₁₆, un groupe alcoxy en C₁ à C₁₆, un groupe cyano, un groupe acide carboxylique ou un groupe C₁-C₁₆-alcoxycarbonyle,
Y¹ et Y² représentent, indépendamment l'un de l' autre, un groupe C-R¹⁰², et
Y¹ ou Y² peuvent en outre représenter un atome d'azote,
R¹⁰² représente un atome d'hydrogène, un groupe aryle en C₆ à C₁₀, un groupe alkyle en C₁ à C₁₆, un groupe cyano, un groupe acide carboxylique, un groupe C₁-C₁₆-alcoxycarbonyle, un groupe alcanoyle en C₁ à C₁₆,
Het représente un groupe benzothiazol-2-yle, un groupe benzoxazol-2-yle, un groupe benzimidazol-2-yle, un groupe thiazol-2-yle, un groupe 1,3,4-thiadiazol-2-yle, un groupe 2-pyridyle ou 4-pyridyle, un groupe 2-quinolyle ou 4-quinolyle ou un groupe 3,3-diméthylindolén-2-yle, qui peuvent être substitués par un groupe méthyle, un groupe éthyle, un groupe méthoxy, un groupe éthoxy, un atome de chlore, un atome de brome, un atome d'iode, un groupe cyano, un groupe nitro, un groupe méthoxycarbonyle, un groupe méthylthio, -un groupe diméthylamino, un groupe diéthylamino ou un groupe dipropylamino, et
qui peuvent éventuellement être quaternisés sur l'atome d'azote par un groupe alkyle ou un groupe (C₂H₄O)ₙH dans lequel n vaut de 1 à 16, et renferment un groupe alkylSO₃^{-,} alcoxySO₃⁻ ou un groupe halogène⁻ en tant que contre-ion, ou représente un groupe furan-2-yle ou furan-3-yle, un groupe thiophén-2-yle ou thiophén-3-yle, un groupe pyrrol-2-yle ou pyrrol-3-yle, un groupe N-alkylpyrrol-2-yle ou N-alkylpyrrol-3-yle, qui peuvent être substitués par un groupe méthyle, un groupe éthyle, un groupe méthoxy, un groupe éthoxy, un atome de chlore, un groupe cyano, un groupe nitro, un groupe méthoxycarbonyle, un groupe méthylthio, un groupe diméthylamino, un groupe diéthylamino ou un groupe dipropylamino et/ou peuvent être benzo-condensés,
R¹⁰³ et R¹⁰⁴ représentent, indépendamment l'un de l'autre, un groupe cyano, un groupe acide carboxylique, un groupe C₁-C₁₆₋alcoxycarbonyle, un groupe aminocarbonyle ou un groupe alcanoyle en C₁ à C₁₆, ou R¹⁰⁴ représente un atome d'hydrogène, un groupe CH₂-COOalkyle ou un groupe P(O) (O-C₁-C₁₂₋alkyle)₂ ou un groupe alkyle en C₁ à C₁₆,
A représente un noyau carbocyclique ou hétérocyclique à cinq ou six chaînons, qui peut être benzo-condensé,
B représente un noyau carbocyclique ou hétérocyclique à cinq ou six chaînons, qui peut être benzo-condensé,
R¹⁰⁵ représente un atome d'hydrogène, un atome d'halogène, un groupe alkyle en C₁ à C₁₆, un groupe alcoxy en C₁ à C₁₆, un groupe cyano, un groupe nitro, un groupe acide carboxylique ou un groupe C₁-C₁₆-alcoxycarbonyle,
R¹⁰⁶ représente un atome d'hydrogène, un groupe alkyle en C₁ à C₄, un groupe C₁-C₁₆₋alcoxycarbonyle ou un groupe cyano,
R¹⁰⁷ représente un atome d'hydrogène, un atome d'halogène, un groupe alkyle en C₁ à C₁₆, un groupe alcoxy en C₁ à C₁₆, un groupe nitro, un groupe cyano ou un groupe C₁-C₁₆₋alcoxycarbonyle,
R¹⁰⁸ représente un atome d'hydrogène, un groupe nitro, un groupe cyano, un atome d'halogène, un groupe alkyle en C₁ à C₁₆, un groupe acide carboxylique, un groupe C₁-C₁₆-alcoxycarbonyle ou un groupe alcoxy en C₁ à C₁₆,
R¹⁰⁹ et R¹¹⁰ représentent, indépendamment l'un de l'autre, un atome d'hydrogène, un groupe cyano, un groupe nitro, un atome d'halogène, un groupe acide carboxylique, un groupe C₁-C₁₆-alcoxycarbonyle ou un groupe alcanoyle en C₁ à C₁₆, un groupe alkyle en C₁ à C₁₆ ou un groupe alcoxy en C₁ à C₁₆,
R¹¹¹ représente un groupe cyano, un groupe CH=CH-NR¹¹³R¹¹⁴,
R¹¹² représente un atome d'hydrogène, un groupe anilino, un groupe N-C₁-C₁₆-alkylanilino ou un groupe N=CH-NR¹¹³R¹¹⁴, ou R¹¹¹ et R¹¹² représentent un groupe =C=C-NR¹¹³R¹¹⁴,
R¹¹³ et R¹¹⁴ représentent, indépendamment l'un de l'autre, un atome d'hydrogène, un groupe alkyle en C₁ à C₁₆,
X¹ représente un atome de soufre ou un groupe N-R¹⁰⁰,
=Y³-Y⁴= représente une double liaison directe ou un groupe =N-N=,
R¹¹⁵ et R¹¹⁶ représentent, indépendamment l' un de l'autre, un groupe cyano, un groupe acide carboxylique, un groupe C₁-C₁₆-alcoxycarbonyle, un groupe aminocarbonyle, un groupe P(O)(O-C₁-C₁₂-alkyle)₂ ou un groupe alcanoyle en C₁ à C₁₆, ou R¹¹⁵ et R¹¹⁶ forment, conjointement avec l'atome de carbone les reliant, un noyau carbocyclique ou hétérocyclique, à cinq ou six chaînons, éventuellement benzo-condensé,
R¹¹⁷ et R¹¹⁸ représentent, indépendamment l'un de l'autre, un atome d'hydrogène, un groupe alkyle en C₁ à C₁₆, un groupe cyano, un groupe SCO-C₆-C₁₀-aryle, un groupe acide carboxylique, un groupe C₁-C₁₆-alcoxycarbonyle ou un groupe alcanoyle en C₁ à C₁₆, ou représentent conjointement un pont -CH=CH-CH=CH-,
où les radicaux alkyle, alcoxy, aryle et hétérocycliques peuvent éventuellement porter des radicaux supplémentaires, tels qu'un groupe phényle, un atome d'halogène, un groupe nitro, un groupe cyano, un groupe CO-NH₂, un groupe alcoxy, un groupe trialkylsilyle, un groupe trialkylsiloxy ou un groupe phényle, les radicaux alkyle et alcoxy peuvent être linéaires ou ramifiés, les radicaux alkyle peuvent être partiellement halogénés ou perhalogénés, les radicaux alkyle et alcoxy peuvent être éthoxylés ou propoxylés ou silylés, des radicaux alkyle et/ou alcoxy adjacents sur des radicaux aryle ou hétérocycliques peuvent former conjointement un pont à trois ou quatre chaînons, et les radicaux hétérocycliques peuvent être benzo-condensés.

6. Support de données optiques selon l'une ou plusieurs des revendications 1 à 4, **caractérisé en ce que** le composé absorbeur de lumière est l'un des composés suivants : 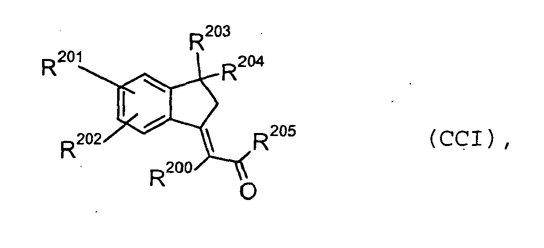 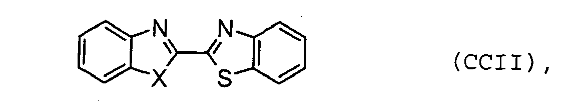 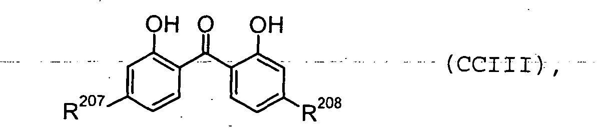 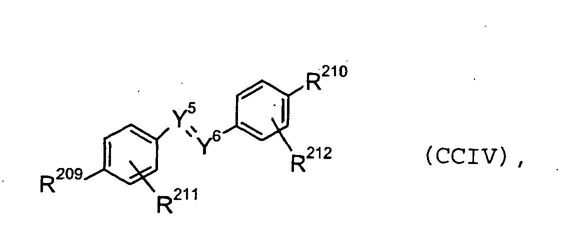 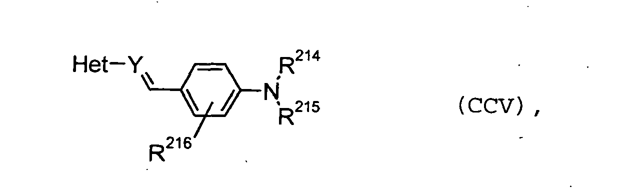 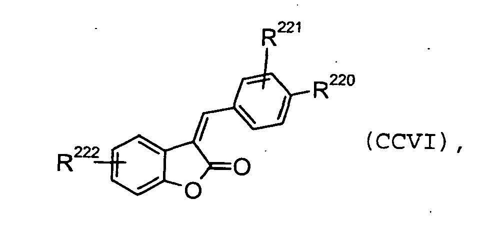 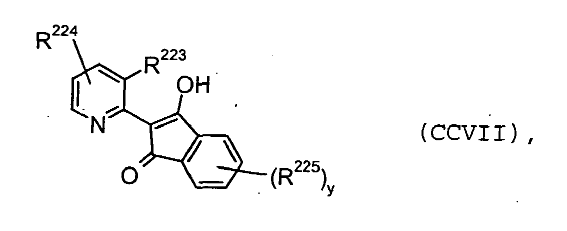 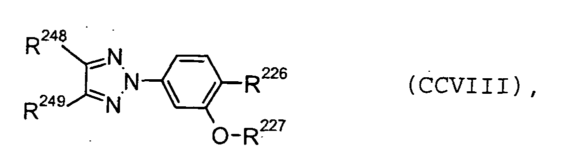 dans lesquels
R²⁰⁰ représente un groupe cyano, un groupe aryle en C₆ à C₁₀ ou un groupe C₁-C₁₆₋alcoxycarbonyle,
R²⁰¹ et R²⁰² représentent, indépendamment l'un de l'autre, un atome d'hydrogène, un atome d'halogène, un groupe alkyle en C₁ à C₁₆, un groupe alcoxy en C₁ à C₁₆, ou
R²⁰¹ et R²⁰², s'ils sont en position ortho l'un par rapport à l'autre, peuvent former un pont à trois ou quatre chaînons, de préférence tel qu'un groupe -O- CH₂-O-, un groupe -O-CF₂-O-, un groupe -O-(CH₂)₂-O-, un groupe -O-(CH₂)₂-
R²⁰³ et R²⁰⁴ représentent; indépendamment l'un de l'autre, un atome d'hydrogène ou un groupe alkyle en C₁ à C₁₆,
R²⁰⁵ représente un groupe alkyle en C₁ à C₁₆, un groupe alcoxy en C₁ à C₁₆, un groupe C₁-C₁₆- mono- ou dialkylamino, ou
R²⁰⁵ représente un radical bivalent tel qu'un groupe -O(CH₂)ₙ-O-, un groupe -O(CH₂CH₂O)ₙ- ou un groupe -O(CH₂(CHCH₃)O)ₙ-, qui relie les deux radicaux de formule (CCI),
n représente un entier de 1 à 16, ou
R²⁰⁰ et R²⁰⁵ peuvent former conjointement un pont à trois ou quatre chaînons, de préférence tel qu'un groupe - (CO)-(CH₂)₃-, un groupe - (CO) - CH₂-C(CH₃)₂-CH₂-, un groupe - (CO) -O-C (CH₃)₂-O- ou un groupe (CO)-O-C₆H₄-,
X représente un atome de soufre ou un groupe N-R²⁰⁶,
R²⁰⁶ et R²²⁷ représentent, indépendamment l'un de l'autre, un groupe alkyle en C₁ à C₁₆,
R²⁰⁷ et R²⁰⁸ représentent, indépendamment l'un de l'autre, un groupe hydroxy, un groupe alcoxy en C₁ à C₁₆ ou un groupe aryloxy en C₆ à C₁₀,
R²⁰⁹ et R²¹⁰ représentent, indépendamment l'un de l'autre, un groupe alcoxy en C₁ à C₁₆, un groupe alkylthio en C₁ à C₁₆, un groupe NR²¹⁷R²¹⁸, un groupe aryloxy en C₆ à C₁₆, un groupe cyano, un groupe CO-OR²¹⁷, un groupe CO-NR²¹⁷R²¹⁸, un groupe NR²¹⁸-CO-R²¹⁹, un groupe NR²¹⁸-SO₂-R²¹⁹, et
R²⁰⁹ représente en outre un atome d'hydrogène ou un groupe alkyle en C₁ à C₁₆,
R²¹¹ et R²¹² représentent, indépendamment l'un de l'autre, un atome d'hydrogène, un atome d'halogène, un groupe alkyle en C₁ à C₁₆, un groupe alcoxy en C₁ à C₁₆ ou un groupe NR²¹⁸⁻CO-R²¹⁹,
Het représente un groupe benzothiazol-2-yle, un groupe benzoxazol-2-yle, un groupe benzimidazol-2-yle, un groupe thiazol-2-yle, un groupe 1,3,4-thiadiazol-2-yle, un groupe 2-pyridyle ou 4-pyridyle, un groupe 2-quinolyle ou 4-quinolyle, un groupe pyrrol-2-yle ou pyrrol-3-yle, un groupe thiophén-2-yle ou thiophén-3-yle, un groupe furan-2-yle ou furan-3-yle, un groupe indol-2-yle ou indol-3-yle, un groupe benzothiophén-2-yle, un groupe benzofuran-2-yle ou un groupe 3,3-diméthylindolén-2-yle, qui peuvent être substitués par un groupe méthyle, un groupe éthyle, un groupe méthoxy, un groupe éthoxy, un atome de chlore, un groupe cyano, un groupe nitro, un groupe méthoxycarbonyle, un groupe méthylthio, un groupe diméthylamino, un groupe diéthylamino ou un groupe dipropylamino,
Y, Y⁵ et Y⁶ représentent, indépendamment des uns des autres, un atome d'azote ou un groupe C-R²¹³,
R²¹³ représente un atome d'hydrogène, un groupe alkyle en C₁ à C₄, un groupe cyano, un groupe CO-R²¹⁹, un groupe CO-O-R²¹⁷ ou un groupe CO-NR²¹⁷R²¹⁸,
R²¹⁴ et R²¹⁵ représentent, indépendamment l'un de l'autre, un atome d'hydrogène, un groupe alkyle en C₁ à C₁₆, un groupe CO-R²¹⁹ ou un groupe aryle en C₆ à C₁₀, ou
NR²¹⁴R²¹⁵ représente un groupe pyrrolidino, un groupe pipéridino ou un groupe morpholino,
R²¹⁶ représente un atome d'hydrogène, un atome d'halogène, un groupe alkyle en C₁ à C₁₆, un groupe alcoxy en C₁ à C₁₆ ou un groupe NH-CO-R²¹⁹,
R²¹⁷ et R²¹⁸ représentent, indépendamment l'un de l'autre, un atome d'hydrogène, un groupe alkyle en C₁ à C₁₆ ou un groupe aryle en C₆ à C₁₀,
R²¹⁹ représente un groupe alkyle en C₁ à C₁₆ ou un groupe aryle en C₆ à C₁₀,
R²²⁰ à R²²² représentent, indépendamment l'un de l'autre, un atome d'hydrogène, un groupe alkyle en C₁ à C₁₆ ou un groupe alcoxy en C₁ à C₁₆, où
R²²⁰ et R²²¹, s'ils sont en position ortho l'un par rapport à l'autre, peuvent former conjointement un pont -O-CH₂-O-, -O-CF₂-O-, -O-(CH₂)₂-O-, -O-(CH₂)₂-,
R²²³ représente un atome d'hydrogène ou un groupe hydroxy,
R²²⁴ représente un atome d'hydrogène, un atome d'halogène ou un groupe alkyle en C₁ à C₁₆,
R²²⁵ représente un atome d'hydrogène ou un atome d'halogène,
y représente un entier de 1 à 4,
R²²⁶ représente un groupé CHO, un groupe CN, un groupe CO-C₁-C₈-alky, un groupe CO-C₆-C₁₀₋aryle ou un groupe CH=C (CO-C₁-C₈-alkyl)-CH₂₋CO-C₁-C₈-alkyle, et
R²⁴⁸ et R²⁴⁹ représentent, indépendamment l'un de l'autre, un atome d'hydrogène, un groupe alkyle en C₁ à C₁₆ ou un groupe aryle en C₆ à C₁₀, ou représentent conjointement un pont -CH=CH-CH=CH- ou o-C₆H₄-CH=CH-CH=CH-,
où les radicaux alkyle, alcoxy, aryle et hétérocycliques peuvent éventuellement porter des radicaux supplémentaires, tels qu'un groupe phényle, un atome d'halogène, un groupe nitro, un groupe cyano, un groupe CO-NH₂, un groupe alcoxy, un groupe trialkylsilyle, un groupe trialkylsiloxy ou un groupe phényle, les radicaux alkyle et alcoxy peuvent être linéaires ou ramifiés, les radicaux alkyle peuvent être partiellement halogénés ou perhalogénés, les radicaux alkyle et alcoxy peuvent être éthoxylés ou propoxylés ou silylés, des radicaux alkyle et/ou alcoxy adjacents sur des radicaux aryle ou hétérocycliques peuvent former conjointement un pont à trois ou quatre chaînons, et les radicaux hétérocycliques peuvent être benzo-condensés.

7. Support de données optiques selon l'une ou plusieurs des revendications 1 à 4, **caractérisé en ce que** le composé absorbeur de lumière est l'un des composés suivants : 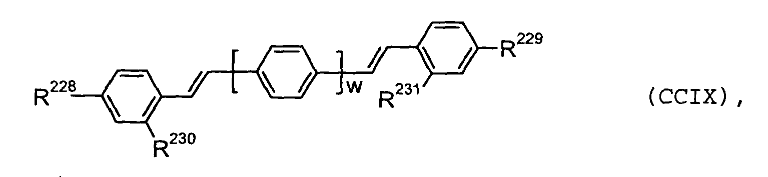 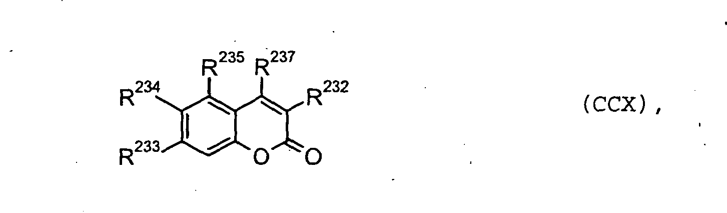 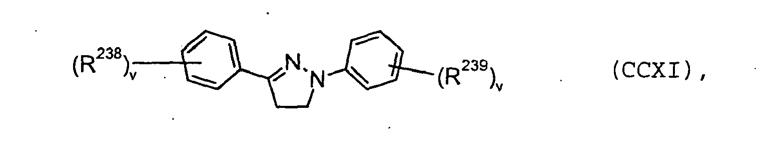 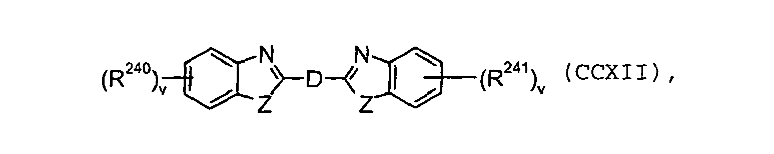 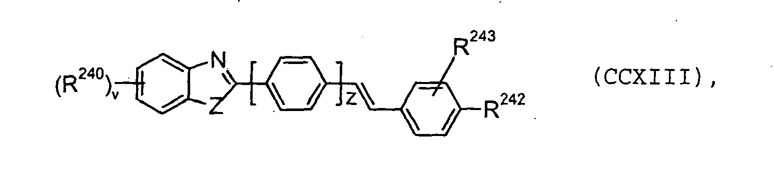 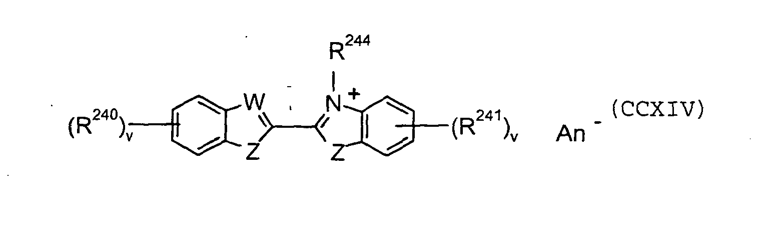 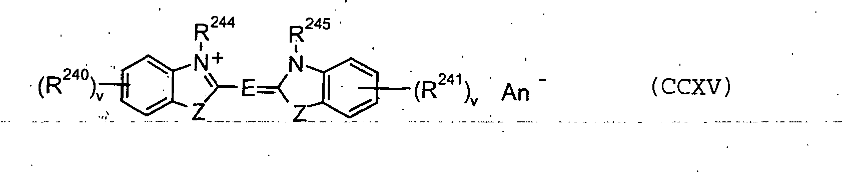 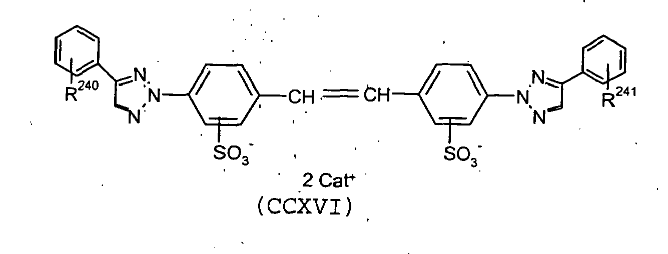 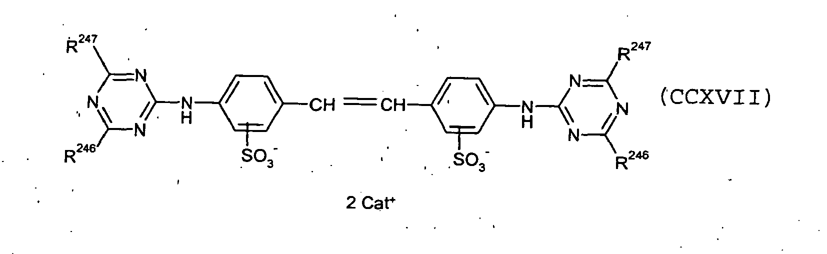 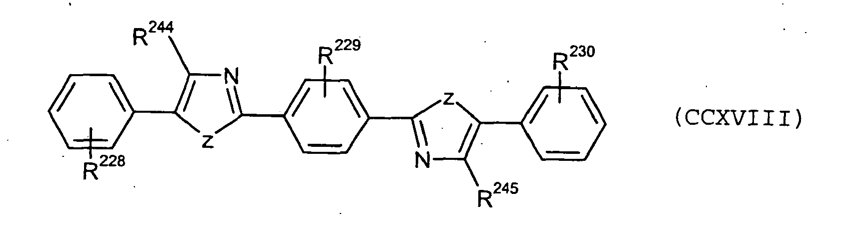 dans lesquels
R²²⁸ à R²³¹ représentent, indépendamment des uns des autres, un atome d'hydrogène, un atome d'halogène, un groupe cyano, un groupe alkyle en C₁ à C₁₆, un groupe alcoxy en C₁ à C₁₆ ou un groupe C₁-C₁₆-alcoxycarbonyle,
w vaut 1 ou 2,
R²³² représente un atome d'hydrogène, un groupe cyano, un groupe CO-O-C₁-C₄-alkyle, un groupe aryle en C₆ à C₁₀, un groupe thiophén-2-yle, un groupe pyrid-2-yle ou pyrid-4-yle, un groupe pyrazol-1-yle ou un groupe 1,2,4-triazol-1-yle ou 1,2,4-triazol-4-yle,
R²³³ représente un atome d'hydrogène, un groupe alcoxy en C₁ à C₁₆, un groupe 1,2,3-triazol-2-yle ou un groupe di-C₁-C₁₆-alkylamino,
R²³⁴ et R²³⁵ représentent un atome d'hydrogène ou représentent conjointement un pont -CH=CH-CH=CH-,
R²³⁷ représente un atome d'hydrogène, un groupe alkyle en C₁ à C₁₆ ou un groupe cyano,
R²³⁸ et R²³⁹ représentent, indépendamment l'un de l'autre, un atome d'hydrogène, un atome d'halogène, un groupe CO-C₁-C₁₆-alkyle, un groupe SO₂-C₁-C₁₆-alkyle ou un groupe SO₂-NH-C₁-C₁₆-alkylA⁺ An⁻,
A⁺ représente un groupe N(C₁-C₁₆-alkyl)₃⁺ ou un groupe pyridinio,
R²⁴⁰, R²⁴¹ et R²⁴³ représentent, indépendamment les uns des autres, un atome d'hydrogène, un atome d'halogène, un groupe alkyle en C₁ à C₁₆ ou un groupe CO-O-C₁-C₁₆-alkyle, et
R²⁴⁰ et R²⁴¹ représentent en outre un groupe -CH₂-A⁺ An⁻,
v représente un entier de 1 à 3, où pour v > 1, les radicaux peuvent présenter une signification différente,
D représente un groupe -CH=CH-, un groupe thiophène-2,5-diyle, un groupe furane-2,5-diyle ou un groupe p-phénylène,
Z représente un atome d'oxygène, un atome de soufre ou un groupe N-R²⁴⁴,
W représente un atome d'azote ou un groupe CH,
R²⁴² représente un atome d'hydrogène, un groupe cyano ou un groupe CO-O-C₁-C₁₆-alkyle,
z vaut 0 ou 1,
R²⁴⁴ et R²⁴⁵ représentent, indépendamment l' un de l'autre, un groupe alkyle en C₁ à C₁₆,
An⁻ représente un anion,
Cat⁺ représente un groupe Na⁺, un groupe Li⁺; un groupe NH₄⁺ ou un groupe N(C₁-C₁₂alkyle)₄⁺,
E représente un groupe CH, un groupe C-CN ou un atome d'azote,
R²⁴⁶ et R²⁴⁷ représentent, indépendamment l'un de l'autre, un groupe alkylamino en C₁ à C₁₆, un groupe dialkylamino en C₁ à C₁₆, un groupe anilino, un groupe morpholino, un groupe pipéridino ou un groupe pyrrolidino,
où les radicaux alkyle, alcoxy, aryle et hétérocycliques peuvent éventuellement porter des radicaux supplémentaires, tels qu'un groupe phényle, un atome d'halogène, un groupe hydroxyalkyle, un groupe nitro, un groupe cyano, un groupe CO-NH₂, un groupe alcoxy, un groupe alcoxycarbonyle, un groupe trialkylsilyle, un groupe trialkylsiloxy ou un groupe phényle, les radicaux alkyle et alcoxy peuvent être linéaires ou ramifiés, les radicaux alkyle peuvent être partiellement halogènes ou perhalogénés, les radicaux alkyle et alcoxy peuvent être éthoxylés ou propoxylés ou silylés, des radicaux alkyle et/ou alcoxy adjacents sur des radicaux aryle ou hétérocycliques peuvent former conjointement un pont à trois ou quatre chaînons, et les radicaux hétérocycliques peuvent être benzo-condensés.

8. Support de données optiques selon l'une ou plusieurs des revendications 1 à 4, **caractérisé en ce que** le composé absorbeur de lumière est l'un des composés suivants ; 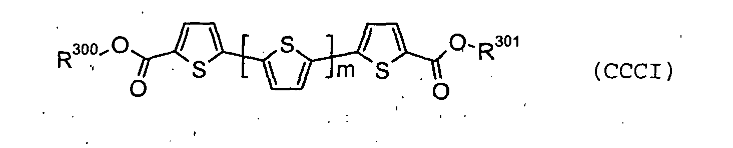 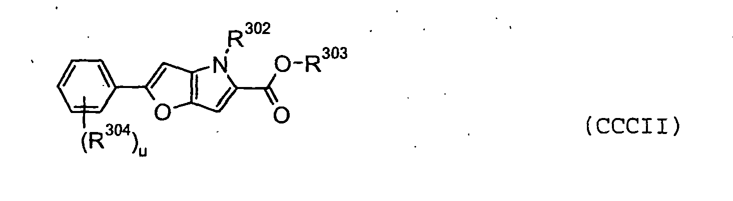 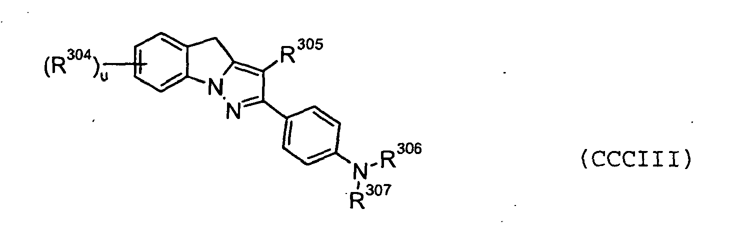 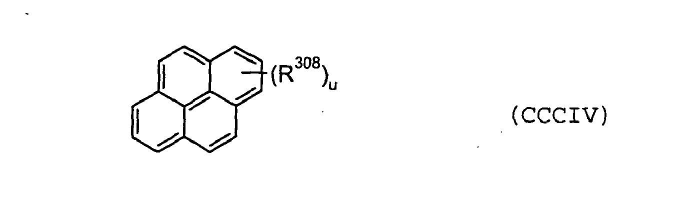 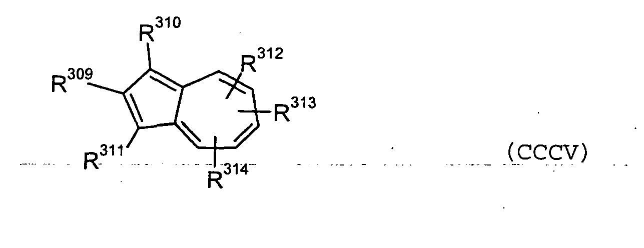 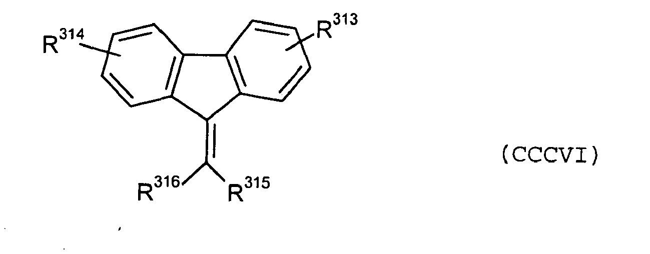 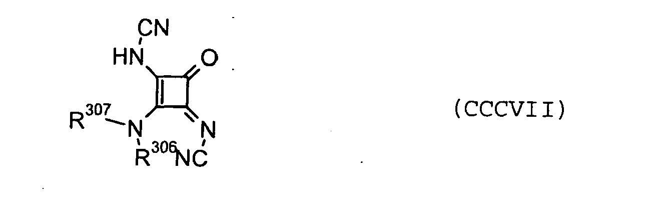 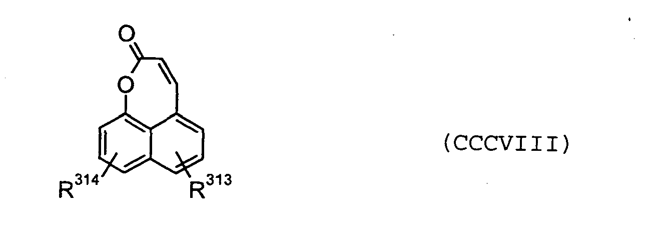 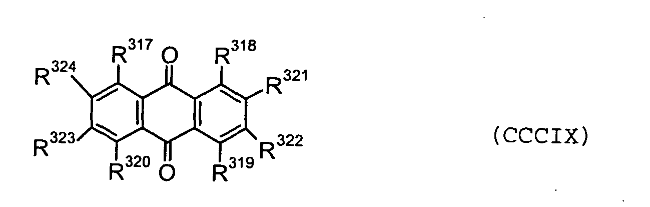 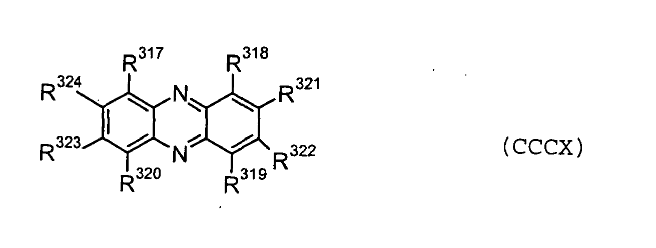 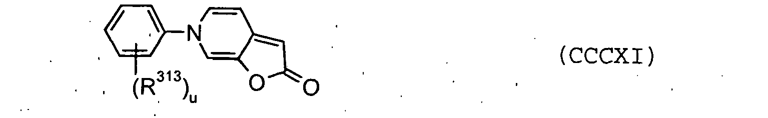 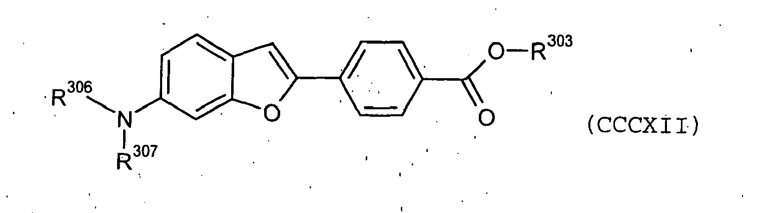 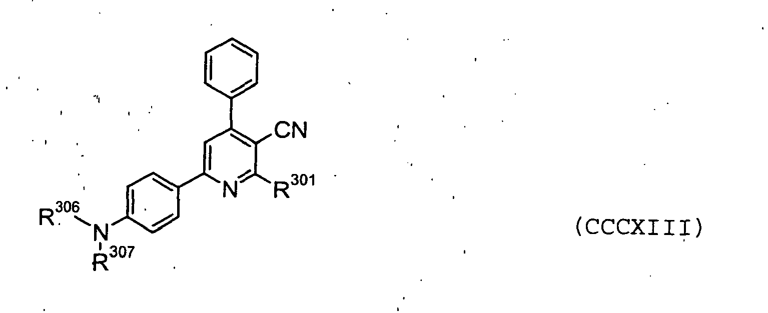 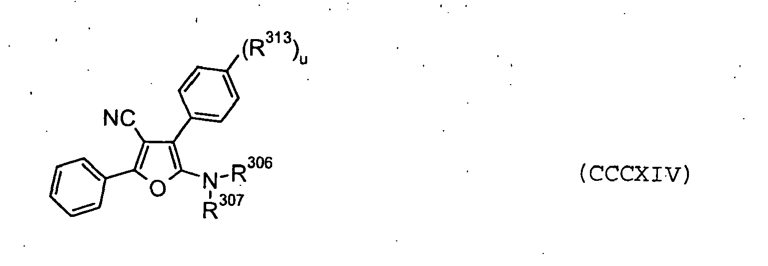 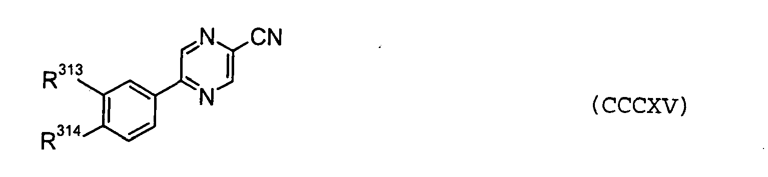 dans lequel
R³⁰⁰, R³⁰¹ et R³⁰³ représentent, indépendamment les uns des autres, un atome d'hydrogène ou un groupe alkyle en C₁ à C₁₆,
m représente un entier de 0 à 10,
u représente un entier de 1 à 3, où pour u > 1, les radicaux peuvent être différents,
R³⁰² représente un atome d' hydrogène, un groupe-C₁-C₁₆-alcoxycarbonyle ou un groupe alkyle en C₁ à C₁₆,
R³⁰⁴ représente un atome d'hydrogène, un atome d'halogène, un groupe cyano, un groupe nitro, un groupe alcoxy en C₁ à C₁₆, un groupe di-C₁₋C₈-alkylamino, un groupe C₁-C₁₆-alcoxycarbonyle ou un groupe alkyle en C₁ à C₁₆,
R³⁰⁵ représente un atome d'hydrogène, un groupe alcoxy en C₁ à C₁₆, un groupe C₁-C₁₆₋alcoxycarbonyle ou un groupe alkyle en C₁ à C₁₆,
R³⁰⁶ et R³⁰⁷ représentent, indépendamment l'un de l'autre, un atome d'hydrogène, un groupe alkyle en C₁ à C₁₆ ou un groupe aryle en C₆ à C₁₀, ou NR³⁰⁶R³⁰⁷ représente un groupe morpholino, un groupe pipéridino ou un groupe pyrrolidino,
R³⁰⁸ représente un groupe C₁-C₁₆-alcoxycarbonyle, un groupe acide carboxylique, un groupe alkyle en C₁ à C₁₆, un groupe alcoxy en C₁ à C₁₆, un groupe C₁-C₁₆-alkylaminocarbonyle ou un groupe C₁-C₁₆-dialkylaminocarbonyle,
R³⁰⁹ à R³¹⁴ représentent, indépendamment les uns des autres, un atome d'hydrogène, un groupe aryle en C₆ à C₁₀, un groupe acide carboxylique, un groupe cyano, un groupe C₁-C₁₆₋alcoxycarbonyle, un groupe alcoxy en C₁ à C₁₆ ou un groupe alkyle en C₁ à C₁₆,
R³¹⁵ et R³¹⁶ représentent, indépendamment l'un de l'autre, un groupe acide carboxylique, un groupe C₁-C₁₆-alcoxycarbonyle, un groupe alcoxy en C₁ à C₁₆ ou un groupe cyano, ou R³¹⁵ et R³¹⁶ forment , conjointement avec l'atome de carbone les reliant, un noyau carbocyclique ou hétérocyclique à 5 ou 6 chaînons,
R³¹⁷ à R³²⁴ représentent, indépendamment les uns des autres, un groupe alkyle en C₁ à C₁₆, un atome d'hydrogène, un groupe, hydroxy, un groupe acide carboxylique, un groupe C₁-C₁₆₋alcoxycarbonyle, un groupe alcoxy en C₁ à C₁₆, un groupe aryloxy en C₆ à C₁₀ ou un groupe cyano,
où
les radicaux alkyle, alcoxy, aryle et hétérocycliques peuvent éventuellement porter des radicaux supplémentaires, tels qu'un groupe phényle, un atome d'halogène, un groupe hydroxyalkyle, un groupe nitro, un groupe cyano, un groupe CO-NH₂, un groupe alcoxy, un groupe alcoxycarbonyle, un groupe trialkylsilyle, un groupe trialkylsiloxy ou un groupe phényle, les radicaux alkyle et alcoxy peuvent être linéaires ou ramifiés, les radicaux alkyle peuvent être partiellement halogénés ou perhalogénés, les radicaux alkyle et alcoxy peuvent être éthoxylés ou propoxylés ou silylés, dés radicaux alkyle et/ou alcoxy adjacents sur des radicaux aryle ou hétérocycliques peuvent former conjointement un pont à trois ou quatre chaînons, et les radicaux hétérocycliques peuvent être benzo-condensés.

9. Support de données optiques selon l'une ou plusieurs des revendications 1 à 4, **caractérisé en ce que** le composé absorbeur de lumière est l'un des composés suivants : 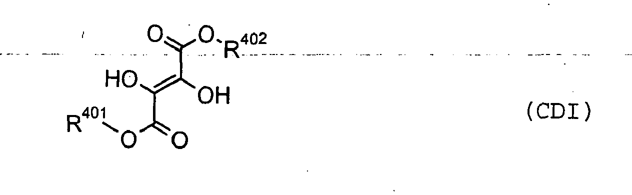 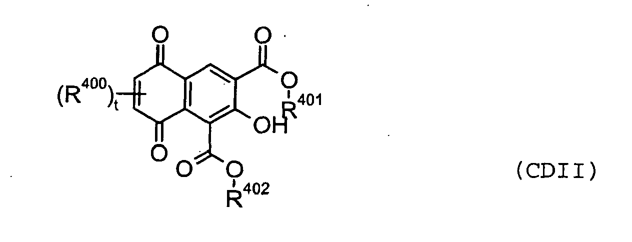 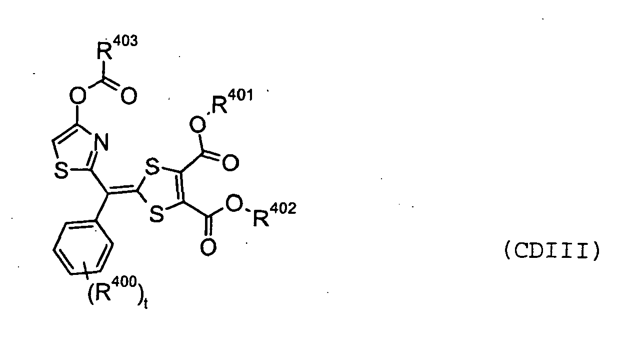 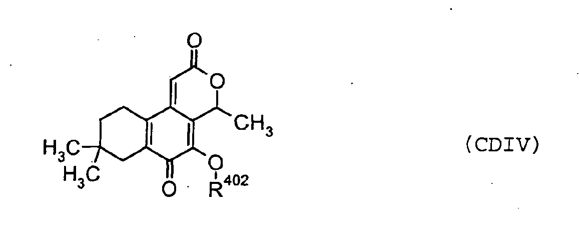 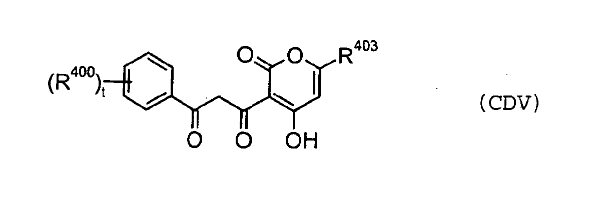 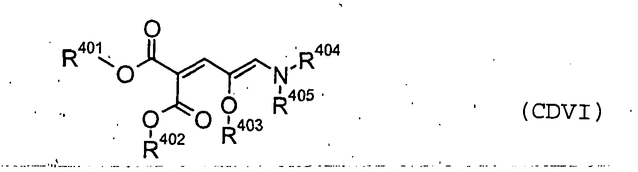 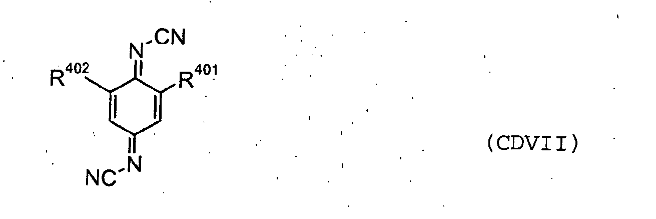 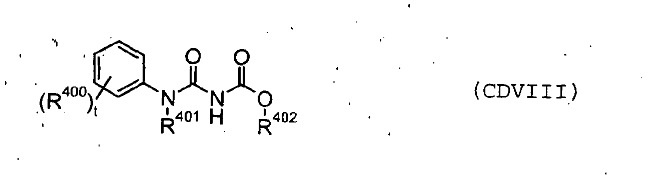 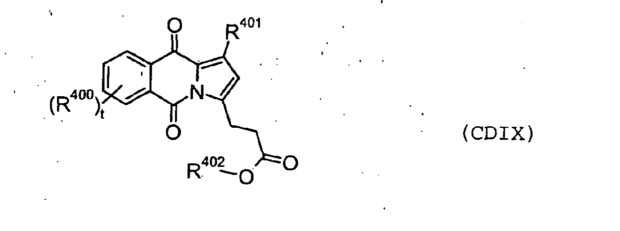 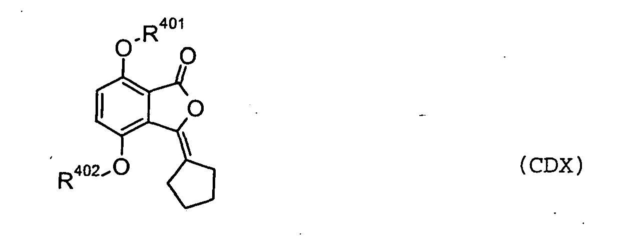 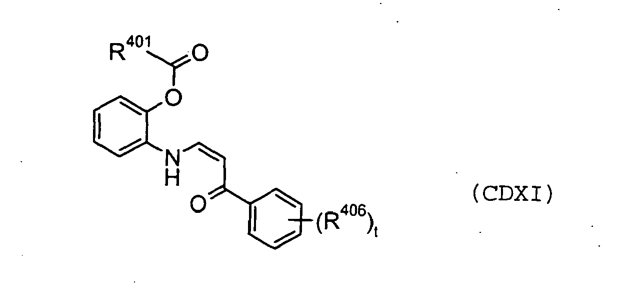 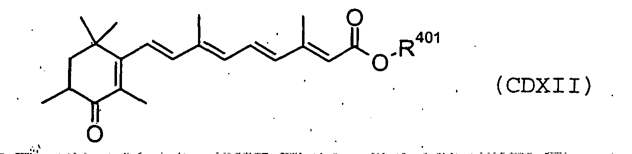 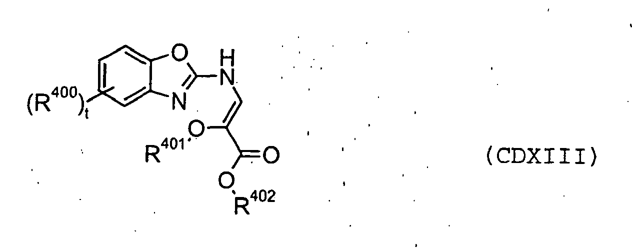 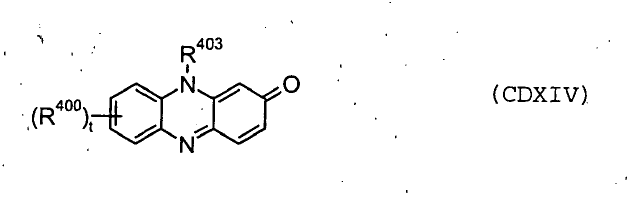 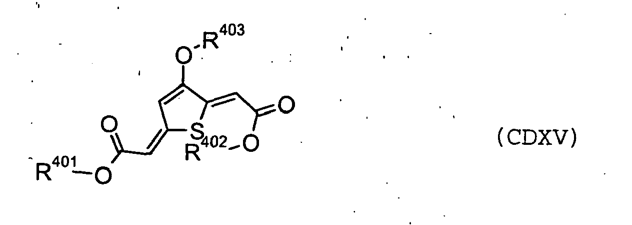 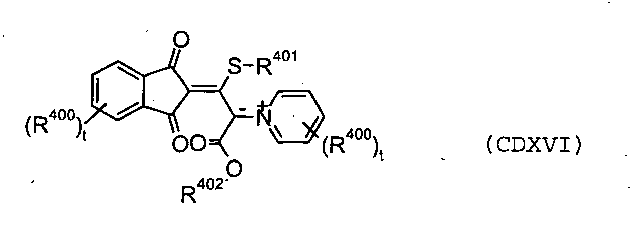 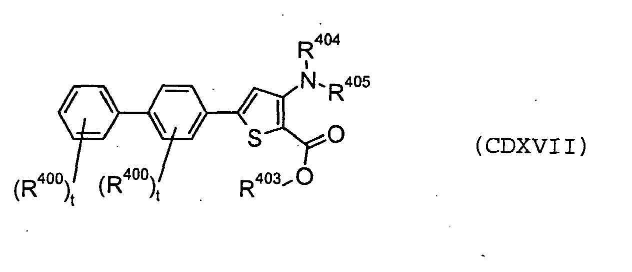 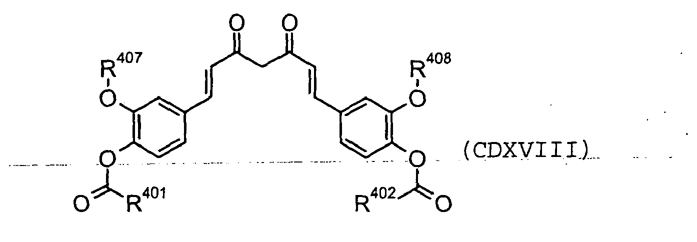 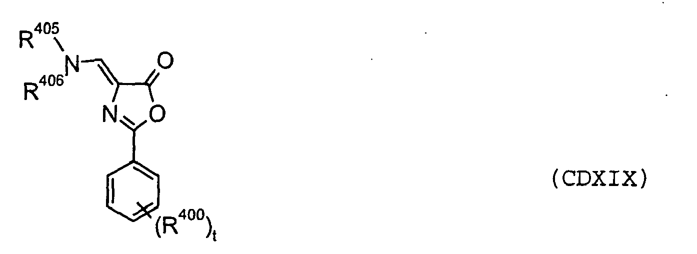 dans lesquels
R⁴⁰⁰ représente un atome d'hydrogène, un groupe alkyle en C₁ à C₁₂ ou un groupe alcoxy eh C₁ à C₁₂,
t représente un entier de 1 à 3, où pour t > 1, les radicaux peuvent être différents,
R⁴⁰¹ et R⁴⁰² représentent, indépendamment l'un de l'autre, un atome d'hydrogène ou un groupe alkyle en C₁ à C₁₆,
R⁴⁰³ représente un atome d'hydrogène, un groupe aryle en C₆ à C₁₀ ou un groupe alkyle en C₁ à C₁₆,
R⁴⁰⁴ et R⁴⁰⁵ représentent, indépendamment l'un de l'autre, un groupe alkyle en C₁ à C₁₆, un groupe aryle en C₆ à C₁₀, ou NR⁴⁰⁴R⁴⁰⁵ représente un groupe morpholino, un groupe pipéridino ou un groupe pyrrolidino,
R⁴⁰⁶ représente un atome d'hydrogène, un groupe cyano, un groupe nitro, un groupe acide carboxylique, un groupe alkyle en C₁ à C₁₆, un groupe alcoxy en C₁ à C₁₆ ou un groupe C₁-C₁₆₋alcoxycarbonyle,
R⁴⁰⁷ et R⁴⁰⁸ représentent, indépendamment l'un de l'autre, un atome d'hydrogène ou un groupe alkyle en C₁ à C₁₆,
où
les radicaux alkyle, alcoxy, aryle et hétérocycliques peuvent éventuellement porter des radicaux supplémentaires, tels qu'un groupe phényle, un atome d'halogène, un groupe hydroxyalkyle, un groupe nitro, un groupe cyano, un groupe CO-NH₂, un groupe alcoxy, un groupe alcoxycarbonyle, un groupe trialkylsilyle, un groupe trialkylsiloxy ou un groupe phényle, les radicaux alkyle et alcoxy peuvent être linéaires ou ramifiés, les radicaux alkyle peuvent être partiellement halogénés ou perhalogénés, les radicaux alkyle et alcoxy peuvent être éthoxylés ou propoxylés ou silylés, des radicaux alkyle et/ou alcoxy adjacents sur des radicaux aryle ou hétérocycliques peuvent former conjointement un pont à trois ou quatre chaînons, et les radicaux hétérocycliques peuvent être benzo-condensés.

10. Utilisation de composés absorbeurs de lumière dans la couche d'informations de supports de données optiques inscriptibles une seule fois, où les composés absorbeurs de lumière présentent un maximum d'absorption λₘₐₓ₁ de 345 à 400 nm et la longueur d'onde λ_{1/2}, à laquelle l'absorbance sur le flanc d'onde longue du maximum d'absorption de la longueur d'onde λₘₐₓ₁ est la moitié de la valeur d'absorbance à λₘₐₓ₁, et la longueur d'onde λ_{1/10}, à laquelle l'absorbance sur le flanc d'onde longue du maximum d'absorption de la longueur d'onde λₘₐₓ₁ est un dixième de la valeur d'absorbance à λₘₐₓ₁, c'est-à-dire que λ_{1/2} et λ_{1/10} sont toutes les deux conjointement dans la plage de longueurs d'onde de 380 à 430 nm, et où le composé absorbeur de lumière lui-même, ou en combinaison avec d'autres composés absorbeurs de lumière ou avec des solvants appropriés, est appliqué sur un substrat transparent par revêtement par centrifugation.

11. Procédé de production d'un support de données optiques inscriptible une seule fois selon la revendication 1, qui est **caractérisé en ce qu'**un substrat transparent, éventuellement déjà revêtu d'une couche réfléchissante, est appliqué par revêtement par centrifugation avec les composés absorbeurs de lumière, éventuellement en combinaison avec des liants et des additifs appropriés et éventuellement des solvants appropriés, et éventuellement pourvu d'une couche réfléchissante, de couches intermédiaires supplémentaires et éventuellement d'une couche protectrice ou d'un substrat supplémentaire ou d'une couche de recouvrement.
